# EUROPEAN PATENT SPECIFICATION

(11) **EP 1 731 549 B1**
(45) Date of publication and mention of the grant of the patent: **03.07.2013**
(21) Application number: 05727300.5
(22) Date of filing: 29.03.2005
(51) Int. Cl.: C08G 81/02, C08L 33/06, C08L 71/02, C08L 101/02

(54) **CURABLE COMPOSITION**
HÄRTBARE ZUSAMMENSETZUNG
COMPOSITION VULCANISABLE

(30) Priority: 30.03.2004 JP 2004100811
(43) Date of publication of application: 13.12.2006
(73) Proprietor: KANEKA CORPORATION, Osaka 530-8288 (JP)
(72) Inventor: OKAI, Jiro, KANEKA CORPORATION, Settsu-shi, Osaka 566-0072 (JP); NAKAGAWA, Yoshiki, KANEKA CORPORATION, Settsu-shi, Osaka 566-0072 (JP)
(74) Representative: Hart-Davis, Jason
(86) International application number: PCT/JP2005/005794
(87) International publication number: WO 2005/095492

(56) References cited:
- EP-A1- 1 586 605
- FR-A- 2 262 074
- JP-A- 11 116 763
- JP-A- 2001 329 065

## Description

### TECHNICAL FIELD

The present invention relates to a curable composition modified by a vinyl polymer having at least one crosslinkable functional group at a polymer terminus. More particularly, the invention relates to a curable composition excellent in mechanical properties and weather resistance after curing, which is obtained by blending a polyether polymer having at least one crosslinkable functional group.

### BACKGROUND ART

A polyether polymer having at least one crosslinkable silyl group is excellent in the flexibility, coatability, and antistaining property. However, particularly as for a polyether having a polypropyleneoxide as its main chain skeleton among these polymers, the hydrogen atom bonded to a tertiary carbon is easily oxidised when no antioxidant is used and thus the polymer has a problem of weather resistance deterioration. In order to solve this problem, a curable composition with improved weather resistance, which is obtained by blending an acrylic polymer having at least one crosslinkable silyl group with a polyether polymer having at least one crosslinkable silyl group, has been proposed (reference to Japanese Kokoku Publication Hei-2-42367 and Japanese Kokoku Publication Hei-2-44845). Further, a sealant composition obtained by blending an acrylic polymer having alkoxysilyl groups at both molecular termini and a polyether polymer having alkoxysilyl groups at both molecular termini has also been disclosed (reference to Japanese Kokoku Publication Hei-4-69667).

However, the above-mentioned vinyl polymer having at least one crosslinkable silyl group which is to be blended with the polyether polymer having at least one crosslinkable silyl group is usually produced by using a radical polymerization initiator or a chain transfer agent having a crosslinkable silyl group. Therefore, it is difficult to introduce the crosslinkable silyl group into both termini at a high ratio and the gel proportion of a cured product may be lowered in some cases. On the other hand, in order to attain a sufficient gel proportion in the cured product, a monomer having a crosslinkable silyl group is required to be used in combination and therefore, the high elongation property, which the polyether polymer essentially has, may be deteriorated in some cases. In this case, the elongation at break is lowered in particular and therefore the uses of the composition are considerably limited. Accordingly, in the case of using the composition as a sealant, some of physical properties have to be abandoned, that is, an increase in modulus, a decrease in elongation, a deterioration in residual tack, and a decrease in gel proportion have to be accepted in order to improve the weather resistance. Further, since the (meth)acrylic polymer used above is synthesized by free radical polymerization, the polymer has a wide molecular distribution and therefore, the mixture thereof with the polyether polymer may become highly viscous in some cases.

To solve the above-mentioned problems, a (meth)acrylic polymer having a functional group at a terminus has been developed. Particularly, with respect to a polymer synthesized by living radical polymerization, the molecular weight and the molecular weight distribution thereof can be optionally controlled, and a crosslinkable silyl group can be introduced quantitatively even into a polymer terminus at a high ratio while the viscosity of the polymer is maintained low. Examples of the vinyl polymer having a crosslinkable silyl group at a terminus are described in Japanese Kokai Publication Hei-11-80571, Japanese Kokai Publication Hei-11-116763, Japanese Kokai Publication 2000-38404, Japanese Kokai Publication 2000-44626, Japanese Kokai Publication 2000-72815, Japanese Kokai Publication 2000-72816, and Japanese Kokai Publication 2001-329065.

Japanese Kokai Publication Hei-11-80571 describes examples of blends of these exemplified acrylic polymers and the polyether polymer having at least one crosslinkable silyl group. As for some of these examples, however, the compatibility of the acrylic polymer and the polyether polymer may be insufficient in some cases and therefore they are not always compatible with one another. A vinyl polymer with improved compatibility disclosed in Japanese Kokai Publication 2001-329065 may still be insufficient in compatibility with the polyether polymer depending on the composition of the vinyl polymer, and it is sometimes difficult to make the vinyl polymer compatible with a high-molecular-weight polyether polymer (the number average molecular weight thereof being not lower than 10,000) in particular.

### SUMMARY OF THE INVENTION

The invention has its object to provide a curable composition having improved compatibility of a high-molecular-weight polyether polymer and a vinyl polymer and excellent in mechanical properties.

In view of the above state of the art, inventors of the invention have made intensive investigations and consequently have found that a vinyl polymer having a crosslinkable functional group is excellent in compatibility with a polyether polymer having a crosslinkable functional group, and that it is possible to obtain a cured product with excellent mechanical properties by using a curable composition containing the polyether polymer and the vinyl polymer. These findings have now led to completion of the invention.

That is, the invention provides
a curable composition
which comprises a polyether polymer having at least one crosslinkable functional group and a number average molecular weight determined by gel permeation chromatography of 10,000 or higher, and a vinyl polymer having at least one crosslinkable functional group at a polymer terminus and compatible with the polyether polymer. **As defined in appended claim 1, the curable composition in claim 1 contains no compound having a methyl ester group.**

A preferable embodiment of the invention is
the curable composition
wherein the above-mentioned polyether polymer (I) has a number average molecular weight determined by gel permeation chromatography of not lower than 15,000.

**In** the invention, the above-mentioned vinyl polymer (II) is obtained by copolymerization of (b1) an alkyl acrylate having an alkyl group of 2 or 3 carbon atoms, (b2) an alkyl acrylate having an alkyl group of 4 to 7 carbon atoms, and (b3) an alkyl acrylate having an alkyl group of 8 to 20 carbon atoms.

A preferable embodiment of the invention is
the curable composition
wherein the above-mentioned vinyl polymer (II) contains (b1) the alkyl acrylate having an alkyl group of **2 or** 3 carbon atoms in a weight ratio of not lower than 1% and not more than 30% per the total of the vinyl monomers composing the vinyl polymer, (b2) the alkyl acrylate having an alkyl group of 4 to 7 carbon atoms in a weight ratio of not lower than 45% and not more than 95% per the total of the vinyl monomers composing the vinyl polymer, and (b3) the alkyl acrylate having an alkyl group of 8 to 20 carbon atoms in a weight ratio of not lower than 4% and not more than 35% per the total of the vinyl monomers composing the vinyl polymer.

A preferable embodiment of the invention is
the curable composition
wherein the weight ratio of (b1) the alkyl acrylate having an alkyl group of **2 or** 3 carbon atoms is not lower than 1% and not more than 20% per the total of the vinyl monomers composing the vinyl polymer.

A preferable embodiment of the invention is
the curable composition
wherein the weight ratio of (b2) the alkyl acrylate having an alkyl group of 4 to 7 carbon atoms is not lower than 50% and not more than 95% per the total of the vinyl monomers composing the vinyl polymer.

A preferable embodiment of the invention is
the curable composition
wherein the weight ratio of (b2) the alkyl acrylate having an alkyl group of 4 to 7 carbon atoms is not lower than 60% and not more than 93% per the total of the vinyl monomers composing the vinyl polymer.

A preferable embodiment of the invention is
the curable composition
wherein the weight ratio of (b3) the alkyl acrylate having an alkyl group of 8 to 20 carbon atoms is not lower than 5% and not more than 30% per the total of the vinyl monomers composing the vinyl polymer.

A preferable embodiment of the invention is
the curable composition
wherein the weight ratio of (b3) the alkyl acrylate having an alkyl group of 8 to 20 carbon atoms is not lower than 6% and not more than 20% per the total of the vinyl monomers composing the vinyl polymer.

A preferable embodiment of the invention is
the curable composition
wherein (b1) the alkyl acrylate having an alkyl group of **2 or** 3 carbon atoms is ethyl acrylate. A preferable embodiment of the invention is
the curable composition
wherein (b2) the alkyl acrylate having an alkyl group of 4 to 7 carbon atoms is butyl acrylate.

A preferable embodiment of the invention is
the curable composition
wherein (b3) the alkyl acrylate having an alkyl group of 8 to 20 carbon atoms is dodecyl acrylate and/or octadecyl acrylate.

A preferable embodiment of the invention is
the curable composition
wherein the above-mentioned vinyl polymer (II) has a number average molecular weight determined by gel permeation chromatography of not lower than 5,000.

A preferable embodiment of the invention is
the curable composition
wherein the above-mentioned vinyl polymer (II) has a number average molecular weight determined by gel permeation chromatography of not lower than 10,000.

A preferable embodiment of the invention is
the curable composition
wherein the above-mentioned vinyl polymer (II) has a number average molecular weight determined by gel permeation chromatography of not lower than 20,000.

A preferable embodiment of the invention is
the curable composition
wherein the above-mentioned vinyl polymer (II) has a ratio of the weight average molecular weight to the number average molecular weight determined by gel permeation chromatography of lower than 1.8.

A preferable embodiment of the invention is
the curable composition
wherein the above-mentioned polyether polymer (I) essentially has polypropylene oxide as a main chain.

A preferable embodiment of the invention is
the curable composition
wherein the above-mentioned polyether polymer (I) has a crosslinkable silyl group as the crosslinkable functional group.

A preferable embodiment of the invention is
the curable composition
wherein the above-mentioned vinyl polymer (II) is produced by atom transfer radical polymerization.

A preferable embodiment of the invention is
the curable composition
wherein the above-mentioned vinyl polymer (II) has a crosslinkable silyl group as the crosslinkable functional group at a terminus.

A preferable embodiment of the invention is
the curable composition
wherein the above-mentioned vinyl polymer (II) has an alkenyl group as the crosslinkable functional group at a terminus.

A preferable embodiment of the invention is
the curable composition
which further contains a hydrosilyl group-containing compound.

A formed body of the invention is obtained by curing the above-mentioned curable composition.

### (Effects of the invention)

The invention relates a curable composition comprising a polyether polymer (I) having at least one crosslinkable functional group and a number average molecular weight of not lower than 10,000 and a vinyl polymer (II) having at least one crosslinkable functional group and compatible with the polyether polymer, and the cured product obtained therefrom is excellent in elongation **and** weather resistance.

### DETAILED DESCRIPTION OF THE INVENTION

### <<Polyether polymer (I) >>

### «Polyether polymer having a crosslinkable functional group»

The curable composition of the invention may further contain a polyether polymer (III).

### Main chain

The main chain of the polyether polymer is not particularly limited and polyethylene oxide, polypropylene oxide, polybutylene oxide, and polyphenylene oxide can be exemplified. Among them, substantially polyoxyalkylene is preferable and polypropylene oxide is more preferable and other than propylene oxide, ethylene oxide, butylene oxide **and** phenylene oxide may be contained. Further, the polyether polymer may or may not contain an urethane bond in the main chain. Herein, the phrase, "the main chain is substantially polypropylene oxide" means that propylene oxide unit exists at a ratio of 50% or higher, preferably 70% or higher, and more preferably 90% or higher, in the repeating units composing the main chain. If the viscosity is lower, the handling property becomes better, and therefore the polypropylene oxide polymer is more preferable to have a molecular weight distribution (Mw/Mn) of 1.5 or lower.

### Crosslinkable functional group

The crosslinkable functional group in the polyether polymer is not particularly limited, and preferable examples are a crosslinkable silyl group, an alkenyl group, a hydroxyl group, an amino group, a polymerizable group having a carbon-carbon double bond, and an epoxy group. Particularly, the crosslinkable silyl group is preferable.

The number of the crosslinkable functional group of the polyether polymer is preferably at least 1, and it may be 1 or lower. In terms of curability of the composition, the polyether polymer preferably contains more than one functional groups, more preferably 1.1 to 4.0 and further preferably 1.5 to 2.5 functional groups on average. The crosslinkable functional group is preferable to exist at a terminus of the polyether polymer in terms of rubber elasticity of the cured product. The functional group is more preferable to exist at both termini of the polymer.

### Molecular weight

The polyether polymer having at least one crosslinkable functional group to be used has a number average molecular weight determined by gel permeation chromatography of not lower than 10,000. Particularly, it is preferable to use the polyether polymer having a number average molecular weight of 10,000 to 50,000. In the case where the number average molecular weight of the polyether polymer is lower than 10, 000, the cured product becomes hard and has low elongation. On the other hand, in the case where the number average molecular weight exceeds 50, 000, although the flexibility and elongation of the cured product are satisfactory, the adhesiveness of the polymer itself is considerably lowered and the practical applicability becomes low. However, even if the molecular weight is low, in the case where the number of the crosslinkable functional group is low, the flexibility and elongation are sometimes improved and even if the molecular weight is high, in the case where the number of the crosslinkable functional group is high, the adhesiveness is sometimes increased. The number average molecular weight is particularly preferably 15,000 to 25,000 in terms of viscosity.

### <Polyether polymer having a crosslinkable silyl group>

Hereinafter, the polyether polymer having a crosslinkable silyl group will be described.

### Main chain

The main chain structure of the polyether polymer having a crosslinkable silyl group is **the** same as described above. The main chain may be linear or branched or mixture of both. Among them, particularly preferable examples of the main chain are polyoxypropylene diol, polyoxypropylene triol, and their mixtures. Further, other monomer units etc. may be contained, and the monomer units represented by the above-mentioned formulae preferably exist at a ratio of 50% by weight or more, preferably 80% by weight or more, in the polymer.

The main chain may or may not contain an urethane bond or an urea bond.

The molecular structure of the polyether polymer differs in accordance with the uses and the desired properties thereof and those described in Japanese Kokai Publication Sho-63-112642 can be used, for example. These polyoxyalkylenes may be obtained by common polymerization methods (anion polymerization using caustic alkali), methods using cesium metal catalysts, porphyrin/aluminum complex catalysts (such methods are exemplified in Japanese Kokai Publication Sho-61-197631, Sho-61-215622, Sho-61-215623 **and** Sho-61-218632), composite metal cyanide complex catalysts (such methods are exemplified in Japanese Kokoku Publication Sho-46-272507 **and** Sho-59-15336), and catalysts of polyphosphazene salts (such methods are exemplified in Japanese Kokai Publication Hei-10-273512), and the like methods.

The methods using porphyrin/aluminum complex catalysts, composite metal cyanide complex catalysts, or catalysts of polyphosphazene salts are suitable for obtaining oxyalkylene, polymers with as narrow molecular weight distribution (Mw/Mn) as 1.6 or lower, preferably 1.5 or lower, and in the case where the molecular weight distribution is narrow, it is advantageous for keeping low modulus and high elongation of the cured product and keeping low viscosity for the composition.

### Crosslinkable silyl group

Similarly to the vinyl polymer, groups represented by the general formula (1) to be described below may be used as the crosslinkable silyl group and groups represented by the general formula (6) to be described below are preferable. The description of the groups represented by the general formulae (1) and (6) is also applied to the polyether polymer having the crosslinkable silyl group. The crosslinkable silyl group in the polyether polymer may have the same structure as or a different structure from that of the crosslinkable silyl group in the vinyl polymer having the crosslinkable silyl group.

Since the bonding part of the crosslinkable silyl group and the polyether part has resistance to hydrolysis, the bonding part is preferably an alkylene group such as trimethylene and tetramethylene so as to have at least 3 carbon atoms existing between the silicon atom of the silyl group and the ether oxygen atom of the polyether parts.

### Number and position of crosslinkable silyl group

The number of the crosslinkable silyl group is preferably at least 1.2 or higher from the curability of the composition viewpoint, more preferably 1.2 or higher and 4.0 or lower, and further preferably 1.5 to 2.5. In terms of the rubber elasticity of the cured product, the crosslinkable silyl group in the polyether polymer is preferably at a terminus of the molecular chain and more preferably at both termini of the polymer.

Even a polyether polymer having 1.2 or less crosslinkable silyl groups on average may be used. In this case, the cured product with high elongation at break, low bleeding property, low surface staining property, and excellent adhesiveness to a coating material can be obtained. Further, if the molecular weight of the polymer is set to be low, the viscosity of the composition may be lowered. The lower limit of the number of the crosslinkable silyl group is preferably at least 0.1 or higher, more preferably 0.3 or higher, and further preferably 0.5 or higher. The crosslinkable silyl group is preferably at a terminus of a molecular chain. The crosslinkable silyl group of the polyether polymer preferably exists at only one terminus but not at the other terminus, however it is not particularly limited as long as the number of the crosslinkable silyl group is 1.2 or lower on average. In the case where the viscosity is lowered by using the polyether polymer having less than 1.2 crosslinkable silyl groups on average, the molecular weight is preferably lower than 10,000 and more preferably lower than 5,000.

### Crosslinkable silyl group introduction method

The crosslinkable silyl group may be introduced by a conventionally known method. That is, the following methods can be exemplified. For example, in the case of oxyalkylene polymers obtained by using a composite metal cyanide complex catalyst, a method is described in Japanese Kokai Publication Hei-3-72527 and in the case of oxyalkylene polymers obtained by using a polyphosphazene salt and active hydrogen as catalysts, a method is described in Japanese Kokai Publication Hei-11-60723.
(1) An unsaturated group-containing oxyalkylene polymer is obtained by reacting an oxyalkylene polymer having a functional group such as hydroxyl group at a terminus with an organic compound having an active group and an unsaturated group reactive on the functional group, or copolymerizing the oxyalkylene polymer with an unsaturated group-containing epoxy compound. Next, the obtained reaction product is reacted with a hydrosilane containing a crosslinkable silyl group to carry out hydrosilylation.
(2) The unsaturated group-containing oxyalkylene polymer obtained in the same manner as described in (1) is reacted with a compound having a mercapto group and the crosslinkable silyl group.
(3) An oxyalkylene polymer having a functional group (hereinafter, referred to as Y functional group) such as a hydroxyl group, an epoxy group, and an isocyanato group at a terminus is reacted with a compound having a functional group (hereinafter, referred to as Y' functional group) reactive on the Y functional group and the crosslinkable silyl group.

Examples of a silicon compound having the Y' functional group may be amino group-containing silanes such as γ-(2-aminoethyl)aminopropyltrimethoxysilane, γ-(2-aminoethyl)aminopropylmethyldimethoxysilane, γ-aminopropyltriethoxysilane, 3-amino-2-methylpropyltrimethoxysilane, N-ethyl-3-amino-2-methylpropyltrimethoxysilane, 4-amino-3-methylpropyltrimethoxysialne, 4-amino-3-methylpropylmethyldimethoxysialne, N-phenl-3-aminopropyltrimethoxylsilane, and partially Michael addition reaction products of various kinds of amino group-containing silane with maleic acid esters and acrylate compounds; mercapto group-containing silanes such as γ-mercaptopropyltrimethoxysilane and γ-mercaptopropylmethyldimethoxysilane; epoxy silanes such as γ-glycidoxypropyltrimethoxysilane and β-(3,4-epoxycyclohexyl)ethyltrimethoxysilane; vinyl unsaturated group-containing silanes such as vinyltriethoxysilane, γ-methacryloyloxypropyltrimethoxysilane, and γ-acryloyloxypropylmethyldimethoxysilane; chlorine atom-containing silanes such as γ-chloropropyltrimethoxysilane; isocyanato group-containing silanes such as γ-isocyanatopropyltriethoxysilane, γ-isocyanatopropylmethyldimethoxysilane, and γ-isocyanatopropyltrimethoxysilane; hydrosilanes such as methyldimethoxysilane, trimethoxysilane, methyldiethoxysilane and triethoxysilane; without any purpose of particular restriction.

In the case of producing the polymer having 1.2 or less crosslinkable silyl groups on average, at the time of introducing the crosslinkable silyl group, the following methods may be used; a method of obtaining the polyether polymer having 1.2 or less crosslinkable silyl groups on average by reacting a polyether polymer having only one functional group in the molecule and a compound containing crosslinkable silyl group(s) in an equivalent or less amount to the functional group; and a method of obtaining the polyether polymer having 1.2 or less crosslinkable silyl groups on average by reacting a polyether polymer having one or more functional groups in the molecule on average and a compound containing crosslinkable silyl group at a less ratio to the functional groups.

### Use amount of polyether polymer having a crosslinkable functional group

The use amount of the polyether polymer (I) having a crosslinkable functional group may be optional, and it is preferably (100/1) to (1/100) by weight, more preferably (100/5) to (5/100) by weight, and further preferably (100/10) to (10/100) by weight, per the vinyl polymer (II) having at least one crosslinkable functional group. When the ratio of the vinyl polymer (II) is low, excellent weather resistance, which is one of the excellent effects of the invention, may be hardly exhibited in some cases.

### <<Vinyl polymer (II)>>

### <Main chain>

The present inventors have so far made a large number of inventions relating to various crosslinking functional group-terminated vinyl polymers, methods of producing the same, curable compositions comprising the same and uses thereof (see, for example, Japanese Kokai Publication Hei-11-080249, Japanese Kokai Publication Hei-11-080250, Japanese Kokai Publication Hei-11-005815, Japanese Kokai Publication Hei-11-116617, Japanese Kokai Publication Hei-11-116606, Japanese Kokai Publication Hei-11-080571, Japanese Kokai Publication Hei-11-080570, Japanese Kokai Publication Hei-11-130931, Japanese Kokai Publication Hei-11-100433, Japanese Kokai Publication Hei-11-116763, Japanese Kokai Publication Hei-09-272714 and Japanese Kokai Publication Hei-09-272715). A vinyl polymer (II) according to the present invention is not particularly limited, and any of various polymers disclosed in the above-mentioned inventions can be suitably used.

A vinyl monomer which constitutes the main chain of the vinyl polymer of the present invention is not particularly limited, and any of various monomers can be used. Examples of the vinyl monomer include (meth) acrylic acid monomers, such as (meth)acrylic acid, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, isononyl (meth)acrylate, decyl (meth)acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, ethylene oxide adduct of (meth)acrylic acid, trifluoromethylmethyl (meth)acrylate, 2-trifluoromethylethyl (meth)acrylate, perfluoroethylmethyl (meth)acrylate, 2-perfluoroethylethyl (meth)acrylate, perfluoroethyl-perfluorobutylmethyl (meth)acrylate, 2-perfluoroethyl-2-perfluorobutylethyl (meth)acrylate, perfluoroethyl (meth)acrylate, perfluoromethyl (meth)acrylate, diperfluoromethylmethyl (meth)acrylate, 2,2-diperfluoromethylethyl (meth)acrylate, perfluoromethyl-perfluoroethylmethyl (meth)acrylate, 2-perfluoromethyl-2-perfluoroethylethyl (meth)acrylate, 2-perfluorohexylmethyl (meth)acrylate, 2-perfluorohexylethyl (meth)acrylate, 2-perfluorodecylmethyl (meth)acrylate, 2-perfluorodecylethyl (meth)acrylate, 2-perfluorohexadecylmethyl (meth)acrylate, and 2-perfluorohexadecylethyl (meth)acrylate; aromatic vinyl monomers, such as styrene, vinyltoluene, α-methylstyrene, chlorostyrene, and styrenesulfonic acid and its salts; fluorine-containing vinyl monomers, such as perfluoroethylene, perfluoropropylene, and vinylidene fluoride; silicon-containing vinyl monomers, such as vinyltrimethoxysilane and vinyltriethoxysilane; maleic anhydride, maleic acid, and monoalkyl esters and dialkyl esters of maleic acid; fumaric acid and monoalkyl and dialkyl esters of fumaric acid; maleimide monomers, such as, maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; acrylonitrile monomers, such as acrylonitrile and methacrylonitrile; amido-containing vinyl monomers, such as acrylamide and methacrylamide; vinyl esters, such as vinyl acetate, vinyl propionate, vinyl pivalate, vinyl benzoate, and vinyl cinnamate; alkenes, such as ethylene and propylene; conjugated dienes, such as butadiene and isoprene; and vinyl chloride, vinylidene chloride, allyl chloride, and allyl alcohol. These compounds may be used alone, or at least two may be copolymerized.

With respect to the vinyl polymer in the invention, an acrylic polymer obtained by copolymerization of (b1) an alkyl acrylate having an alkyl group of **2 or** 3 carbon atoms, (b2) an alkyl acrylate having an alkyl group of 4 to 7 carbon atoms, and (b3) an alkyl acrylate having an alkyl group of 8 to 20 carbon atoms is used in terms of the compatibility with the polyether polymer. Preferably, the weight ratio of (b1) an alkyl acrylate having an alkyl group of **2 or** 3 carbon atoms is not lower than 1% and not more than 30% per the total of the vinyl monomers composing the vinyl polymer, the weight ratio of (b2) an alkyl acrylate having an alkyl group of 4 to 7 carbon atoms is not lower than 45% and not more than 95% per the total of the vinyl monomers composing the vinyl polymer, and the weight ratio of (b3) an alkyl acrylate having an alkyl group of 8 to 20 carbon atoms is not lower than 4% and not more than 35% per the total of the vinyl monomers composing the vinyl polymer.

More preferably, the weight ratio of (b1) the alkyl acrylate having an alkyl group of **2 or** 3 carbon atoms is not lower than 1% and not more than 20% per the total of the vinyl monomers composing the vinyl polymer.

The weight ratio of (b2) the alkyl acrylate having an alkyl group of 4 to 7 carbon atoms is more preferably not lower than 50% and not more than 95% and most preferably not lower than 60% and not more than 93% per the total of the vinyl monomers composing the vinyl polymer.

The weight ratio of (b3) the alkyl acrylate having an alkyl group of 8 to 20 carbon atoms is more preferably not lower than 5% and not more than 35% and most preferably not lower than 6% and not more than 20% per the total of the vinyl monomers composing the vinyl polymer.

If the amount of (b3) the alkyl acrylate having an alkyl group of 8 to 20 carbon atoms is low, the compatibility with the polyether polymer may hardly be exhibited. On the other hand, if this amount is high, the compatibility with the polyether polymer may hardly be exhibited in some cases.

The amount of (b1) the alkyl acrylate having an alkyl group of **2 or** 3 carbon atoms can be determined in accordance with the cohesive force required for a cured product obtained therefrom. However, if it is too high, the viscosity of the polymer may increase to worsen the workability in some cases.

The vinyl polymer wherein (b1) the alkyl acrylate having an alkyl group of **2 or** 3 carbon atoms is methyl acrylate and/or ethyl acrylate, (b2) the alkyl acrylate having an alkyl group of 4 to 7 carbon atoms is butyl acrylate, and (b3) the alkyl acrylate having an alkyl group of 8 to 20 carbon atoms is dodecyl acrylate and/or octadecyl acrylate can be preferably used since the compatibility with the polyether polymer having a number average molecular weight of not lower than 10, 000 is excellent.

In the above description, "compatibility" means the state that no boundary face is observed with eyes after two or more polymers are sufficiently mixed and kept still at a room temperature for one week.

The curable composition comprising the vinyl polymer having a functional silyl group may sometimes have a retarded curability because of storage, that is, the composition may be sometimes deteriorated in the storage stability. For example, copolymerization of methyl acrylate sometimes makes it possible to suppress the deterioration. The copolymerization may be also effective in the case of improving the strength of the cured product. In this case, similarly the ratio of the monomers to be copolymerized may be selected depending on the molecular weights and/or block copolymerization may be carried out.

The molecular weight distribution [ratio (Mw/Mn) of the weight average molecular weight (Mw) to the number average molecular weight (Mn) determined by gel permeation chromatography] of the vinyl polymer of the present invention is not particularly limited. The molecular weight distribution is preferably less than 1.8 and particularly preferably 1.3 or less from the workability viewpoint. In GPC measurement in the present invention, a number average molecular weight and the like may be generally determined in terms of polystyrene using chloroform as a mobile phase and a polystyrene gel column for measurement.

The number average molecular weight of the vinyl polymer of the present invention is not particularly restricted. From the workability and physical properties viewpoints, the lower limit thereof is preferably 5, 000, more preferably 10, 000 and further more preferably 20,000 and the upper limit thereof is preferably 1,000,000 and more preferably 50,000 determined by gel permeation chromatography.

### <Method of main chain synthesis>

In accordance with the invention, the method of synthesizing the vinyl polymer is not limited, and the free radical polymerization technique may be used. Further, the controlled radical polymerization technique is preferred, the living radical polymerization technique is more preferred, and the atom transfer radical polymerization technique is particularly preferred. These techniques are described below.

### Controlled radical polymerization

Radical polymerization processes are classified into a general radical polymerization process in which a monomer having a specified functional group and a vinyl monomer are simply copolymerized using an azo compound, a peroxide, as a polymerization initiator, and a controlled radial polymerization process in which a specified functional group can be introduced at a controlled position such as an end .

The general radical polymerization process is a simple process, and a monomer having a specified functional group can be introduced into a polymer only stochastically. When a polymer with high functionality is desired, therefore, a considerable amount of a monomer must be used. Conversely, use of a small amount of a monomer has the problem of increasing the ratio of a polymer in which the specified functional group is not introduced. There is also the problem of producing only a polymer with a wide molecular weight distribution and high viscosity due to free radical polymerization.

The controlled radical polymerization process is further classified into a chain transfer agent process in which polymerization is performed using a chain transfer agent having a specified functional group to produce a vinyl polymer having the functional group at an end, and a living radical polymerization process in which polymerization propagation termini propagate without causing termination reaction to produce a polymer having a molecular weight substantially equal to the design.

The chain transfer agent process is capable of producing a polymer with high functionality, but a considerable amount of a chain transfer agent having a specified functional group must be used relative to the initiator, thereby causing an economical problem of the cost including the treatment cost. Like the general radical polymerization process, the chain transfer agent process also has the problem of producing only a polymer with a wide molecular weight distribution and high viscosity because it is free radical polymerization.

It is true that the living radical polymer process belongs to a radical polymerization process which has a high polymerization rate and is difficult to control because termination reaction easily occurs due to radical coupling. However, unlike in the above-mentioned processes, in the living radical polymerization process, termination reaction little occurs, a polymer having a narrow molecular weight distribution (Mw/Mn of about 1.1 to 1.5) can be produced, and the molecular weight can be freely controlled by changing the charge ratio of the monomer to the initiator.

Therefore, the living radical polymerization process is capable of producing a polymer with a narrow molecular weight distribution and low viscosity and introducing a monomer having a specified functional group into a substantially desired position. Thus, this process is more preferred as a process for producing the vinyl polymer having the specified functional group.

In a narrow sense, "living polymerization" means polymerization in which molecular chains propagate while maintaining activity at the termini. However, the living polymerization generally includes pseudo-living polymerization in which molecular chains propagate in equilibrium between deactivated and activated termini. The definition in the present invention includes the latter.

**R**ecent**ly**, the living radical polymerization has been actively studied by various groups. Examples of studies include a process using a cobalt porphyrin complex, as shown in Journal of American Chemical Society (J. Am. Chem. Soc.), 1994, vol. 116, p. 7943, a process using a radical capping agent such as a nitroxide compound, as shown in Macromolecules, 1994, vol. 27, p. 7228, and an atom transfer radical polymerization (ATRP) process using an organic halide as an initiator and a transition metal complex as a catalyst.

Among these living radical polymerization processes, the atom transfer radical polymerization process in which a vinyl monomer is polymerized using an organic halide or a halogenated sulfonyl compound as an initiator and a transition metal complex as a catalyst has the above-mentioned characteristics of the living radical polymerization and also has the characteristic that a terminus has a halogen, which is relatively useful for functional group conversion reaction, and the initiator and catalyst have high degrees of design freedom. Therefore, the atom transfer radical polymerization process is more preferred as a process for producing a vinyl polymer having a specified functional group. Examples of the atom transfer radical polymerization process include the processes disclosed in Matyjaszewski, et al., Journal of American Chemical Society (J. Am. Chem. Soc.), 1995, vol. 117, p. 5614, Macromolecules, 1995, vol. 28, p. 7901, Science, 1996, vol. 272, p. 866, WO96/30421, WO97/18247, WO98/01480 and WO98/40415, Sawamoto, et al., Macromolecules, 1995, vol. 28, p. 1721, and Japanese Kokai Publication Hei-09-208616 and Japanese Kokai Publication Hei-08-41117.

In the present invention, any one of these living radical polymerization processes may be used without limitation, but the atom transfer radical polymerization process is preferred.

Hereinafter, the living radical polymerization will be described in detail. First, the controlled radical polymerization process using a chain transfer agent, which may be used in the production of the vinyl polymers mentioned below, will be described. The radical polymerization process using the chain transfer agent (telomer) is not particularly limited, but examples of a process for producing a vinyl polymer having a terminal structure suitable for the present invention include the following two processes:

A process for producing a halogen-terminated polymer using a halogenated hydrocarbon as the chain transfer agent as disclosed in Japanese Kokai Publication Hei-04-132706, and a method for producing a hydroxyl group-terminated polymer using a hydroxyl group-containing mercaptane or a hydroxyl group-containing polysulfide or the like as the chain transfer agent as disclosed in Japanese Kokai Publication Sho-61-271306, Japanese Patent Publication No. 2594402, and Japanese Kokai Publication Sho-54-47782.

Next, the living radical polymerization will be described.

First, the process using a nitroxide compound as a radical capping agent will be described. This polymerization process generally uses stable nitroxy free radical (=N-O ·) as a radical capping agent. Preferred examples of such a compound include, but not limited to, nitroxy free radicals produced from cyclic hydroxyamines, such as 2,2,6,6-substituted-1-piperidinyloxy radical and 2,2,5,5-substituted-1-pyrroridinyloxy radical. As a substituent, an alkyl group having 4 or less carbon atoms, such as methyl or ethyl, is suitable. Specific examples of a nitroxy free radical compound include, but not limited to, 2,2,6,6-tetramethyl-1-piperidinyloxy radical (TEMPO), 2,2,6,6-tetraethyl-1-piperidinyloxy radical, 2,2,6,6-tetramethyl-4-oxo-1-piperidinyloxy radical, 2,2,5,5-tetramethyl-1-pyrrolidinyloxy radical, 1,1,3,3-tetramethyl-2-isoindolinyloxy radical, and N, N-di-tert-butylaminoxy radical. Instead of the nitroxy free radical, stable free radical such as galvinoxyl free radical may be used.

The radical capping agent is used in combination with the radical generator. The reaction product of the radical capping agent and the radical generator possibly servers as a polymerization initiator to promote polymerization of an addition-polymerizable monomer. The ratio between both agents used is not particularly limited, but the amount of the radical generator is preferably 0.1 to 10 moles per mole of the radical generator.

As a radical generator, any one of various compounds can be used, but a peroxide capable of generating radical under a polymerization temperature is preferred. Examples of the peroxide include, but not limited to, diacyl peroxides, such as benzoyl peroxide and lauroyl peroxide; dialkyl peroxides, such as dicumyl peroxide and di-tert-butyl peroxide; peroxycarbonates, such as diisopropyl peroxydicarbonate and bis(4-tert-butylcyclohexyl)peroxydicarbonate; and alkyl peresters, such as tert-butyl peroxyoctoate and tert-butyl peroxybenzoate. In particular, benzoyl peroxide is preferred. Instead of the peroxide, a radical generator such as a radical generating azo compound, e.g., azobisisobutyronitrile, may be used.

As reported in Macromolecules, 1995, 28, 2993, the alkoxyamine compound shown below may be used as the initiator instead of a combination of the radical capping agent and the radical generator.

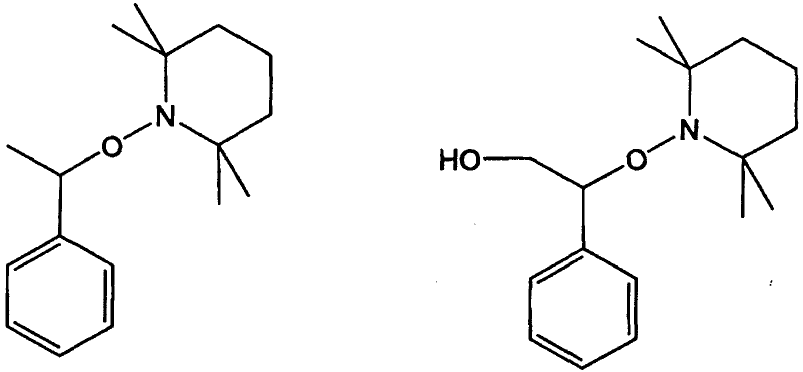

When the alkoxyamine compound is used as the initiator, the use of a compound having a functional group such as a hydroxyl group as shown in the above figure produces a polymer having the functional group at an end. When this compound is used in the method of the present invention, a polymer having the functional group at an end is produced.

The conditions of polymerization using the nitroxide compound as the radical capping agent, such as the monomer, the solvent **and** the polymerization temperature, are not limited. However, these conditions may be the same as those in atom transfer radical polymerization which will be described below.

### Atom transfer radical polymerization

Next, the atom transfer radical polymerization suitable as the living radical polymerization of the present invention will be described.

The atom transfer radical polymerization uses, as the initiator, an organic halide, particularly an organic halide having a highly reactive carbon-halogen bond (e.g., a carbonyl compound having a halogen at an α-position, or a compound having a halogen at a benzyl position), or a halogenated sulfonyl compound.

Specific examples of such a compound include the following:
C₆H₅-CH₂X, C₆H₅-C(H)(X)CH₃, and C₆H₅-C(X)(CH₃)₂
(wherein C₆H₅ is a phenyl group, X is chlorine, bromine, or iodine);
R³-C(H) (X)-CO₂R⁴, R³-C(CH₃)(X)-CO₂R⁴, R³-C(H) (X)-C(O)R⁴, and R³-C(CH₃)(X)-C(O)R⁴
(wherein R³ and R⁴ each is a hydrogen atom or an alkyl group, an aryl group, or an aralkyl group having 1 to 20 carbon atoms; X is chlorine, bromine, or iodine); and

   R³-C₆H₄-SO₂X
(wherein R³ is a hydrogen atom or an alkyl group, an aryl group, or an aralkyl group having 1 to 20 carbon atoms; X is chlorine, bromine, or iodine).

As the initiator of the atom transfer radical polymerization, an organic halide or halogenated sulfonyl compound having a functional group other than a functional group which initiates polymerization can be used. In this case, the resultant vinyl polymer has the functional group at one of the main chain ends and a polymerization propagation terminal-structure of atom transfer radical polymerization at the other end. Examples of such a functional group include alkenyl, crosslinkable silyl, hydroxyl, epoxy, amino, and amido group.

Examples of an organic halide having an alkenyl group include, but not limited to, compounds having the structure represented by the general formula 2:

R⁶R⁷C(X)-R⁸-R⁹-C(R⁵)=CH₂ (2)

(wherein R⁵ is a hydrogen atom or a methyl group; R⁶ and R⁷ each is a hydrogen atom, an alkyl group, an aryl group or an aralkyl group having 1 to 20 carbon atoms, or R⁶ and R⁷ are bonded together at the other ends; R⁸ is -C(O)O- (ester group), -C(O)- (keto group), or an o-, m-, or p-phenylene group; R⁹ is a direct bond or a divalent organic group having 1 to 20 carbon atoms, which may contain at least one ether bond; and X is chlorine, bromine, or iodine).

Specific examples of substituents R⁶ and R⁷ include hydrogen, methyl, ethyl, n-propyl, isopropyl, butyl, pentyl, and hexyl group. Substituents R⁶ and R⁷ may be bonded together at the other ends to form a cyclic skeleton.

Specific examples of an alkenyl group-containing organic halide represented by the general formula 2 are the following: XCH₂C(O)O (CH₂)ₙCH=CH₂, H₃CC(H)(X) C (O) O (CH₂)ₙCH=CH₂, (H₃C)₂C(X)C (O)O(CH₂)ₙCH=CH₂, CH₃CH₂C(H)(X)C (O)O (CH₂)ₙCH=CH₂, and 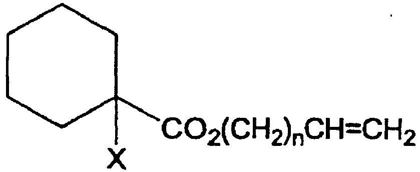 (wherein X is chlorine, bromine, or iodine, and n is an integer of 0 to 20);

XCH₂C(O)O(CH₂)ₙO(CH₂)ₘCH=CH₂,

H₃CC(H)(X)C(O)O(CH₂)ₙO(CH₂)ₘCH=CH₂,

(H₃C)₂C(X)C(O)O(CH₂)ₙO(CH₂)ₘCH=CH₂,

CH₃CH₂C(H)(X)C(O)O(CH₂)ₙO(CH₂)ₘCH=CH₂, and

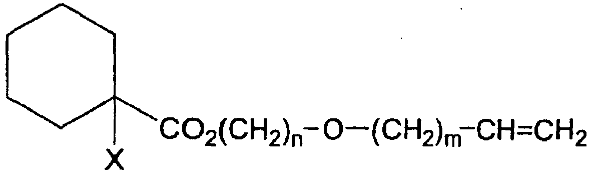

(wherein X is chlorine, bromine, or iodine, n is an integer of 1 to 20, and m is an integer of 0 to 20); o, m, p-XCH₂-C₆H₄-(CH₂)ₙ-CH=CH₂,
o, m, p-CH₃C(H)(X)-C₆H₄-(CH₂)ₙ-CH=CH₂, and
o, m, p-CH₃CH₂C(H)(X)-C₆H₄-(CH₂)ₙ-CH=CH₂
(wherein X is chlorine, bromine, or iodine, and n is an integer of 0 to 20);
o, m, p-XCH₂-C₆H₄-(CH₂)ₙ-O-(CH₂)ₘ-CH=CH₂,
o, m, p-CH₃C(H)(X)-C₆H₄-(CH₂)ₙ-O-(CH₂)ₘ-CH=CH₂, and
o, m, p-CH₃CH₂C(H)(X)-C₆H₄-(CH₂)ₙ-O-(CH₂)ₘCH=CH₂
(wherein X is chlorine, bromine, or iodine, n is an integer of 1 to 20, and m is an integer of 0 to 20);
o, m, p-XCH₂-C₆H₄-O-(CH₂)ₙ-CH=CH₂,
o, m, p-CH₃C(H)(X)-C₆H₄-O-(CH₂)ₙ-CH=CH₂, and
o, m, p-CH₃CH₂C(H)(X)-C₆H₄-O-(CH₂)ₙ-CH=CH₂
(wherein X is chlorine, bromine, or iodine, and n is an integer of 0 to 20); and
o, m, p-XCH₂-C₆H₄-O-(CH₂)ₙ-O-(CH₂)ₘ-CH=CH₂,
o, m, p-CH₃C(H)(X)-C₆H₄-O-(CH₂)ₙ-O-(CH₂)ₘ-CH=CH₂, and
o, m, p-CH₃CH₂C(H)(X)-C₆H₄-O-(CH₂)ₙ-O-(CH₂)ₘ-CH=CH₂
(wherein X is chlorine, bromine, or iodine, n is an integer of 1 to 20, and m is an integer of 0 to 20).

Other examples of an organic halide having an alkenyl group include compounds represented by the general formula 3:

H₂C=C(R⁵)-R⁹-C(R⁶)(X)-R¹⁰-R⁷ (3)

(wherein R⁵, R⁶, R⁷, R⁹, and X represent the same as the above, and R¹⁰ represents a direct bond or -C (O) O- (ester group), -C (O)-(keto group), or an o-, m-, or p-phenylene group).

R⁹ is a direct bond or a divalent organic group having 1 to 20 carbon atoms (which may contain at least one ether bond). When R⁹ is a direct bond, the compound is a halogenated allyl compound in which a vinyl group is bonded to the carbon bonded to a halogen. In this case, the carbon-halogen bond is activated by the adjacent vinyl group, and thus a C(O)O or phenylene group is not necessarily required as R¹⁰, and a direct bond may be present. When R⁹ is not a direct bond, R¹⁰ is preferably a C(O)O, C(O), or phenylene group for activating the carbon-halogen bond.

Specific examples of the compounds represented by the general formula 3 include the following:

CH₂=CHCH₂X, CH₂=C(CH₃)CH₂X, CH₂=CHC(H)(X)CH₃,

CH₂=C(CH₃)C(H)(X)CH₃, CH₂=CHC(X)(CH₃)₂, CH₂=CHC(H)(X)C₂H₅,

CH₂=CHC(H)(X)CH(CH₃)₂, CH₂=CHC(H)(X)C₆H₅, CH₂=CHC(H)(X)CH₂C₆H₅,

CH₂=CHCH₂C(H)(X)-CO₂R, CH₂=CH(CH₂)₂C(H)(X)-CO₂R,

CH₂=CH(CH₂)₃C(H)(X)-CO₂R, CH₂=CH(CH₂)₈C(H)(X)-CO₂R,

CH₂=CHCH₂C(H)(X)-C₆H₅, CH₂=CH(CH₂)₂C(H)(X)-C₆H₅, and

CH₂=CH(CH₂)₃C(H) (X) -C₆H₅

(wherein X is chlorine, bromine, or iodine, and R is an alkyl, aryl, or aralkyl group having 1 to 20 carbon atoms).

Specific examples of a halogenated sulfonyl compound having an alkenyl group include the following: o-, m-, p-CH₂=CH-(CH₂)-C₆H₄-SO₂X, and
o-, m-, p-CH₂=CH-(CH₂)ₙ-O-C₆H₄-SO₂X
(wherein X is chlorine, bromine, or iodine, and n is an integer of 0 to 20).

Specific examples of an organic halide having a crosslinkable silyl group include, but not limited to, compounds with a structure represented by the general formula 4:

R⁶R⁷C(X)-R⁸-R⁹-C(H)(R⁵)CH₂-[Si(R¹¹)_{2-b}(Y)_{b}O]ₘ-Si(R¹²)₃₋ₐ(Y)ₐ (4)

(wherein R⁵, R⁶, R⁷, R⁸, R⁹ and X represent the same as the above, and R¹¹ and R¹² each represents an alkyl, aryl or aralkyl group having 1 to 20 carbon atoms, or a triorganosiloxy group represented by (R')₃SiO- (the three R's each is a monovalent hydrocarbon group having 1 to 20 carbon atoms and may be the same or different) ; when two or more groups R¹¹ or R¹² are present, they may be the same or different; Y represents a hydroxyl group or a hydrolyzable group, and when two or more groups Y are present, they may be the same or different; a represents 0, 1, 2, or 3; b represents 0, 1, or 2; m is an integer of 0 to 19; and a + mb ≥1 is satisfied).

Specific examples of the compounds represented by the general formula 4 include the following:

XCH₂C(O)O(CH₂)ₙSi(OCH₃)₃,

CH₃C(H)(X)C(O)O(CH₂)ₙSi (OCH₃)₃,

(CH₃)₂C(X)C(O)O(CH₂)ₙSi(OCH₃)₃,

XCH₂C(O)O(CH₂)ₙSi(CH₃)(OCH₃)₂,

CH₃C(H)(X)C(O)O(CH₂)ₙSi(CH₃)(OCH₃)₂, and

(CH₃)₂C(X)C(O)O(CH₂)ₙSi(CH₃)(OCH₃)₂

(wherein X is chlorine, bromine, or iodine, and n is an integer of 0 to 20);

XCH₂C(O)O(CH₂)ₙO(CH₂)ₘSi(OCH₃)₃,

H₃CC(H) (X)C(O)O(CH₂)ₙO(CH₂)ₘSi(OCH₃)₃,

(H₃C)₂C(X)C(O)O(CH₂)ₙO(CH₂)ₘSi(OCH₃)₃,

CH₃CH₂C(H)(X)C(O)O(CH₂)ₙO(CH₂)ₘSi-(OCH₃)₃,

XCH₂C(O)O(CH₂)ₙO(CH₂)ₘSi(CH₃)(OCH₃)₂,

H₃CC(H)(X)C(O)O(CH₂)ₙO(CH₂)ₘ-Si(CH₃)(OCH₃)₂,

(H₃C)₂C(X)C(O)O(CH₂)ₙO(CH₂)ₘ-Si(CH₃)(OCH₃)₂, and

CH₃CH₂C(H)(X)C(O)O(CH₂)ₙO(CH₂)ₘ-Si(CH₃)(OCH₃)₂,

(wherein X is chlorine, bromine, or iodine, n is an integer of 1 to 20, and m is an integer of 0 to 20); and o, m, p-XCH₂-C₆H₄-(CH₂)₂Si(OCH₃)₃,
o,m, p-CH₃C(H)(X)-C₆H₄-(CH₂)₂Si(OCH₃)₃,
o, m, p-CH₃CH₂C(H)(X)-C₆H₄-(CH₂)₂Si(OCH₃)₃,
o, m, p-XCH₂-C₆H₄-(CH₂)₃Si(OCH₃)₃,
o, m, p-CH₃C(H)(X)-C₆H₄-(CH₂)₃Si(OCH₃)₃,
o, m, p-CH₃CH₂C(H)(X)-C₆H₄-(CH₂)₃Si(OCH₃)₃,
o, m, p-XCH₂-C₆H₄-(CH₂)₂-O-(CH₂)₃Si(OCH₃)₃,
o, m, p-CH₃C(H) (X)-C₆H₄-(CH₂)₂-O-(CH₂)₃Si(OCH₃)₃,
o, m, p-CH₃CH₂C(H)(X)-C₆H₄-(CH₂)₂-O-(CH₂)₃Si(OCH₃)₃,
o, m, p-XCH₂-C₆H₄-O-(CH₂)₃Si(OCH₃)₃,
o, m, p-CH₃C(H) (X)-C₆H₄-O-(CH₂)₃Si(OCH₃)₃,
o, m, p-CH₃CH₂C(H)(X)-C₆H₄-O-(CH₂)₃-Si(OCH₃)₃,
o, m, p-XCH₂-C₆H₄-O-(CH₂)₂-O-(CH₂)₃-Si(OCH₃)₃,
o, m, p-CH₃C(H)(X)-C₆H₄-O-(CH₂)₂-O-(CH₂)₃Si(OCH₃)₃, and
o, m, p-CH₃CH₂C(H)(X)-C₆H₄-O-(CH₂)₂-O-(CH₂)₃Si(OCH₃)₃ (wherein X is chlorine, bromine, or iodine).

Other examples of the organic halide having a crosslinkable silyl group include compounds with a structure represented by the general formula 5:

(R¹²)₃₋ₐ(Y)ₐSi-[OSi(R¹¹)_{2-b}(Y)_{b}]ₘ-CH₂-C(H)(R⁵)-R⁹-C(R⁶)(X)-R¹⁰-R⁷ (5)

(wherein R⁵, R⁶, R⁷, R⁹, R¹⁰, R¹¹, R¹², a, b, m, X and Y represent the same as the above).

Specific examples of such compounds include the following:

(CH₃O)₃SiCH₂CH₂C(H)(X)C₆H₅,

(CH₃O)₂(CH₃)SiCH₂CH₂C(H)(X)C₆H₅,

(CH₃O)₃Si(CH₂)₂C(H)(X)-CO₂R,

(CH₃O)₂(CH₃)Si(CH₂)₂C(H)(X)-CO₂R,

(CH₃O)₃Si(CH₂)₃C(H)(X)-CO₂R,

(CH₃O)₂(CH₃)Si (CH₂)₃C(H)(X)-CO₂R,

(CH₃O)₃Si(CH₂)₄C(H)(X)-CO₂R,

(CH₃O)₂(CH₃)Si(CH₂)₄C(H)(X)-CO₂R,

(CH₃O)₃Si(CH₂)₉C(H) (X)-CO₂R,

(CH₃O)₂(CH₃)Si(CH₂)₉C(H)(X)-CO₂R,

(CH₃O)₃Si(CH₂)₃C(H) (X)-C₆H₅,

(CH₃O)₂(CH₃)Si(CH₂)₃C(H)(X)-C₆H₅,

(CH₃O)₃Si(CH₂)₄C(H)(X)-C₆H_{5,} and

(CH₃O)₂(CH₃)Si (CH₂)₄C(H) (X)-C₆H₅

(wherein X is chlorine, bromine, or iodine, and R is alkyl, aryl, or aralkyl group having 1 to 20 carbon atoms).

Examples of the hydroxyl group-containing organic halide or halogenated sulfonyl compound include, but not limited to, the following:

HO- (CH₂)ₙ-OC(O)C(H)(R) (X)

(wherein X is chlorine, bromine, or iodine, R is a hydrogen atom or alkyl, aryl, or aralkyl group having 1 to 20 carbon atoms, and n is an integer of 1 to 20).

Examples of the amino group-containing organic halide or halogenated sulfonyl compound include, but not limited to, the following:

H₂N-(CH₂)ₙ-OC(O)C(H)(R) (X)

(wherein X is chlorine, bromine, or iodine, R is a hydrogen atom or alkyl, aryl, or aralkyl group having 1 to 20 carbon atoms, and n is an integer of 1 to 20).

Examples of the epoxy group-containing organic halide or halogenated sulfonyl compound include, but not limited to, the following: 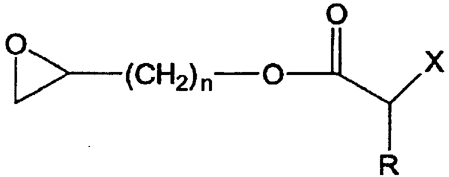 (wherein X is chlorine, bromine, or iodine, R is a hydrogen atom or alkyl, aryl, or aralkyl group having 1 to 20 carbon atoms, and n is an integer of 1 to 20).

In order to obtain a polymer having at least two polymerization propagation terminal structures per molecule, an organic halide or halogenated sulfonyl compound having at least two initiation points is preferably used as the initiator. Examples of such a compound include the following:

**o,m,p-X-CH₂-C₆H₄-CH₂-X**

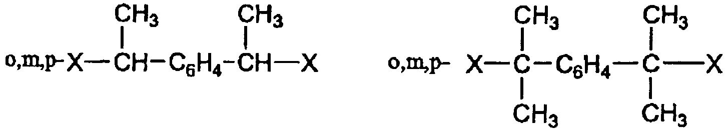

(wherein C₆H₄ is a phenylene group, and X is chlorine, bromine, or iodine.) 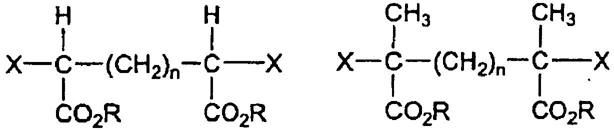 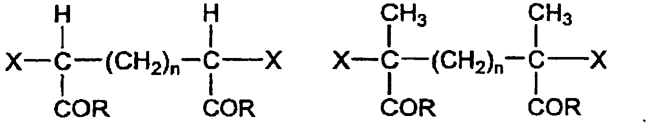 (wherein R is an alkyl, aryl, or aralkyl group having 1 to 20 carbon atoms, n is an integer of 0 to 20, and X is chlorine, bromine, or iodine.) 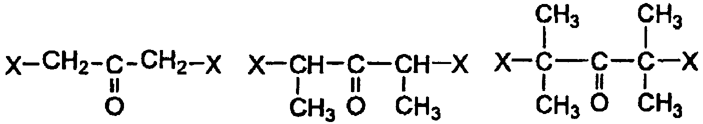 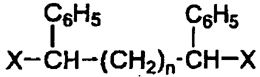 (wherein X is chlorine, bromine, or iodine, and n is an integer of 0 to 20.) 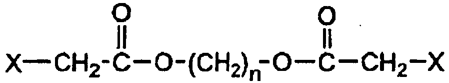 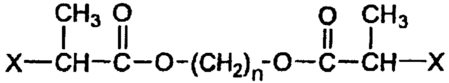 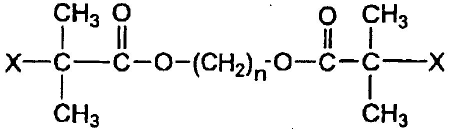 (wherein n is an integer of 1 to 20, and X is chlorine, bromine, or iodine.)

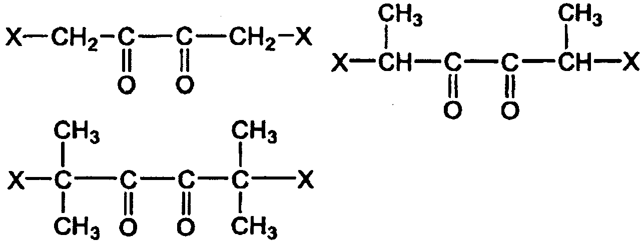

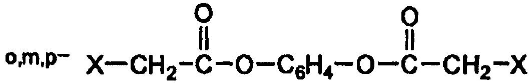

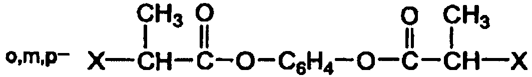

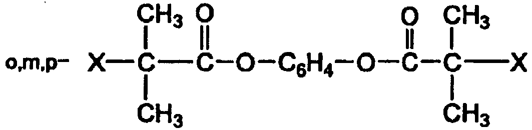

### o,m,p- X-SO₂-C₆H₄-SO₂-X

### (wherein X is chlorine, bromine, or iodine.)

The vinyl monomer used in the polymerization is not particularly limited, and any of the compounds listed above **is** preferably used.

The transition metal complex used as the polymerization catalyst is not particularly limited, but a metal complex composed of a VII, VIII, IX, X, or XI group element in the periodic table as a central metal is preferred. A complex of zero-valent copper, monovalent copper, divalent ruthenium, divalent iron, or divalent nickel is more preferred. Among these complexes, a copper complex is most preferred. Specific examples of a monovalent copper compound include cuprous chloride, cuprous bromide, cuprous iodide, cuprous cyanide, cuprous oxide, and cuprous perchlorate. When a copper compound is used, a ligand, such as 2,2'-bipyridyl or its derivative, 1,10-phenanthroline or its derivative, or polyamine, e.g., tetramethylethylenediamine, pentamethyldiethylenetriamine, or hexamethyl tris (2-aminoethyl) amine, is added for increasing catalyst activity. As a ligand, nitrogen-containing compounds are preferred, chelate nitrogen compounds are more preferred, N,N,N',N",N"-pentamethyldiethylenetriamineis further preferred. Also, a tristriphenylphosphine complex (RuCl₂ (PPh₃)₃) of divalent ruthenium chloride is suitable as the catalyst. When a ruthenium compound is used as a catalyst, an aluminum alkoxide is added as an activator. Furthermore, a bistriphenylphosphine complex (FeCl₂(PPh₃)₂) of divalent iron, a bistriphenylphosphine complex (NiCl₂(PPh₃)₂) of divalent nickel, or a bistributylphosphine complex (NiBr₂(PBu₃)₂) of divalent nickel is preferred as the catalyst.

The polymerization can be performed without a solvent or in any of various solvents. Examples of the solvent include hydrocarbon solvents, such as benzene and toluene; ether solvents, such as diethyl ether and tetrahydrofuran; halogenated hydrocarbon solvents, such as methylene chloride and chloroform; ketone solvents, such as acetone, methyl ethyl ketone, and methyl isobutyl ketone; alcohol solvents, such as methanol, ethanol, propanol, isopropanol, n-butyl alcohol, and tert-butyl alcohol; nitrile solvents, such as acetonitrile, propionitrile, and benzonitrile; ester solvents, such as ethyl acetate and butyl acetate; and carbonate solvents, such as ethylene carbonate and propylene carbonate. These solvents can be used alone or as a mixture of two or more.

The polymerization can be performed in a range of 0°C to 200°C, and preferably 50°C to 150°C without any purpose of restriction.

The atom transfer radical polymerization of the invention includes so called reverse atom transfer radical polymerization. The reverse atom transfer radical polymerization is a method comprising reacting an ordinary atom transfer radical polymerization catalyst in its high oxidation state resulting from radical generation, for example Cu (II') when Cu (I) is used as the catalyst, with an ordinary radical initiator, such as a peroxide, to thereby bring about an equilibrium state like in atom transfer radical polymerization (cf. Macromolecules, 1999, 32, 2872).

### <Functional groups>

### Number of crosslinkable silyl groups

The number of crosslinkable silyl groups (hydrolyzable silyl groups) in the vinyl polymer is not particularly restricted and, from the viewpoint of the curability of the composition and the physical properties of the cured product, preferably not smaller than 1.1, more preferably not smaller than 1.1 but not greater than 4.0, further preferably not smaller than 1.2 but not greater than 3.5, on average in one molecule.

### Positions of crosslinkable silyl groups

In cases where the cured products resulting from curing of the curable composition of the present invention are especially required to have rubber-like properties, it is preferred that at least one of crosslinkable functional groups be positioned at a terminus of the molecular chain so that the molecular weight between crosslinking sites, which has a great influence on the rubber elasticity, can be increased. More preferably, all crosslinkable functional groups are located at molecular chain termini.

Methods of producing vinyl polymers, in particular (meth) acrylic polymers, having at least one crosslinkable silyl group such as mentioned above at a molecular terminus thereof are disclosed in Japanese Kokoku Publication Hei-03-14068, Japanese Kokoku Publication Hei-04-55444 and Japanese Kokai Publication Hei-06-211922, among others. However, these methods are free radical polymerization methods in which the above-mentioned "chain transfer agent methods" is used and, therefore, the polymers obtained generally have problems, namely they show a molecular weight distribution represented by Mw/Mn as wide as not less than 2 as well as a high viscosity, although they have crosslinkable silyl groups, in relatively high proportions, at molecular chain termini. Therefore, for obtaining vinyl polymers showing a narrow molecular weight distribution and a low viscosity and having crosslinkable silyl groups, in high proportions, at molecular chain termini, the above-described "living radical polymerization method" is preferably used. The present invention is not restricted to the polymers showing a narrow molecular weight distribution, however.

In the following, an explanation is made of these functional groups.

### Crosslinkable silyl groups

As the crosslinkable silyl groups to be used in the practice of the present invention, there may be mentioned those groups represented by the general formula 1:

- [Si(R¹)_{2-b}(Y)_{b}O]ₘ-Si(R²)₃₋ₐ(Y)ₐ (1)

{wherein, R¹ and R² each is an alkyl group containing 1 to 20 carbon atoms, an aryl group containing 6 to 20 carbon atoms, an aralkyl group containing 7 to 20 carbon atoms or a triorganosiloxy group represented by (R')₃SiO- (in which R' is a univalent hydrocarbon group containing 1 to 20 carbon atoms and the three R' groups may be the same or different) and, when there are two or more R¹ or R² groups, they may be the same or different; Y represents a hydroxyl group or a hydrolyzable group and, when there are two or more Y groups, they may be the same or different; a represents 0, 1, 2 or 3, b represents 0, 1 or 2, and m is an integer of 0 to 19, provided that the relation a + mb ≥ 1 should be satisfied.}

As the hydrolyzable group, there may be mentioned, among others, a hydrogen atom and those groups which are in general use, for example alkoxy, acyloxy, ketoximate, amino, amido, aminoxy, mercapto and alkenyloxy groups. Among them, alkoxy, amido and aminoxy groups are preferred. In view of mild hydrolyzability and ease of handling, alkoxy groups are particularly preferred. For alkoxy groups, the less carbon atoms an alkoxy group has, the more active said group is. Among alkoxy groups, methoxy group > ethoxy group > propoxy group > ... becomes less active in that order and, therefore, they can be selected according to the purpose and/or use.

One to three hydrolyzable groups and/or hydroxyl groups can be bound to each silicon atom and it is preferred that (a + ∑b) be within the range of 1 to 5. When there are two or more hydrolyzable groups or hydroxyl groups in one crosslinkable silyl group, they may be the same or different. The number of silicon atoms forming the crosslinkable silyl group is not less than 1 and, in the case of silicon atoms connected by siloxane or like bonding, it is preferably not more than 20. Particularly preferred are crosslinkable silyl groups represented by the general formula 6:

-Si(R²)₃₋ₐ(Y)ₐ (6)

(wherein R² and Y are as defined above; and a is an integer of 1 to 3) because of ready availability.

Considering the curability, the integer a is preferably 2 or more, though this is not critical.

In many cases, a polymer which has a hydrolyzable silicon group consisted of two hydrolyzable groups bound to one silicon atom is used as the vinyl polymer having a crosslinkable silyl group. In the case where the polymer is used for an adhesive or at a low temperature, particularly where a very high curing rate is required, the curing rate of the polymer is insufficient. On the contrary, in the case where flexibility is required after curing, the crosslinking density has to be lowered and accordingly due to the insufficient crosslinking density, the stickiness (surface tack) is sometimes increased. In such a case, one in which a is 3 (e.g. trimethoxy functional group) is preferable.

One in which a is 3 (e.g. trimethoxy functional group) is faster in curability than one in which a is 2 (e.g. dimethoxy functional group) but, as for the storage stability and/or mechanical properties (e.g. elongation), one in which a is 2 is sometimes superior. For attaining a balance between curability and physical properties, one in which a is 2 (e.g. dimethoxy functional group) and one in which a is 3 (e.g. trimethoxy functional group) may be used in combination.

For example, in the case where each of Ys is the same, the reactivity of the group represented by Y increases as the number represented by a increases, and therefore the curability and the mechanical properties of the cured product can be controlled by properly selecting Y and a and Y and a may be selected in accordance with the purposes and uses. Further, one in which a is 1 may be used as a chain ex**te**nding agent by being mixed with a polymer having a crosslinkable silyl group, practically with at least one polymer selected from polysiloxane, polyoxypropylene, or polyisobutylene polymers. Accordingly, it becomes possible to obtain the composition with low viscosity before curing and high elongation at break, low bleeding property, less surface staining property, and excellent adhesiveness with a coating material after curing.

### Crosslinkable silyl group introduction method

In the following, several methods of crosslinkable silyl group introduction into the vinyl polymer of the present invention are described without any purpose of restriction.

At first, a method of introducing the crosslinkable silyl group, alkenyl group, and hydroxyl group by conversion of the terminal functional groups will be described. Since these functional groups may be precursors for other groups, it is described in the backward order from the crosslinkable silyl group.

As methods of synthesizing a vinyl polymer having at least one crosslinkable silyl group, there may be mentioned, among others,
(A) the method which comprises subjecting a crosslinkable silyl group-containing hydrosilane compound to addition to a vinyl polymer having at least one alkenyl group in the presence of a hydrosilylation catalyst,
(B) the method which comprises reacting a vinyl polymer having at least one hydroxyl group with a compound having, in each molecule, a crosslinkable silyl group and a group capable of reacting with the hydroxyl group, such as an isocyanato group,
(C) the method which comprises subjecting a compound having, in each molecule, a polymerizable alkenyl group and a crosslinkable silyl group to reaction in synthesizing a vinyl polymer by radical polymerization,
(D) the method which comprises subjecting a chain transfer agent having a crosslinkable silyl group to reaction in synthesizing a vinyl polymer by radical polymerization, and
(E) the method which comprises reacting a vinyl polymer having at least one highly reactive carbon-halogen bond with a compound having, in each molecule, a crosslinkable silyl group and a stable carbanion.

The vinyl polymer having at least one alkenyl group, which is to be used in the above method (A), can be obtained by various methods. Several methods of synthesis are mentioned below, without any purpose of restriction, however.
(A-a) Method comprising subjecting to reaction a compound having, in each molecule, a polymerizable alkenyl group together with a low polymerizability alkenyl group, such as one represented by the general formula 9 shown below as a second monomer in synthesizing a vinyl polymer by radical polymerization:

   H₂C=C(R¹⁴)-R¹⁵-R¹⁶-C(R¹⁷)=CH₂ (9)

   (wherein R¹⁴ represents a hydrogen atom or a methyl group, R¹⁵ represents -C(O)O- or an o-, m- or p-phenylene group, R¹⁶ represents a direct bond or a divalent organic group containing 1 to 20 carbon atoms, which may contain one or more ether bonds, and R¹⁷ represents a hydrogen atom, an alkyl group containing 1 to 20 carbon atoms, an aryl group containing 6 to 20 carbon atoms or an aralkyl group containing 7 to 20 carbon atoms).

The time when the compound having, in each molecule, a polymerizable alkenyl group together with a low polymerizability alkenyl group is subjected to reaction is not particularly restricted but, in particular in living radical polymerization and when rubber-like properties are expected, the compound is preferably subjected to reaction as a second monomer at the final stage of the polymerization reaction or after completion of the reaction of the employed monomers.
(A-b) Method comprising subjecting to reaction a compound having at least two low polymerizability alkenyl groups, for example 1,5-hexadiene, 1,7-octadiene or 1,9-decadiene, at the final stage of the polymerization or after completion of the reaction of the monomers employed in vinyl polymer synthesis by living radical polymerization.
(A-c) Method comprising reacting a vinyl polymer having at least one highly reactive carbon-halogen bond with one of various alkenyl group-containing organometallic compounds, for example an organotin such as allyltributyltin or allyltrioctyltin, for substitution of the halogen.
(A-d) Method comprising reacting a vinyl polymer having at least one highly reactive carbon-halogen bond with a stabilized, alkenyl group-containing carbanion such as one represented by the general formula 10, for substitution of the halogen:

   M⁺C⁻(R¹⁸)(R¹⁹)-R²⁰-C(R¹⁷)=CH₂ (10)

   (wherein R¹⁷ is as defined above, R¹⁸ and R¹⁹ each is an electron-withdrawing group capable of stabilizing the carbanion C⁻ or one of them is such an electron-withdrawing group and the other represents a hydrogen atom, an alkyl group containing 1 to 10 carbon atoms or a phenyl group, R²⁰ represents a direct bond or a divalent organic group containing 1 to 10 carbon atoms, which may contain one or more ether bonds, and M⁺ represents an alkali metal ion or a quaternary ammonium ion).

Particularly preferred as the electron-withdrawing group R¹⁸ and/or R¹⁹ are those which have a structure of -CO₂R, -C(O)R or -CN.
(A-e) Method comprising reacting a vinyl polymer having at least one highly reactive carbon-halogen bond with a simple substance metal, such as zinc, or an organometallic compound and then reacting the thus-prepared enolate anion with an alkenyl group-containing, electrophilic compound, such as an alkenyl group-containing compound having a leaving group such as a halogen atom or an acetyl group, an alkenyl group-containing carbonyl compound, an alkenyl group-containing isocyanate compound or an alkenyl group-containing acid halide.
(A-f) Method comprising reacting a vinyl polymer having at least one highly reactive carbon-halogen bond with an alkenyl group-containing oxy anion or carboxylate anion such as one represented by the general formula 11 or 12, for substitution of the halogen:

   H₂C=C(R¹⁷)-R²¹-O⁻M⁺ (11)

   (wherein R¹⁷ and M⁺ are as defined above and R²¹ is a divalent organic group containing 1 to 20 carbon atoms, which may contain one or more ether bonds);

   H₂C=C(R¹⁷)-R²²-C(O)O⁻M⁺ (12)

   (wherein R¹⁷ and M⁺ are as defined above and R²² is a direct bond or a divalent organic group containing 1 to 20 carbon atoms, which may contain one or more ether bonds).

The method of synthesizing the above-mentioned vinyl polymer having at least one highly reactive carbon-halogen bond includes, but is not limited to, atom transfer radical polymerization methods using an organic halide as initiator and a transition metal complex as catalyst, as mentioned above.

It is also possible to obtain the vinyl polymer having at least one alkenyl group from a vinyl polymer having at least one hydroxyl group. As utilizable methods, there may be mentioned, for example, the following, without any purpose of restriction.
(A-g) Method comprising reacting the hydroxyl group of a vinyl polymer having at least one hydroxyl group with a base, such as sodium methoxide, followed by reaction with an alkenyl group-containing halide, such as allyl chloride.
(A-h) Method comprising reacting such hydroxyl group with an alkenyl group-containing isocyanate compound, such as allyl isocyanate.
(A-i) Method comprising reacting such hydroxyl group with an alkenyl group-containing acid halide, such as (meth)acrylic acid chloride, in the presence of a base, such as pyridine.
(A-j) Method comprising reacting such hydroxyl group with an alkenyl group-containing carboxylic acid, such as acrylic acid, in the presence of an acid catalyst.

In the practice of the present invention, when no halogen is directly involved in the alkenyl group introduction, as in the method (A-a) or (A-b), the vinyl polymer is preferably synthesized by living radical polymerization. From the viewpoint of ready controllability, the method (A-b) is more preferred.

In cases where alkenyl group introduction is effected by conversion of the halogen atom of a vinyl polymer having at least one highly reactive carbon-halogen atom, use is preferably made of a vinyl polymer having at least one terminal carbon-halogen bond, which is highly reactive, as obtained by subjecting a vinyl monomer to radical polymerization (atom transfer radical polymerization) using, as an initiator, an organic halide or halogenated sulfonyl compound having at least one highly reactive carbon-halogen bond and, as a catalyst, a transition metal complex. In view of easier controllability, the method (A-f) is more preferred.

The crosslinkable silyl group-containing hydrosilane compound is not particularly restricted but includes, as typical examples, compounds represented by the general formula 13.

H-[Si(R¹)_{2-b}(Y)_{b}O]ₘ-Si(R²)₃₋ₐ(Y)ₐ (13)

{wherein R¹ and R² each represents an alkyl group containing 1 to 20 carbon atoms, an aryl group containing 6 to 20 carbon atoms, an aralkyl group containing 7 to 20 carbon atoms or a triorganosiloxy group represented by (R')₃SiO- (in which R' is a univalent hydrocarbon group containing 1 to 20 carbon atoms and the three R' groups may be the same or different) and, when there are two or more R¹ or R² groups, they may be the same or different; Y represents a hydroxyl group or a hydrolyzable group and, when there are two or more Y groups, they may be the same or different; a represents 0, 1, 2 or 3, b represents 0, 1 or 2 and m is an integer of 0 to 19, provided that the relation a + mb ≥ 1 should be satisfied}.

Particularly preferred among those hydrosilane compounds in view of ready availability are crosslinkable group-containing compounds represented by the general formula 14:

H-Si(R²)₃₋ₐ(Y)ₐ (14)

(wherein R² and Y are as defined above; and a is an integer of 1 to 3).

In subjecting the above crosslinkable silyl-containing hydrosilane compound to addition to the alkenyl group, a transition metal catalyst is generally used. The transition metal catalyst includes, among others, simple substance platinum; solid platinum dispersed on a support such as alumina, silica or carbon black; chloroplatinic acid; chloroplatinic acid complexes with alcohols, aldehydes and ketones ; platinum-olefin complexes; and platinum(0)-divinyltetramethyldisiloxane complex. As other catalysts than platinum compounds, there may be mentioned RhCl(PPh₃)₃, RhCl₃, RuCl₃, IrCl₃, FeCl₃, AlCl₃, PdCl₂ · H₂O, NiCl₂ and TiCl₄, for instance.

The method of producing the vinyl polymer having at least one hydroxyl group, which polymer is to be used in the methods (B) and (A-g) to (A-j), includes, but is not limited to, the following, among others.
(B-a) Method comprising subjecting to reaction, as a second monomer, a compound having both a polymerizable alkenyl group and a hydroxyl group in each molecule, for example one represented by the general formula 15 given below, in synthesizing the vinyl polymer by radical polymerization:

   H₂C=C(R¹⁴)-R¹⁵-R¹⁶-OH (15)

   (wherein R¹⁴, R¹⁵ and R¹⁶ are as defined above).

The time for subjecting to reaction the compound having both a polymerizable alkenyl group and a hydroxyl group in each molecule is not critical but, in particular in living radical polymerization, when rubber-like properties are demanded, the compound is preferably subj ected to reaction as a second monomer at the final stage of the polymerization reaction or after completion of the reaction of the employed monomer.
(B-b) Method comprising subjecting an alkenyl alcohol, such as 10-undecenol, 5-hexenol or allyl alcohol, to reaction at the final stage of polymerization reaction or after completion of the reaction of the employed monomer in synthesizing the vinyl polymer by living radical polymerization.
(B-c) Method comprising radical-polymerizing a vinyl monomer using a hydroxyl group-containing chain transfer agent, such as a hydroxyl group-containing polysulfide, in large amounts, as described in Japanese Kokai Publication Hei-05-262808, for instance.
(B-d) Method comprising subjecting a vinyl monomer to radical polymerization using hydrogen peroxide or a hydroxyl group-containing initiator, as described in Japanese Kokai Publication Hei-06-239912 and Japanese Kokai Publication Hei-08-283310, for instance.
(B-e) Method comprising subjecting a vinyl monomer to radical polymerization using an alcohol in excess, as described in Japanese Kokai Publication Hei-06-116312, for instance.
(B-f) Method comprising introducing a terminal hydroxyl group by hydrolyzing the halogen atom of a vinyl polymer having at least one highly reactive carbon-halogen bond or reacting such halogen atom with a hydroxyl group-containing compound, according to the method described in Japanese Kokai Publication Hei-04-132706, for instance.
(B-g) Method comprising reacting a vinyl polymer having at least one highly reactive carbon-halogen bond with a hydroxyl group-containing stabilized carbanion, such as one represented by the general formula 16 for substitution of the halogen atom:

   M⁺C⁻(R¹⁸)(R¹⁹)-R²⁰-OH (16)

   (wherein R¹⁸, R¹⁹ and R²⁰ are as defined above).

Particularly preferred as the electron-withdrawing groups R¹⁸ and R¹⁹ are those having a structure of -CO₂R, -C(O)R or -CN.
(B-h) Method comprising reacting a vinyl polymer having at least one highly reactive carbon-halogen bond with a simple substance metal, such as zinc, or an organometallic compound and then reacting the thus-prepared enolate anion with an aldehyde or ketone.
(B-i) Method comprising reacting a vinyl polymer having at least one highly reactive carbon-halogen bond with a hydroxyl group-containing oxy anion or carboxylate anion, such as one represented by the general formula 17 or 18 given below, for substitution of the halogen atom:

   HO-R²¹-O⁻M⁺ (17)

   (wherein R²¹ and M⁺ are as defined above);

   HO-R²²-C(O)O⁻M⁺ (18)

   (wherein R²² and M⁺ are as defined above).
(B-j) Method comprising subjecting, as a second monomer, a compound having a low polymerizable alkenyl group and a hydroxyl group in each molecule to reaction at the final stage of the polymerization reaction or after completion of the reaction of the employed monomer in synthesizing the vinyl polymer by living radical polymerization.

Such compound is not particularly restricted but may be a compound represented by the general formula 19, for instance:

H₂C=C(R¹⁴)-(R²¹)-OH (19)

(wherein R¹⁴ and R²¹ are as defined above).

The compound represented by the above general formula 19 is not particularly restricted but, in view of ready availability, alkenyl alcohols such as 10-undecenol, 5-hexenol and allyl alcohol are preferred.

In the practice of the present invention, when no halogen is directly involved in hydroxyl group introduction, as in the methods (B-a) to (B-e) and (B-j), the vinyl polymer is preferably synthesized by living radical polymerization. The method (B-b) is more preferred from the viewpoint of ease of control.

In cases where hydroxyl group introduction is effected by conversion of the halogen atom of a vinyl polymer having at least one highly reactive carbon-halogen atom, use is preferably made of a vinyl polymer having at least one terminal carbon-halogen bond, which is highly reactive, as obtained by subjecting a vinyl monomer to radical polymerization (atom transfer radical polymerization) using an organic halide or halogenated sulfonyl compound as an initiator and, as a catalyst, a transition metal complex. From the viewpoint of ease of control, the method (B-i) is more preferred.

As the compound having a crosslinkable silyl group and a group capable of reacting with a hydroxyl group, such as an isocyanato group, in each molecule, there may be mentioned, for example, γ-isocyanatopropyltrimethoxysi**la**ne, γ-isocyanatopropylmethyldimethoxysilane, γ-isocyanatopropyltriethoxysilane. If necessary, any of urethane formation reaction catalysts generally known in the art can be used.

The compound having both a polymerizable alkenyl group and a crosslinkable silyl group in each molecule, which is to be used in the method (C), includes, among others, trimethoxysilylpropyl (meth)acrylate, methyldimethoxysilylpropyl (meth)acrylate and like compounds represented by the general formula 20 given below:

H₂C=C(R¹⁴)-R¹⁵-R²³-[Si(R¹)_{2-b}(Y)_{b}O]ₘ-Si(R²)₃₋ₐ(Y)ₐ (20)

(wherein R¹, R², R¹⁴, R¹⁵, Y, a, b and m are as defined above and R²³ is a direct bond or a divalent organic group containing 1 to 20 carbon atoms, which may contain one or more ether bonds).

The time for subjecting the compound having both a polymerizable alkenyl group and a crosslinkable silyl group in each molecule is not critical but, in particular in living radical polymerization and when rubber-like properties are demanded, the compound is preferably subjected to reaction as a second monomer at the final stage of the polymerization reaction or after completion of the reaction of the employed monomer.

The chain transfer agent having a crosslinkable silyl group, which is to be used in the chain transfer agent method (D), includes mercaptan having a crosslinkable silyl group **and** hydrosilane having a crosslinkable silyl group, described in Japanese Kokoku Publication Hei-03-14068, Japanese Kokoku Publication Hei-04-55444, for instance.

The method of synthesizing the vinyl polymer having at least one highly reactive carbon-halogen bond, which is to be used in the method (E), includes, but is not limited to, the atom transfer radical polymerization method which uses an organic halide or the like as an initiator and a transition metal complex as a catalyst.

As the compound having both a crosslinkable silyl group and a stabilized carbanion in each molecule, there may be mentioned compounds represented by the general formula 21:

M⁺C⁻(R¹⁸)(R¹⁹)-R²⁴-C(H)(R²⁵)-CH₂-[Si(R¹)_{2-b}(Y)_{b}O]ₘ-Si(R²)₃₋ₐ(Y)ₐ (21)

(wherein R¹, R², R¹⁸, R¹⁹, Y, a, b and m are as defined above, R²⁴ is a direct bond or a divalent organic group containing 1 to 10 carbon atoms, which may contain one or more ether bonds, and R²⁵ represents a hydrogen atom, an alkyl group containing 1 to 10 carbon atoms, an aryl group containing 6 to 10 carbon atoms or an aralkyl group containing 7 to 10 carbon atoms).

Particularly preferred as the electron-withdrawing groups R¹⁸ and R¹⁹ are those having a structure of -CO₂R, -C(O)R or -CN.

### <Use of a plurality of vinyl polymers>

The above-mentioned vinyl polymers may be used alone and two or more vinyl polymers may be used in combination. In the case where only one kind vinyl polymer is used, it is preferable to use a vinyl polymer having a molecular weight of 5,000 to 50, 000 and 1.2 to 3.5 crosslinkable silyl groups. In the case of combination use of two or more vinyl polymers, if a first polymer is a vinyl polymer having a molecular weight of 5,000 to 50,000 and 1.2 to 3.5 crosslinkable silyl groups and a second polymer is a polymer having less crosslinkable silyl groups, it is possible to obtain the cured product with high elongation at break, low bleeding property, less surface staining property, and excellent adhesiveness with a coating material. Further, the viscosity of the composition can be lowered by setting the molecular weight of the second polymer to be lower. The molecular weight of the polymer to be the lower molecular weight component is preferably lower than 10,000, more preferably lower than 5,000 and the number of the crosslinkable silyl groups is preferably lower than 1.2 and more preferably lower than 1. Further, the molecular weight distribution is preferably lower than 1. 8 since the viscosity is decreased more. If the vinyl polymer having a crosslinkable functional group and a molecular weight distribution of 1.8 or higher and the vinyl polymer having a crosslinkable silyl group at one terminus are added, the effect to lower the viscosity is significant.

It is preferred to use the vinyl polymer having a crosslinkable silyl group at one terminus and obtained by the following production method as the polymer having a low molecular weight and less crosslinkable silyl groups, because the crosslinkable silyl group can be reliably introduced.

The vinyl polymer having a crosslinkable silyl group at one terminus consists of approximately one terminal crosslinkable silyl group per one molecule. The above-mentioned living radical polymerization method, particularly an atom transfer radical polymerization method is preferable to be employed, since the vinyl polymer having a terminal crosslinkable silyl group at a high ratio, narrow molecular weight distribution of lower than 1.8, and low viscosity can be obtained.

As methods of introducing a crosslinkable silyl group at one terminus, the following method can be used, for example. Here, for a method of introducing a crosslinkable silyl group, alkenyl group, and hydroxyl group by conversion of the terminal functional groups, it is described in the backward order from the method of introducing a crosslinkable silyl group because these functional groups may be precursors for other groups.

As methods of synthesizing a vinyl polymer having at least one crosslinkable silyl group, there may be mentioned, among others.

There may be mentioned,
(1) the method which comprises subjecting a crosslinkable silyl group-containing hydrosilane compound to addition to a polymer having one terminal alkenyl group in each molecule in the presence of a hydrosilylation catalyst,
(2) the method which comprises reacting a polymer having one terminal hydroxyl group in each molecule with a compound having, in each molecule, a crosslinkable silyl group and a group capable of reacting with the hydroxyl group, such as an isocyanato group, and
(3) the method which comprises reacting a polymer having one highly reactive terminal carbon-halogen bond in each molecule with a compound having, in each molecule, a crosslinkable silyl group and a stable carbanion.

The polymer having one terminal alkenyl group in each molecule, which is to be used in the above method (1), can be obtained by various methods. Several methods of production are mentioned below, without any purpose of restriction, however.
(1-1) Method comprising reacting a polymer having one highly reactive terminal carbon-halogen bond in each molecule with one of various alkenyl group-containing organometallic compounds, for example an organotin such as allyltributyltin or allyltrioctyltin, for substitution of the halogen.
(1-2) Method comprising reacting a polymer having one highly reactive terminal carbon-halogen bond in each molecule with a stabilized, alkenyl group-containing carbanion such as one represented by the general formula 10, for substitution of the halogen:

   M⁺C⁻(R¹⁸)(R¹⁹)-R²⁰-C(R¹⁷)=CH₂ (10)

   (wherein R¹⁸ and R¹⁹ each is an electron-withdrawing group capable of stabilizing the carbanion C⁻ or one of them is such an electron-withdrawing group and the other represents a hydrogen atom, an alkyl group containing 1 to 10 carbon atoms or a phenyl group, R²⁰ represents a direct bond or a divalent organic group containing 1 to 10 carbon atoms, which may contain one or more ether bonds, R¹⁷ represents a hydrogen atom, an alkyl group containing 1 to 20 carbon atoms, an aryl group containing 6 to 20 carbon atoms or an aralkyl group containing 7 to 20 carbon atoms, and M⁺ represents an alkali metal ion or a quaternary ammonium ion).

Particularly preferred as the electron-withdrawing group R¹⁸ and/or R¹⁹ are those which have a structure of -CO₂R, -C(O)R or -CN.
(1-3) Method comprising reacting a polymer having one highly reactive terminal carbon-halogen bond in each molecule with a simple substance metal, such as zinc, or an organometallic compound and then reacting the thus-prepared enolate anion with an alkenyl group-containing, electrophilic compound, such as an alkenyl group-containing compound having a leaving group such as a halogen atom or an acetyl group, an alkenyl group-containing carbonyl compound, an alkenyl group-containing isocyanate compound or an alkenyl group-containing acid halide.
(1-4) Method comprising reacting a polymer having one highly reactive terminal carbon-halogen bond in each molecule with an alkenyl group-containing oxy anion or carboxylate anion such as one represented by the general formula 11 or 12, for substitution of the halogen:

   H₂C=C(R¹⁷)-R²¹-O⁻M⁺ (11)

   (wherein R¹⁷ and M⁺ are as defined above and R²¹ is a divalent organic group containing 1 to 20 carbon atoms, which may contain one or more ether bonds);

   H₂C=C(R¹⁷)-R²²-C(O)O⁻M⁺ (12)

   (wherein R¹⁷ and M⁺ are as defined above and R²² is a direct bond or a divalent organic group containing 1 to 20 carbon atoms, which may contain one or more ether bonds).

The method of synthesizing the above-mentioned polymer having one highly reactive terminal carbon-halogen bond in each molecule includes, but is not limited to, atom transfer radical polymerization methods using an organic halide as initiator and a transition metal complex as catalyst, as mentioned above.

It is also possible to obtain the polymer having one terminal alkenyl group in each molecule from a polymer having at least one terminal hydroxyl group. As utilizable methods, there may be mentioned, for example, the following, without any purpose of restriction.
(1-5) Method comprising reacting the hydroxyl group of a polymer having at least one terminal hydroxyl group with a base, such as sodium methoxide, followed by reaction with an alkenyl group-containing halide, such as allyl chloride.
(1-6) Method comprising reacting such hydroxyl group with an alkenyl group-containing isocyanate compound, such as allyl isocyanate.
(1-7) Method comprising reacting such hydroxyl group with an alkenyl group-containing acid halide, such as (meth)acrylic acid chloride, in the presence of a base, such as pyridine.
(1-8) Method comprising reacting such hydroxyl group with an alkenyl group-containing carboxylic acid, such as acrylic acid, in the presence of an acid catalyst.

In cases where alkenyl group introduction is effected by conversion of the halogen atom of a polymer having one highly reactive terminal carbon-halogen bond in each molecule, use is preferably made of a polymer having, in each molecule, one terminal carbon-halogen bond, which is highly reactive, as obtained by subjecting a vinyl monomer to radical polymerization (atom transfer radical polymerization) using, as an initiator, an organic halide or halogenated sulfonyl compound having one highly reactive carbon-halogen bond in each molecule and, as a catalyst, a transition metal complex.

The crosslinkable silyl group-containing hydrosilane compound is not particularly restricted but includes, as typical examples, compounds represented by the general formula 13.

H-[Si(R¹)_{2-b}(Y)_{b}O]ₘ-Si(R²)₃₋ₐ(Y)ₐ (13)

{wherein R¹, R², Y, a, b and m are as defined above and, when there are two or more R¹ or R² groups, they may be the same or different, provided that the relation a + mb ≥ 1 should be satisfied}.

Particularly preferred among those hydrosilane compounds in view of ready availability are crosslinkable silyl group-containing compounds represented by the general formula 14:

H-Si(R²)₃₋ₐ(Y)ₐ (14)

(wherein R² and Y are as defined above; and a is an integer of 1 to 3).

In subjecting the above crosslinkable silyl-containing hydrosilane compound to addition to the alkenyl group, a transition metal catalyst is generally used. The transition metal catalyst includes, among others, simple substance platinum; solid platinum dispersed on a support such as alumina, silica or carbon black; chloroplatinic acid; chloroplatinic acid complexes with alcohols, aldehydes **and** ketones ; platinum-olefin complexes; and platinum(0)-divinyltetramethyldisiloxane complex. As other catalysts than platinum compounds, there may be mentioned RhCl(PPh₃)₃, RhCl₃, RuCl₃, IrCl₃, FeCl₃, AlCl₃, PdCl₂ · H₂O, NiCl₂ and TiCl₄, for instance.

The use amount of the vinyl polymer having a crosslinkable silyl group at one terminus and preferably having a molecular weight distribution of less than 1. 8 is preferably 5 to 400 parts by weight per 100 parts by weight of the vinyl polymers in terms of the modulus and elongation.

In the second aspect using two or more kinds of vinyl polymers in combination, the vinyl polymer having a molecular weight distribution of 1.8 or higher and the vinyl polymer having a molecular weight distribution of less than 1.8 may be used in combination. The vinyl polymer having a molecular weight distribution of 1.8 or higher may or may not comprise the crosslinkable silyl group, however in the case of the vinyl polymer comprising the crosslinkable silyl group, the weather resistance, adhesion strength and strength at break are improved and therefore, the vinyl polymer is preferable. Further, the tensile strength of the cured product obtained from the composition is expected to be high. The polymer derived from vinyl monomers as described above is usable as the main chain of the vinyl polymer having a molecular weight distribution of 1.8 or higher as the first polymer and the vinyl polymer having a molecular weight distribution of less than 1.8 as the second polymer, and both polymers are preferably acrylic ester polymers.

The above-mentioned vinyl polymer having a molecular weight distribution of 1. 8 or higher may be obtained by a common vinyl polymerization method such as a solution polymerization method by radical reaction. The polymerization may be carried out generally by a reaction of the above-mentioned monomers at 50 to 150°C in the presence of a radical initiator, a chain transfer agent. In this case, polymers having a molecular weight distribution of 1.8 or higher are generally obtained.

Examples of the above-mentioned initiator may include azo type initiators such as 2,2'-azobisisobutylonitrile, 2,2'-azobis(2-methylbutylonitrile), 4,4'-azobis(4-cyanovaleric) acid, 1,1'-azobis(1-cyclohexanecarbonitrile), azobisisobutyric acid amidine hydrochloride and 2,2'-azobis(2,4-dimethylvarelonitrile and organic peroxide type initiators such as benzoyl peroxide and di-tert-butyl peroxide, and from the viewpoint that they are not affected with the solvent to be used for the polymerization, that the risk of explosion is low, azo type initiators are preferably used.

Examples of the chain transfer agent may include mercaptans such as n-dodecylmercaptan, tert-dodecylmercaptan, laurylmercaptan, γ-mercaptopropyltrimethoxysilane, γ-mercaptopropylmethyldimethoxysilane, γ-mercaptopropyltriethoxysilane and γ-mercaptopropylmethyldiethoxysilane, halogen-containing compounds.

The polymerization may be carried out in a solvent. Preferable examples of the solvent are ethers, hydrocarbons, esters and other non-reactive solvents.

A method of introducing the crosslinkable silyl group may be a method of copolymerizing a compound having both of a polymerizable unsaturated bond and crosslinkable silyl group with a (meth)acrylic ester monomer unit. Examples of the compound having both of a polymerizable unsaturated bond and crosslinkable silyl group are monomers represented by the general formula 26:

CH₂=C (R²⁸) COOR³⁰- [Si (R¹_{2-b}) (Y_{b})O]ₘSi(R²₃₋ₐ)Yₐ (26)

(wherein, R²⁸ represents the same as described above; R³⁰ represents a divalent alkylene group having 1 to 6 carbon atoms; R¹, R², Y, a, b, and m independently represent the same as described above) or the general formula 27:

CH₂=C (R²⁸) - [Si (R¹_{2-b}) (Y_{b})O]ₘSi(R²₃₋ₐ)Yₐ (27)

(wherein, R²⁸, R¹, R², Y, a, b, and m independently represent the same as described above) and practically may include γ-methacryloxypropylpolyalkoxysilanes such as γ-methacryloxypropyltrimethoxysilane, γ-methacryloxypropylmethyldimethoxysilane, and γ-methacryloxypropyltriethoxysilane; γ-acryloxypropylpolyalkoxysilanes such as γ-acryloxypropyltrimethoxysilane, γ-acryloxypropylmethyldimethoxysilane, and γ-acryloxypropyltriethoxysilane; and vinylalkylpolyalkoxysilane such as vinyltrimethoxysilane, vinylmethyldimethoxysilane, and vinyltriethoxysilane. Further, if a compound having both of a mercapto group and crosslinkable silyl group is used as a chain transfer agent, the crosslinkable silyl group can be introduced into the polymer termini. Examples of the chain transfer agent may include mercaptans such as γ-mercaptopropyltrimethoxysilane, γ-mercaptopropylmethyldimethoxysilane, γ-mercaptopropyltriethoxysilane, and γ-mercaptopropylmethyldiethoxysilane.

The vinyl polymer having a crosslinkable functional group and a molecular weight distribution of 1.8 or higher is preferable to be a polymer having a number average molecular weight of 500 to 100,000 determined by GPC measurement on the basis of polystyrene conversion in terms of the handling easiness. Further, a polymer having a number average molecular weight of 1,500 to 30,000 is more preferable because of good weather resistance and workability of the cured product.

### «Curable composition»

The curable composition of the invention may often contain a curing catalyst and/or a curing agent. Further depending on the aimed physical properties, various kinds of additives may be added.

### <Curing catalyst and curing agent>

### Curing catalyst/curing agent for vinyl polymer (II) having at least one crosslinkable silyl group

The vinyl polymer (I) having crosslinkable silyl group is crosslinked and cured by forming a siloxane bond in the presence or absence of various kinds of conventionally known condensation catalyst. The physical property of the cured product may be controlled in a wide range from rubber-like to resin-like properties in accordance with the molecular weight and the main chain skeleton of the polymers.

As examples of the condensation catalyst, there may be mentioned, for example, dialkyltin diacarboxylates such as dibutyltin dilaulate, dibutyltin diacetate, dibutyltin diethylhexanoate, dibutyltin dioctate, dibutyltin dimethylmaleate, dibutyltin diethylmaleate, dibutyltin dibutylmaleate, dibutyltin diisooctylmaleate, dibutyltin ditridecylmaleate, dibutyltin dibenzylmaleate, dibutyltin maleate, dioctyltin diacetate, dioctyltin distearate, dioctyltin dilaurate, dioctyltin diethylmaleate, dioctyltin diisooctylate, dialkyltin alkoxides such as dibutyltin dimethoxide, dibutyltin diphenoxide, intermolecular coordination derivatives of dialkyltin such as dibutyltin diacetylacetonate, dibutyltin diethylacetoacetate , reaction products of a dialkyltin oxide such as dibutyltin oxide and dioctyltin oxide with an ester compound such as dioctyl phthalate, diisodecyl phthalate and methyl maleate, reaction products of a dialkyltin oxide such as dibutyltin bistriethoxysilicate and dioctyltin bistriethoxysilicate with a silicate compound, oxy derivatives (stannoxane compounds) of these dialkyltin compounds, stannous compounds such as stannous ocylate, stannous naphthanate, stannous stearate, stannous versatate, and reaction products and mixtures of these with an amine compound such as laurylamine, which will be described later; monobutyltin compounds such as monobutyltin trisoctoate and monobutyltin triisopropoxide, monooctyltin compounds, monoalkyl tins; titanate esters such as tetrabutyl titanate, tetrapropyl titanate, tetra(2-ethylhexyl)titanate and isopropoxytitanium bis(ethylacetoacetate); organoaluminum compounds such as aluminum trisacetylacetonate and aluminum trisethylacetoacetate and diisopropoxyaluminum ethylacetoacetate; carboxylic acid (e.g. 2-ethylhexanoic acid, neodecanoic acid, versatic acid, oleic acid, and naphthenic acid) metal salts such as bismuth carbonate, iron carbonate, titanium carbonate, lead carbonate, vanadium carbonate, zirconium carbonate, calcium carbonate, potassium carbonate, barium carbonate, manganese carbonate, cerium carbonate, nickel carbonate, cobalt carbonate, zinc carbonate and aluminum carbonate, and reaction products and mixtures of these with an amine compound such as laurylamine, which will be described later; chelate compounds such as zirconium tetraacetylacetonate, zirconium tributoxyacetylacetonate, dibutoxyzirconium diacetylacetonate, zirconium acetylacetonate-bis(ethylacetoacetate) and titanium tetraacetylacetonate; aliphatic primary amines such as methylamine, ethylamine, propylamine, isopropylamine, butylamine, amylamine, hexylamine, octylamine, 2-ethylhexylamine, nonylamine, decylamine, laurylamine, pentadecylamine, cetylamine, stearylamine and cyclohexylamine; aliphatic secondary amines such as dimethylamine, diethylamine, dipropylamine, diisopropylamine, dibutylamine, diamylamine, dioctylamine, di(2-ethylhexyl) amine, didecylamine, dilaurylamine, dicetylamine, distearylamine, methylstearylamine, ethylstearylamine and butylstearylamine; aliphatic tertiary amines such as tiramylamine, trihexylamine and trioctylamine; aliphatic unsaturated amines such as triallyamine and oleylamine; aromatic amines such as laurylaniline, stearylaniline, and triphenylamine; other amines, that is amine compounds such as monoethanolamine, diethanolamine, triethanolamine, diethylenetriamine, triethylenetetramine, oleylamine, cyclohexylamine, benzylamine, diethylaminopropylamine, xylylenediamine, ethylenediamine, hexamethylenediamine, triethylenediamine, guanidine, diphenylguanidine, 2,4,6-tris(dimethylaminomethyl)phenol, morpholine, N-methylmorpholine, 2-ethyl-4-methylimidazole and 1,8-diazabicyclo(5,4,0)undecene-7 (DBU), and salts of these amine compounds and carboxylic acids etc.; reaction products and mixtures of an amine compound and an organic tin compound such as reaction products or mixtures of laurylamine and tin octylate; low molecular weight polyamide resins obtained from excess polyamines and polybasic acids; reaction products of excess polyamines and epoxy compounds; and γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, N-(β-aminoethyl)aminopropyltrimethoxysilane, N-(β-aminoethyl)aminopropylmethyldimethoxysilane, N-(β-aminoethyl)aminopropyltriethoxysilane, N-(β-aminoethyl)aminopropylmethyldithoxysilane, N-(β-aminoethyl)aminopropyltriisopropoxysilane, γ-ureidopropyltrimethoxysilane, N-phenyl-γ-aminopropyltrimethoxysilane, N-benzyl-γ-aminopropyltrimethoxysilane, and N-vinylbnezyl-γ-aminopropyltriethoxysilane. Further, examples of the catalysts may include modified derivatives of the above-mentioned compounds such as amino-modified silyl polymers, silylated aminopolymers, unsaturated aminosilane complexes, amino group-containing silane coupling agents such as phenylamino-long chain alkylsilane and aminosilylated silicones; fatty acids such as versatic acid, organic acid-type phosphate ester compounds **as** acidic catalysts, basic catalysts, and the like conventionally known silanol condensation catalysts.

Examples of the organic acid-type phosphate ester compound, as an acidic catalyst, may include (CH₃O) ₂-P (=O) (-OH) , (CH₃O)-P(=O)(-OH)₂, (C₂H₅O)₂-P(=O)(-OH), (C₂H₅O)-P(=O)(-OH)₂, (C₃H₇O) ₂-P (=O) (-OH), (C₃H₇O)-P(=O)(OH)₂, (C₄H₉O)₂-P(=O)(-OH), (C₄H₉O)-P(=O)(-OH)₂, (C₈H₁₇O)₂-P(=O) (-OH), (C₈H₁₇O)-P(=O) (-OH)₂, (C₁₀H₂₁O) ₂-P (=O) (-OH), (C₁₀H₂₁O) -P (=O) (-OH)₂, (C₁₃H₂₇O)₂-P(=O)(-OH), (C₁₃H₂₇O)-P(=O)(-OH)₂, (C₁₆H₃₃O)₂-P(=O)(-OH), (C₁₆H₃₃O)-P(=O)(-OH)₂, (HO-C₆H₁₂O)₂-P(=O)(-OH), (HO-C₆H₁₂O)-P(=O)(-OH)₂, (HO-C₈H₁₆O)-P(=O)(-OH), (HO-C₈H₁₆O)-P(=O)(-OH)₂, [(CH₂OH)(CHOH)O]₂-P(=O)(-OH), [(CH₂OH)(CHOH) O]-P(=O)(-OH)₂, [(CH₂OH)(CHOH)C₂H₄O]₂-P(=O)(-OH), and
[(CH₂OH)(CHOH) C₂H₄O] -P (=O) (-OH)₂, without any purpose of particular restriction.

The combination systems of these organic acids and amines are preferable since the catalytic activity becomes high and therefore the use amount can be saved. Among the combination systems of the organic acids and amines, a combination of an acidic phosphate ester with an amine and a combination of an organic carboxylic acid with an amine; particularly a combination of an organic acid-type phosphate ester with an amine and a combination of an aliphatic carboxylic acid with an amine are more preferable in terms of the higher catalytic activity and quick curability.

These catalysts may be used alone or two or more of them may be used in combination. The addition amount of the condensation catalyst is preferably in a range of 0.01 to 20 parts (parts by weight, hereinafter the same) and more preferably in a range of 0.5 to 5 parts per 100 parts of the polymer having a crosslinkable silyl group. If the addition amount of the silanol condensation catalyst is lower than the above-mentioned range, the curing rate may be retarded in some cases and it may be difficult to promote the curing reaction sufficiently. On the other hand, the addition amount of the silanol condensation catalyst exceeding the above-mentioned range is unfavorable, since heat generation and foaming occurs locally at the time of curing to make it difficult to obtain a good cured product and also the pot-life becomes too short to exhibit good workability. In addition, although it is not particularly limited, a tin curing catalyst may exhibit a preferable effect since it can make it easy to control the curability.

Although it is not particularly limited, in the case of obtaining the following one package composition, in terms of the curing rate and the storage stability of the composition, tin (IV) is preferable for the tin curing catalyst, however a combination of tin (II) with an organic amine or a tin-free compound is also usable.

Further, although it is not particularly limited, in the case of using the composition of the invention for a sealant for a siding board, regardless of being one-component or two-pack type, tin (IV) is preferable since, for example, use of tin (IV) makes it easy to moderate the stress of the cured product and thus causes no damage to the adherend and also suppresses peeling at the adhesion interface.

In recent years, environmental issue has been brought into focus and use of the tin catalyst tends to be avoided, in such a case, a tin-free catalyst, e.g. bismuth carboxylate and titanium carboxylate, may be selected.

In the curable composition of the invention, to further increase the activity of the condensation catalyst, similarly to the amine compound, it is also possible to use the above-mentioned amino group-containing silane coupling agent as a promoter. The amino group-containing silane coupling agent is a compound having a group containing a silicon atom to which a hydrolyzable group is bonded (hereinafter, referred to as hydrolyzable silyl group) and an amino group. Examples of the hydrolyzable group may be those exemplified above and methoxy, ethoxy and the like groups are preferable in terms of the hydrolysis rate. The number of the hydrolyzable group is preferably two or higher and particularly preferably three or higher.

The addition amount of the amine compound is preferably about 0.01 to 50 parts by weight and more preferably 0.1 to 20 parts by weight per 100 parts of the polymer having a crosslinkable silyl group. If the addition amount of the amine compound is lower than 0.01 parts by weight, the curing rate may be possibly retarded and the curing reaction hardly proceed sufficiently in some cases. On the other hand, the addition amount of the amine compound exceeding 30 parts by weight is unfavorable, since the pot-life is too shortened to exhibit good workability in some cases.

These amine compounds may be used alone or two or more of them may be used as a mixture.

Further, a silicon compound having no amino group or silanol group may be added as a promoter. Examples of the silane compound are not particularly limited and phenyltrimethoxysilane, phenylmethyldimethoxysilane, phenyldimethylmethoxysilane, diphenyldimethoxysilane, diphenyldiethoxysilane **and** triphenylmethoxysilane are preferable. Particularly, diphenyldimethoxysilane and diphenyldiethoxysilane are most preferable since they are che**a**p and easily available.

The addition amount of the silicon compound is preferably about 0.01 to 20 parts by weight and more preferably 0.1 to 10 parts by weight per 100 parts of the polymer having a crosslinkable silyl group. If the addition amount of the silicon compound is lower than the above-mentioned range, the effect of accelerating the curing reaction may be possibly lowered. On the other hand, if the addition amount of the silicon compound is higher than the above-mentioned range, the hardness and tensile strength of the cured product may be possibly lowered.

The type and the addition amount of the curing catalyst and curing agent make it possible to control the curability and mechanical property in the invention in accordance with the uses and purposes. Further, the type and the addition amount of the curing catalyst and curing agent may be changed in accordance with reactivity of the silyl group of the polymer having a crosslinkable silyl group and in the case where the reactivity is high, curing can be carried out sufficiently with an amount as small as 0.01 to 1 part.

The type and the addition amount of the curing catalyst and curing agent may be selected in accordance with the type of Y and the number for a in the vinyl polymer of the invention and thus the curability **and** mechanical property in the invention may be controlled in accordance with the uses and purposes. In the case where Y is an alkoxy group, the reactivity is higher as the number of carbon atoms is low. On the other hand, the number for a is higher, the reactivity is higher and therefore curing can be carried out sufficiently with a small addition amount.

### Curing catalyst/curing agent for vinyl polymer (II) having at least one crosslinkable alkenyl group

In the case of crosslinking using an alkenyl group, although not being particularly limited, it is preferable to carry out crosslinking by hydrosilylation reaction using a hydrosilyl group-containing compound as a curing agent and a hydrosilylation catalyst.

The hydrosilyl group-containing compound is not particularly limited if it can be cured by crosslinking with the alkenyl group-containing polymer and various kinds of hydrosilyl group-containing compounds may be used. For example, linear polysiloxanes represented by the general formula (38) or (39) may be used:

R⁵¹₃SiO-[Si(R⁵¹)₂O]ₐ-[Si(H)(R⁵²)O]_{b}-[Si(R⁵²)(R⁵³)O]_{c}-SiR⁵¹₃ (38)

HR⁵¹₂SiO-[Si(R⁵¹)₂O]ₐ-[Si(H)(R⁵²)O]_{b}-[Si(R⁵²)(R⁵³)O]_{c}-SiR⁵¹₂H (39)

(wherein R⁵¹ and R⁵² each is an alkyl group having 1 to 6 carbon atoms or a phenyl group; R⁵³ is an alkyl group or an aralkyl group having 1 to 10 carbon atoms; a is an integer satisfying 0 ≤ a ≤ 100; b is an integer satisfying 2 ≤ b ≤ 100; and c is an integer satisfying 0 ≤ c ≤ 100.)

These compounds may be used alone or two or more of them may be used as a mixture. In terms of the compatibility with the (meth)acrylic polymer, the following linear siloxanes and cyclic siloxanes having a phenyl group and represented by the general formulae (41) and (42) are preferable:

(CH₃)₃SiO-[Si(H)(CH₃)O]_{g}-[Si(C₆H₅) ₂O]ₕ-Si(CH₃)₃ (41)

(CH₃)₃SiO-[Si(H)(CH₃)O]_{g}-[Si(CH₃){CH₂C(H)(R⁵⁷)(C₆H₅)}O]ₕ -Si(CH₃)₃ (42)

(wherein R⁵⁷ is a hydrogen atom or a methyl group; g is an integer satisfying 2 ≤ g ≤ 100; h is an integer satisfying 0 ≤ h ≤ 100; and C₆H₅ is a phenyl group).

The hydrosilyl group-containing compound may also be a compound obtained by addition reaction of a hydrosilyl group-containing compound represented by the general formulae (38) to (44) with a low molecular compound having two alkenyl groups in a molecule in a manner where some of hydrosilyl groups remain even after reaction. Various kinds of compounds may be used as the compound having two alkenyl groups in a molecule. Examples may include hydrocarbon compounds such as 1,4-pentadiene, 1, 5-hexadiene, 1,6-heptadiene, 1,7-octadiene, 1,8-nonadiene, and 1,9-decadiene; ether compounds such as 0,0'-diallylbisphenol A and 3,3'-diallylbisphenl A; ester compounds such as diallyl phthalate, diallyl isophthalate, triallyl trimellitate, and tetraallyl pyromellitate; and carbonate compounds such as diethylene glycol diallyl carbonate.

The compound can be obtained by slowly adding the above-exemplified alkenyl group-containing compound dropwise to an excess amount of the hydrosilyl group-containing compound represented by the general formulae (38) to (40) described above in the presence of a hydrosilylation catalyst.

The polymer and the curing agent may be mixed at an optional ratio and in terms of curability, the mole ratio of an alkenyl group to a hydrosilyl group is preferably in a range from 5 to 0.2 and more preferably in a range from 2.5 to 0.4. If the mole ratio is 5 or more, the curing does not proceed sufficiently and then only a sticky cured product with low strength is obtained. On the other hand, if the mole ratio is lower than 0.2, since a large quantity of active hydrosilyl groups remains in the cured product even after curing, cracks and voids are formed to make it impossible to obtain a cured product with good evenness and high strength.

The curing reaction of the polymer and the curing agent proceeds after two components are mixed together followed by heating and to promote the reaction more quickly, a hydrosilylation catalyst may be added. The hydrosilylation catalyst is not particularly limited and examples may include radical initiators such as organic peroxides and azo compounds, and transition metal catalysts.

The radical initiators are not particularly limited and examples may include dialkyl peroxides such as di-t-butyl peroxide, 2,5-dimethyl-2,5-di(tert-butylperoxy)hexane, 2,5-dimethyl-2,5-di(t-butylperoxy)-3-hexine, dicumyl peroxide, t-butyl cumyl peroxide, and α,α'-bis(t-butylperoxy)isopropylbenzene; diacyl peroxides such as benzoyl peroxide, p-chlorobenzoyl peroxide, m-chlorobenzoyl peroxide, 2,4-dichlorobenzoyl peroxide, and lauroyl peroxide; peroxyesters such as tert-butyl perbenzoate; peroxydicarbonates such as diisopropyl perdicarbonate and di-2-ethylhexyl perdicarbonate; peroxyketals such as 1,1-di(t-butylperoxy)cyclohexane and 1,1-di(t-butylperoxy)-3,3,5-trimethylcyclohexane.

Further, the transition metal catalysts are not particularly limited and examples may include simple substance platinum, solid platinum dispersed on a support such as alumina, silica or carbon black, chloroplatinic acid, chloroplatinic acid complexes with alcohols, aldehydes **and** ketones, platinum-olefin complexes, and platinum(0)-divinyltetramethyldisiloxane complex. Examples of the catalysts other than platinum compounds may include RhCl(PPh₃)₃, RhCl₃, RuCl₃, IrCl₃, FeCl₃, AlCl₃, PdCl₂-H₂O, NiCl₂ **and** TiCl₄. These catalysts may be used alone or two or more of them may be used in combination. The amount of the catalyst is not particularly limited and the amount is preferably in a range from 10⁻¹ to 10⁻⁸ mol and more preferably in a range from 10⁻³ to 10⁻⁶ mol relative to 1 mol of an alkenyl group of the (meth) acrylic polymer (I). If the amount is less than 10⁻⁸ mol, curing does not proceed sufficiently. On the other hand, it is preferable not to use 10⁻¹ mol or more of the hydrosilylation catalyst, since the catalyst is expensive.

A curing modifier may be added to keep the balance between storage stability and curability. Compounds usable as the curing modifier are ones having an aliphatic unsaturated bond. Examples may include acetylene alcohols and examples of the acetylene alcohols capable of keeping good balance between storage stability and curability may include 2-phenyl-3-butyne-2-ol, 1-ethinyl-1-cyclohexanol, 3,5-dimethyl-1-hexyne-3-ol, 3-methyl-1-hexyne-3-ol, 3-ethyl-1-pentyne-3-ol, 2-methyl-3-butyne-2-ol **and** 3-methyl-1-pentyne-3-ol.

Examples of the compounds having an aliphatic unsaturated bond for improving the storage stability at a high temperature, other than the acetylene alcohols, may include ene-ine compounds, silane compounds, polysiloxane compounds, olefin compounds, aliphatic carboxylic acid esters of an olefin type alcohol such as vinyl acetate, tetravinylsiloxane ring bodies, nitriles having an aliphatic unsaturated bond such as 2-pentenenitrile, alkylacetylene dicarboxylates, maleic acid esters **and** diorgano fumarates.

The use amount of the curing modifier may be optionally selected and it is preferably in a range from 2 to 10,000 mol equivalent weight relative to the above-mentioned hydrosilylation catalyst. The hydrosilylation catalysts may be used alone or two or more of them may be used in combination.

The curing temperature is not particularly limited and it is generally 0 to 200°C, preferably 30 to 150°C, and even more preferably 80 to 150°C.

### <Dehydration agent>

During storage, the curable composition sometimes becomes sticky and gelled due to the moisture etc. entrained at the time of production to result in deterioration of the workability at the time of use. Further, due to the increased viscosity and gelation of the curable composition, the physical properties of the cured product obtained using the curable composition are deteriorated after curing and thus there occurs a problem of deterioration of the sealing property etc., which is the aim of the invention. That is, the curable composition sometimes has a problem in the storage stability.

To improve the storage stability of the curable composition, there is a method for decreasing the moisture content of the curable composition by azeotropic dehydration. For example, there is a method that about 0.1 to 10 parts by weight of a volatile organic compound having a very low azeotropic boiling point to water is added to and evenly mixed with water in order to take out an azeotropic composition of water-organic compound with sucking by a vacuum pump under a condition of heating at about 50 to 90°C. Examples of the volatile organic compound having a very low azeotropic boiling point to water are halides such as methylene chloride, chloroform, carbon tetrachloride and trichloroethylene; alcohols such as ethanol, allyl alcohol, 1-propanol and butanol; esters such as ethyl acetate and methyl propionate; ketones such as methyl ethyl ketone and 3-methyl-2-butanone; ethers such as ethyl ether and isopropyl ether; hydrocarbons such as benzene, toluene, xylene and hexane. However, since this method involves an evaporation step, it is required to add other volatile addition agents or carry out a treatment and/or recovery etc. of the volatile organic compound used for azeotropic boiling. Therefore, it is sometimes more preferable to add the following dehydration agent in some cases.

As described above, the curable composition of the invention may contain the dehydration agent for removing moisture from the composition in order to improve the storage stability. Examples of the dehydration agent are, for example, inorganic solids such as phosphorus pentoxide, sodium hydrogen carbonate, sodium sulfate (anhydrous sodium sulfate) and molecular sieves. These solid dehydration agents may be used, however after addition of the agent, the pH of the composition sometimes tends to be acidic or basic to cause condensation, resulting in adverse deterioration of the storage stability in some cases or deterioration of the workability because of requirement for solid removal thereafter. Therefore, the following liquid-state hydrolyzable ester compound is preferable. Examples of the hydrolyzable ester compound are selected from the group consisting of trialkyl orthoformate such as trimethyl orthoformate, triethyl orthoformate, tripropyl orthoformate and tributyl orthoformate; trialkyl orthoacetate such as trimethyl orthoacetate, triethyl orthoacetate, tripropyl orthoacetate and tributyl orthoacetate.

Further, as another hydrolyzable ester compound, there may be mentioned a hydrolyzable organic silicon compound represented by the formula R₄₋ₙSiYₙ (wherein Y represents a hydrolyzable group; R represents an organic group which may or may not have a functional group; and n is an integer of 1 to 4 and preferably 3 or 4). Specific examples of the compound are vinyltrimethoxysilane, methyltrimethoxysilane, methyltriethoxysilane, ethyltriethoxysilane, phenyltriethoxysilane, methyltriacetoxysilane, tetramethyl orthosilicate (tetramethoxysilane or methyl silicate), tetraethyl orthosilicate (tetraethoxysilane or ethyl silicate), tetrapropyl orthosilicate, tetrabutyl orthosilicate and the like silane compounds and partially hydrolyzed condensates thereof ; γ-aminopropyltrimethoxysilane, γ-glycidoxypropyltrimethoxsilane, N-(β-aminoethyl)-γ-aminopropyltrimethoxysilane, γ-acryloxypropyltrimethoxysilane, γ-methacryloxypropyltrimethoxysilane, γ-glycidoxypropyltrimethoxysilane, γ-mercaptopropyltrimethoxysilane, N-(β-aminoethyl)-γ-aminopropylmethyldimethoxysilane **as** silane coupling agents and partially hydrolyzed condensates thereof. These compounds may be used alone or two or more of them may be used in combination.

The use amount of the storage stability-improving agent is 0.1 to 30 parts by weight, preferably 0.3 to 20 parts by weight, and more preferably 0.5 to 10 parts by weight, per 100 parts by weight of the vinyl polymer.

At the time of adding the storage stability-improving agent, it is preferable to add the agent after the curable composition is dehydrated, however it may be added in the state the composition contains moisture as it does.

### <Adhesion promoter>

The curable composition of the invention may contain a silane coupling agent and an adhesion promoter other than the silane coupling agent. If adhesion promoter is added, the risk of peeling off of a sealant from an adherend such as a siding board may be decreased due to alteration of jointing width or the like by external power. In some cases, a primer for improving the adhesiveness is not required so as to simplify the processing work. Examples of the silane coupling agent are silane coupling agents having a functional group such as an amino group, mercapto group, epoxy group, carboxyl group, vinyl group, isocyanato group, isocyanurate group, and a halogen and specific examples of them are isocyanato group-containing silanes such as γ-isocyanateopropyltrimethoxysilane, γ-isocyanateopropyltriethoxysilane, γ-isocyanateopropylmethyldiethoxysilane, and γ-isocyanateopropylmethyldimethoxysilane; amino group-containing silanes such as γ-aminopropyltrimethoxysilane, γ-aminopropyltriethoxysilane, γ-aminopropyltripropoxysilane, γ-aminopropylmethyldiimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-aminoethyl)aminopropyltriisopropoxysilane, γ-ureidopropyltrimethoxysilane, N-phenyl-γ-aminopropyltrimethoxysialne, N-benzyl-γ-aminopropyltrimethoxysilane and N-vinylbenzyl-γ-aminopropyltriethoxysilane; mercapto group-containing silanes such as γ-mercaptopropyltrimethoxysilane, γ-mercaptopropyltriethoxysilane, γ-mercaptopropylmethyldimethoxysilane and γ-mercaptopropylmethyldiethoxysilane; epoxy group-containing silanes such as γ-glycidoxypropyltrimethoxysilane, γ-glycidoxypropyltriethoxysilane, γ-glycidoxypropylmethyldimethoxysilane, β-(3,4-epcxycyclohexyl)ethyltrimethoxysilane and β-(3,4-epoxycyclohexyl) ethyltriethoxysilane; carboxysilanes such as β-carboxyethyltriethoxysilane, β-carboxyethylphenylbis(2-methoxyethoxy)silane and N-β-(carboxymethyl)aminoethyl-γ-aminopropyltrimethoxysilane ; vinyl unsaturated group-containing silanes such as vinyltrimethoxysilane, vinyltriethoxysilane, γ-methacryloyloxypropylmethyldimethoxysilane and γ-acryloyloxypropylmethyltriethoxysilane; halogen-containing silanes such as γ-chloropropyltrimethoxysilane; isocyanurate silanes such as tris(trimethoxysilyl)isocyanurate; polysulfanes such as bis(3-triethoxysilylpropyl)tetrasulfane. Further, reaction products of the above-mentioned amino group-containing silane and epoxy group-containing silane, reaction products of an amino group-containing silane and an acryloyloxy group-containing silane, and reaction products of an amino group-containing silane and an isocyanato group-containing silane are also usable. Further, derivatives obtained by modifying the above-mentioned silane, for example, amino-modified silyl polymers, silylated aminopolymers, unsaturated aminosilane complexes, phenylamino long-chain alkylsilanes, amino-silylated silicones, block isocyanato silanes, silylated polyesters **are** usable as the silane coupling agent. Further, ketimine compounds obtained by reaction of the above-mentioned amino group-containing silane and a ketone compound such as methyl isobutyl ketone, **are** usable as the silane coupling agent.

In the invention, the silane coupling agent is generally used in a range from 0.1 to 20 parts per 100 parts of the polymer having a crosslinkable silyl group. The silane coupling agent is particularly preferably used in a range from 0.5 to 10 parts. The effect of the addition of the silane coupling agent to the curable composition of the invention is a remarkable adhesiveness improvement in the case of using the curable composition for various kinds of adherends, that is inorganic substrates such as glass, aluminum, stainless steel, zinc, copper and mortar and organic substrates such as vinyl chloride, acrylic compounds, polyesters, polyethylene, polypropylene and polycarbonate under non-primer condition or primer treatment condition. In the case of use under non-primer condition, the effect of improving the adhesiveness to various kinds of adherends is particularly substantial.

Specific examples of the adhesion promoter other than the silane coupling agents are not particularly limited and may include epoxy resin, phenol resin, linear or branched block copolymers such as polystyrene-polybutadiene-polystyrene, polystyrene-polyisoprene-polystyrene, polystyrene-polyisoprene/butadiene copolymer-polystyrene, polystyrene-polyethylene/propylene copolymer-polystyrene, polystyrene-polyethylene/butylene copolymer-polystyrene and polystyrene-polyisobutene-polystyrene, alkyl sulfonate esters, sulfur, alkyl titanates **and** aromatic polyisocyanates. The epoxy resin may be used being reacted with the amino group-containing silane.

The above-mentioned adhesion promoters may be used alone or two or more of them may be used as a mixture. The adhesiveness to the adherend may be improved by addition of the adhesion promoters. Although it is not particularly limited, to improve the adhesiveness, particularly the adhesiveness to a metal face such as an oil pan, it is preferable to use 0.1 to 20 parts by weight of the silane coupling agent among the above-mentioned adhesion promoters in combination.

The type and the addition amount of the adhesion promoter can be selected in accordance with the type of Y and the number for a of the vinyl polymer of the invention, and the curability and the mechanical property etc. of the invention may be controlled in accordance with the purposes and uses. The above-mentioned selection requires attention since it affects the curability and elongation in particular.

### <Plasticizer>

Various kinds of plasticizers may be used for the curable composition of the invention according to need. If a plasticizer is used in combination with a filler, which will be described later, the elongation of the cured product can be increased and a large amount of filler can be advantageously added, however it is not necessarily indispensable agent. The plasticizers are not particularly limited and may be selected from the following in accordance with the purpose such as adjustment of the physical property **or** adjustment of the material state: phthalic acid esters such as dibutyl phthalate, diheptyl phthalate, di(2-ethylhexyl)phthalate, diisodecyl phthalate, butyl benzyl phthalate; non-aromatic dibasic acid esters such as dioctyl adipate, dioctyl sebacate, dibutyl sebacate and isodecyl succinate; aliphatic esters such as butyl oleate and methyl acetyl ricinoleate; polyalkylene glycol esters such as diethylene glycol dibenzoate, triethylene glycol dibenzoate and pentaerythritol ester; phosphoric acid esters such as tricresyl phosphate and tributyl phosphate; trimellitic acid esters; polystyrenes such as polystyrene and poly-α-methylstyrene; polybutadiene, polybutene, polyisobutylene, butadiene-acrylonitrile, polychloroprene; chloro paraffins; hydrocarbon oils such as alkyl diphenyl and partially-hydrogenated tarphenyl; process oils; polyether polyols such as polyethylene glycol, polypropylene glycol, ethylene oxide-propylene oxide copolymer and polytetramethylene glycol, polyether alkyl-derivatives obtained by converting the hydroxyl groups at one terminus, both termini or all termini of the above-mentioned polyether polyols to alkyl ester group or alkyl ether group etc. ; epoxy group-containing plasticizers such as epoxylated soybean oil, benzyl epoxystearate and E-PS; polyester plasticizers obtained from a dibasic acid such as sebacic acid, adipic acid, azelaic acid and phthalic acid and a dihydric alcohol such as ethylene glycol, diethylene glycol, triethylene glycol, propylene glycol and dipropylene glycol; vinyl polymers obtained by polymerizing vinyl monomers by various methods, e.g. acrylic plasticizers.

Among them, a polymer plasticizer with a number average molecular weight of 500 to 15,000 is capable of adjusting the viscosity and slump property of the curable composition and the mechanical properties such as tensile strength and elongation of the cured product obtained by curing the composition while being added to the composition, and as compared with the case a low molecular plasticizer, that is, a plasticizer containing no polymer component in the molecule, is used, the polymer plasticizer keeps the initial physical properties for a long duration and improves the quick drying property (also called as coatability) in the case where an alkyd paint is applied to the cured product. Additionally, although it is not limited, the polymer plasticizer may or may not have functional groups.

The number average molecular weight of the above-mentioned polymer plasticizer is 500 to 15, 000 and it is preferably 800 to 10,000 and more preferably 1,000 to 8,000. If the molecular weight is too low, the plasticizer is eluted by heat or rain fall with the lapse of time or the initial physical properties cannot be maintained for a long duration and the alkyd coatability improvement becomes impossible. Additionally, if the molecular weight is too high, the viscosity becomes high to worsen the workability.

Among the exemplified polymer plasticizers, the polyether plasticizers and (meth) acrylic polymer plasticizers are preferable in terms of the high elongation and high weather resistance. A synthetic method of the acrylic polymers may be, for example, conventional methods for carrying out solution polymerization and non-solvent acrylic polymer production methods. The latter acrylic plasticizer is produced by high temperature continuous polymerization manner using no solvent or chain transfer agent (reference to U.S. Patent No. 4414370, Japanese Kokai Publication Sho-59-6207, Japanese Kokoku Publication Hei-5-58005, Japanese Kokai Publication Hei-1-313522, U.S. Patent No. 5010166) and these plasticizers are more preferable for the purposes of the invention. Examples of them are not particularly limited and may include, for example, ARUFON UP series (UP-1000, UP-1110, UP-2000, and UP-2130 (called as SGO) manufactured by Toagosei Co., Ltd. (reference to Bosui Journal (Water-proof property Journal), June 2002). Living radical polymerization method can be exemplified as another synthesis method. According to this method, a preferable polymer with a narrow molecular weight distribution and a low viscosity can be produced and therefore this method is preferable and an atom transfer radical polymerization method is more preferable. However, the methods are not limited to these exemplified methods.

The molecular weight distribution of the polymer plasticizer is not particularly limited, and in terms of the viscosity, it is preferable to be narrow and it is preferably lower than 1.8. It is more preferably 1.7 or lower, further preferably 1.6 or lower, furthermore preferably 1.5 or lower, even more preferably 1.4 or lower, and most preferably 1.3 or lower.

In terms of the viscosity, the plasticizer preferably has a branched structure in the main chain for the same molecular weight since the viscosity is lowered more. The above-mentioned high temperature continuous polymerization method is an example of methods which give such a plasticizer.

The plasticizers including the above-mentioned polymer plasticizers may be used alone or two or more of them may be used in combination, however addition is not necessarily indispensable. Further, if necessary, the polymer plasticizer may be used in combination with a low molecular weight plasticizer to an extent that the physical property is not adversely affected. Further, for example, in the case where the composition contains the vinyl polymer of the invention and a polyether polymer as one optional polymer component having a crosslinkable functional group, phthalic acid esters and acrylic polymers are particularly preferable in terms of the compatibility of the mixture.

The plasticizer may be added at the time of polymer production.

When the plasticizer is used, the use amount of the plasticizer is not particularly limited and is 5 to 150 parts by weight, preferably 10 to 120 parts by weight, and more preferably 20 to 100 parts by weight, per 100 parts of the polymer having a crosslinkable silyl group. If it is lower than 5 parts by weight, the effect as a plasticizer is not efficiently caused and if it exceeds 150 parts by weight, the mechanical strength of the cured product tends to become insufficient.

### <Filler>

The curable composition of the invention may contain various kinds of fillers according to need. The fillers are not particularly limited and may include reinforcing fillers such as wood flour, pulp, cotton chips, asbestos, glass fiber, carbon fiber, mica, walnut shell flour, rice hull flour, graphite, china clay, kaolin, silica (e.g. fumed silica, precipitated silica, crystalline silica, fused silica, dolomite, silicic anhydride, hydrous silicic acid and amorphous spherical silica), and carbon black; fillers such as ground calcium carbonate, precipitated calcium carbonate, magnesium carbonate, china clay, calcined clay, clay, talc, titanium oxide, bentonite, organic bentonite, ferric oxide, aluminum fine powder, flint powder, zinc oxide, activated zinc white, zinc powder, zinc carbonate, shirasu balloon, glass microballoon, organic microballoon of a phenol resin and/or a vinylidene chloride resin, resin powder such as PVC powder and PMMA powder; fibrous fillers such as asbestos, glass fibers and glass filaments, carbon fibers, Kevlar fibers and polyethylene fibers.

Preferable fillers among them are precipitated silica, fumed silica, crystalline silica, fused silica, dolomite, carbon black, calcium carbonate, titanium oxide **and** talc.

In the case where it is aimed to obtain the cured product with high transparency or strength by adding the fillers, the filler to be added may be selected from mainly fumed silica, precipitated silica, silicic anhydride, hydrous silicic acid, carbon black, surface treated fine calcium carbonate, crystalline silica, fused silica, calcined clay, clay and activated zinc white. These fillers are suitable for a sealant for transparent construction and adhesive for transparent DIY. Above all, ultrafine powder silica with a specific surface area of 10 m²/g or higher, generally 50 to 400 m²/g and preferably about 100 to 300 m²/g (measured by BET absorption method) is preferable. Further, silica previously surface-treated for hydrophobic treatment with an organosilicon compound such as an organosilane, an organosilazane, and a diorganocyclopolysiloxane is more preferable.

Specific examples of the silica filler with high reinforcing property are not particularly limited and may include Aerosil (fumed silica) manufactured by Nippon Aerosil Co., Ltd., Nipsil (precipitated silica) manufactured by Nippon Silica Industrial. Silica with an average particle diameter of 1 nm to 30 µm can be used. With respect to fumed silica, if fumed silica with an average particle diameter of primary particles in a range from 1 nm to 50 nm is used, the reinforcing effect is particularly efficient and therefore it is more preferable. In this connection, the average particle diameter in the invention is measured by sieving method. In particular, the average particle diameter is measured by classifying a powder by sieves (micro sieves ) with various mesh sizes and measuring the value (weight average particle diameter) corresponding to the mesh size of the sieve through which 50% by weight of the total amount of the powder subjected to the measurement is passed. The composition reinforced by the filler is excellent in the prompt fixation and suitable for automotive glass grading adhesion.

The transparency can also be obtained by using a resin powder such as PMMA powder as the filler.

In particular when low-strength, high-elongation cured products are to be obtained using such fillers, one or more fillers selected from among titanium oxide, calcium carbonate, talc, ferric oxide, zinc oxide **and** shirasu balloons may be added. Generally, calcium carbonate, when small in specific surface area, may be insufficiently effective at improving the strength at break, elongation at break, adhesion and weather-resistant adhesion of cured products. As the specific surface area value increases, the effects of improving the strength at break, elongation at break, adhesion and weather-resistant adhesion become better. As the calcium carbonate, cubic, noncubic **and** amorphous shape ones may be used.

Furthermore, calcium carbonate is more preferably surface-treated with a surface treating agent. When surface-treated calcium carbonate is used, it is expected that the workability of the composition of the invention be improved and the effects of improving the adhesion and weather-resistant adhesion of the curable composition be more improved as compared with the use of non-surface-treated calcium carbonate. Useful as the surface treating agent are organic substances such as fatty acids, fatty acid soaps and fatty acid esters, various surfactants, and various coupling agents such as silane coupling agents and titanate coupling agents. Specific examples include, but are not limited to, fatty acids such as caproic acid, caprylic acid, pelargonic acid, capric acid, undecanoic acid, lauric acid, myristic acid, palmitic acid, stearic acid, behenic acid and oleic acid, sodium, potassium and other salts of such fatty acids, and alkyl esters of such fatty acids. As specific examples of the surfactants, there may be mentioned sulfate ester type anionic surfactants such as polyoxyethylene alkyl ether sulfate esters and long-chain alcohol sulfate esters, and sodium, potassium and other salts thereof, sulfonic acid type anionic surfactants such as alkylbenzenesulfonic acids, alkylnaphthalenesulfonic acids, paraffinsulfonic acids, α-olefinsulfonic acids and alkylsulfosuccinic acid, and sodium, potassium and other salts thereof. In the surface treatment, the surface treating agent is used in an amount preferably within the range of 0.1 to 20% by weight, more preferably within the range of 1 to 5% by weight, relative to calcium carbonate. When the amount for treatment is smaller than 0.1% by weight, the effects of improving the workability, adhesion and weather-resistant adhesion may be insufficient and, when it exceeds 20% by weight, the storage stability of the curable composition may decrease.

When calcium carbonate is used in expectation of producing the effects of improving the thixotropic properties of the formulations and the strength at break, elongation at break, adhesion, weather-resistant adhesion of the cured product, in particular, precipitated calcium carbonate is preferably used, although this does not mean any particular restriction.

On the other hand, ground calcium carbonate is sometimes added for the purpose of reducing the viscosity of the formulations, increasing the weight thereof and reducing the cost, for example. When ground calcium carbonate is used, such species as mentioned below can be used.

Ground calcium carbonate is prepared from natural chalk, marble **or** limestone by mechanical grinding/processing. The method of grinding includes the dry method and wet method. Wet ground products are unfavorable in many cases since they often deteriorate the storage stability of the curable composition of the invention. Upon classification, ground calcium carbonate gives various products differing in average particle size. In cases where the effects of improving the strength at break, elongation at break, adhesion and weather-resistant adhesion are expected, the specific surface area value is preferably not less than 1.5 m²/g and not more than 50 m²/g, more preferably not less than 2 m²/g and not more than 50 m²/g, still more preferably not less than 2.4 m²/g and not more than 50 m²/g, most preferably not less than 3 m²/g and not more than 50 m²/g, although this does not mean any particular restriction. When the specific surface area is smaller than 1.5 m²/g, those improving effects may be insufficient. Of course, the above does not apply to the cases where it is only intended to reduce the viscosity and/or increase the weight.

The specific surface area value is the measured value obtained by using, as the measurement method, the air permeation method (method for specific surface area determination based on the permeability of a powder-packed layer to air) carried out according to JIS K 5101. Preferred for use as the measuring instrument is a Shimadzu model SS-100 specific surface area measuring apparatus.

Those fillers may be used singly or two or more of them may be used in combination according to the intended purpose or necessity. For example, the combined use, according to need, of ground calcium carbonate having a specific surface area value of not smaller than 1.5 m²/g and precipitated calcium carbonate is fully expected to suppress the viscosity increase in the formulations to a moderate level and produce the effects of improving the strength at break, elongation at break, adhesion and weather-resistant adhesion of cured products, although this does not mean any particular restriction.

When a filler is used, the filler is preferably used in an amount within the range of 5 to 1,000 parts by weight, more preferably within the range of 20 to 500 parts by weight, particularly preferably within the range of 40 to 300 parts by weight, per 100 parts by weight of the crosslinkable silyl group-containing polymer. When the addition level is lower than 5 parts by weight, the effects of improving the strength at break, elongation at break, adhesion and weather-resistant adhesion may be insufficient and, when the amount exceeds 1,000 parts by weight, the workability of the curable composition may deteriorate. Those fillers may be used singly or two or more of them may be used in combination.

Here, addition of large **amount** of dolomite, carbon black, calcium carbonate, titanium oxide talc sometimes deteriorates the transparency of the present **inv**ention and results in producing an opaque cured product of the invention, and attentions are therefore required.

### <Hollow microsphere>

Furthermore, for the purpose of reducing the weight and cost without causing significant deteriorations in physical properties, hollow microspheres may be used in combination with such a reinforcing filler as mentioned above as long as the transparency does not deteriorate.

Such hollow microspheres (hereinafter referred to as "balloons") are not particularly restricted but include, for example, hollow spheres constituted of an inorganic or organic material and having a diameter of not greater than 1 mm, preferably not greater than 500 µm, and more preferably not greater than 200 µm, as described in "Kinosei Fira no Saishin Gijutsu (Latest Technology of Functional Fillers)" (CMC Publishing CO., LTD). In particular, hollow microspheres having a true specific gravity of not higher than 1.0 g/cm³ are preferably used and, more preferably, hollow microspheres having a true specific gravity of not higher than 0.5 g/cm³ are used.

The inorganic balloons include silicic balloons and non-silicic balloons. Examples of the silicic balloons are shirasu balloons, perlite, glass (silica) balloons **and** fly ash balloons, and examples of the non-silicic balloons are alumina balloons, zirconia balloons **and** carbon balloons. Commercially available as specific examples of such inorganic balloons are Idichi Kasei's Winlite and Sanki Kogyo Co., Ltd.'s Sankilite (shirasu balloons), FUJI SILYSIA CHEMICAL LTD.'s Fuji Balloon, Nippon Sheet Glass Co., Ltd.'s Calloon, Sumitomo 3M Limited's Cel-Star Z-28, Emerson & Cuming Company' s Micro Balloon, Pittsburgh Corning Corporation's Celamic Glassmodules and Sumitomo 3M Limited's Glass Bubbles, Asahi Glass Co., Ltd.' Q-Cel and Taiheiyo Cement Corporation's E-Spheres (glass (silica) balloons), Pfamarketing's Cerospheres and Fillite U.S.A.'s Fillite (fly ash balloons), Showa Denko K.K.'s BW (alumina balloons), Zircoa Inc.'s Hollow Zirconium Spheres (zirconia balloons), and Kureha Chemical Industry's Kurekasphere and General Technologies Inc.' Carbosphere (carbon balloons).

The organic balloons include thermosetting resin balloons and thermoplastic resin balloons. Examples of the thermosetting resin balloons are phenol balloons, epoxy balloons and urea balloons, and examples of the thermoplastic balloons are Saran balloons, polystyrene balloons, polymethacrylate balloons, polyvinyl alcohol balloons and styrene-acrylic type balloons. Crosslinked thermoplastic resin balloons can also be used. The balloons so referred to herein may be balloons after expansion or balloons produced by expansion following incorporation of a blowing agent-containing resin.

As specific examples of such organic balloons which are commercially available, there may be mentioned Union Carbide Corporation's Ucar and Phenolic Microballoons (phenol balloons), Emerson & Cuming Company's Eccospheres (epoxy balloons), Emerson & Cuming Company's Eccospheres VF-O (urea balloons), Dow Chemical Company's Saran Microspheres, Janan Fillite Co., Ltd.'s Expancel and Matsumoto Yushi Seiyaku Co., Ltd.' s Matsumoto Microspheres (Saran balloons), Arco Polymers Inc.'s Dylite Expandable Polystyrene and BASF-Wyandotte's Expandable Polystyrene Beads (polystyrene balloons), and JSR Corporation's SX863(P) (crosslinked styrene-acrylic balloons).

The above-mentioned balloon species may be used singly or two or more of them may be used in admixture. Furthermore, those balloons surface-treated with a fatty acid, a fatty acid ester, rosin, rosin acid lignin, a silane coupling agent, a titan coupling agent, an aluminum coupling agent **or** polypropylene glycol for improving the dispersibility and the workability of the formulations may also be used. These balloons are used for making the curable composition cotaining them lightweight for cost down, delustering the surface, optional designing by sputtering etc., without deteriorating the **imp**rovement in the workability such as antisagging property before curing and flexibility, expansion and strength after curing.

The balloon content is not particularly restricted but the balloons can be used preferably in an amount within the range from 0.1 to 50 parts and more preferably from 0.1 to 30 parts per 100 parts by weight of the crosslinkable silyl group-containing polymer. When this amount is smaller than 0.1 part, the weight-reducing effect is slight and, when it exceeds 50 parts, decreases in tensile strength, among the mechanical properties after curing of the balloon-containing formulations, may be observed in some instances. When the balloons have a specific gravity of not lower than 0.1, the amount is preferably 3 to 50 parts and more preferably 5 to 30 parts.

### <Physical property modifier>

In the curable composition of the invention, there may be incorporated a physical property modifier capable of adjusting the tensile properties of the resulting cured products, according to need.

The physical property modifiers are not particularly restricted but include, for example, alkylakoxysilanes such as methyltrimethoxysilane, dimethyldimethoxysilane, trimethylmethoxysilane and n-propyltrimethoxysilane; alkylisopropenoxysilanes such as dimethyldiisopropenoxysilane, methyltriisopropenoxysilane, γ-glycidoxypropylmethyldiisopropenoxysilane, functional group-containing alkoxysilanes such as γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-(β-aminoethyl)aminopropylmethyldimethoxysilane, γ-mercaptopropyltrimethoxysilane and γ-mercaptopropylmethyldimethoxysilane; silicone varnishes; polysiloxanes. By using such as a physical property modifier, it is possible to increase the hardness of the cured products after curing of the curable composition of the invention or decrease such hardness and attain extensibility. Such physical property modifiers as mentioned above may be used singly or two or more of them may be used in combination.

### <Silanol-containing compound>

A silanol-containing compound may optionally be added into the curable composition of the present invention for modifying the physical property of the cured product to be obtained. The term "silanol-containing compound" as used herein means a compound having one silanol group in a molecule and/or a compound capable of forming a compound having one silanol group in a molecule by a reaction with moisture. When these compounds are used, only one of the above two compounds may be used, or both of them may be used simultaneously.

The compounds having one silanol group in a molecule, which is one of the silanol-containing compounds, is not particularly restricted. Among others, there may be mentioned compounds which can be represented by the formula (R")₃SiOH (wherein R"s are the same or different kind of substituted or non-substituted alkyl or aryl group), for example, the following compounds:
(CH₃) ₃SiOH, (CH₃CH₂)₃SiOH, (CH₃CH₂CH₂)₃SiOH, (n-Bu)₃SiOH, (sec-Bu)₃SiOH, (t-Bu)₃SiOH, (t-Bu)Si(CH₃)₂OH, (C₅H₁₁)₃SiOH, (C₆H₁₃)₃SiOH, (C₆H₅)₃SiOH, (C₆H₅)₂Si(CH₃)OH, (C₆H₅)Si(CH₃)₂OH, (C₆H₅)₂Si(C₂H₅)OH, C₆H₅Si(C₂H₅)₂OH, C₆H₅CH₂Si (C₂H₅) ₂OH. C₁₀H₇Si (CH₃) ₂OH
(wherein C₆H₅ represents a phenyl group and C₁₀H₇ represents a naphthyl group). Among them, from the ready availability and effect viewpoint, (CH₃)₃SiOH preferred because **it is a** low-molecular-weig**h**t compound.

Flexibility of a cured product is given by a reaction of a compound having one silanol group in one molecule with a crosslinkable silyl group of the crosslinkable silyl group-containing polymer or a siloxane bond formed by crosslinking, to thereby reduce crosslinking points. Further, compositions low in surface tack and excellent in dust adhesion preventing effect are thus obtained.

The compounds capable of forming a compound having one silanol group in a molecule by a reaction with moisture, which is one of the components of the invention, are not particularly restricted. Such compounds which may be suitably used are N,O-bis (trimethylsilyl) acetamide, N-(trimethylsilyl)acetamide, bis(trimethylsilyl)trifluoroacetamide, N-methyl-N-trimethylsilyltrifluoroacetamide, bis(trimethylsilyl)urea, N-(t-butyldimethylsilyl)N-methyltrifluoroacetamide, (N,N-dimethylamino)trimethylsilane, (N,N-diethylamino)trimethylsilane, hexamethyldisilazane, 1,1,3,3-tetramethyldisilazane, N-(trimethylsilyl)imidazole, trimethylsilyltrifluoromethanesulfonate, trimethylsilylphenoxide, trimethylsilylated product of n-octanol, trimethylsilylated product of 2-ethylhexanol, tris(trimethylsilyl)ated product of glycerin, tris(trimethylsilyl)ated product of trimethylolpropane, tris(trimethylsilyl)ated product of pentaerythritol, tetra(trimethylsilyl)ated product of pentaerythritol, (CH₃)₃SiNHSi(CH₃)₃, (CH₃)₃SiNSi(CH₃)₂, allyloxytrimethylsilane, N,O-bis(trimethylsilyl)acetamide, N-(trimethylsilyl)acetamide, bis(trimethylsilyl)trifluoroacetamide, N-methyl-N-trimethylsilyltrifluoroacetamide, bis(trimethylsilyl)urea, N-(t-butyldimethylsilyl)N-methyltrifluoroacetamide, (N,N-dimethylamino)trimethylsilane,
(N,N-diethylamino)trimethylsilane, hexamethyldisilazane, 1,1,3,3-tetramethyldisilazane, N-(trimethylsilyl)imidazole, trimethylsilyltrifluoromethanesulfonate, trimethylsilylphenoxide, trimethylsilylated product of n-octanol, trimethylsilylated product of 2-ethylhexanol, tris(trimethylsilyl)ated product of glycerin, tris(trimethylsilyl)ated product of trimethylolpropane, tris(trimethylsilyl)ated product of pentaerythritol, tetra(trimethylsilyl)ated product of pentaerythritol, (CH₃)₃SiNHSi(CH₃)₃, (CH₃)₃SiNSi(CH₃)₂. Among them, (CH₃)₃SiNHSi(CH₃)₃ is particularly preferred in view of an amount of contained silanol group in a hydrolysis product.

Furthermore, compounds capable of forming a compound having one silanol group in a molecule by a reaction with moisture, which is one of the components of the invention, are not particularly restricted, but the compounds represented by the following general formula 46 are preferred in addition to the above compounds:

((R⁵⁸)₃SiO)ₙR⁵⁹ (46)

(wherein R⁵⁸ is as defined above; n represents a positive number; and R⁵⁹ represents a group exclusive of a part of or all of the active hydrogen from an active hydrogen-containing compound).

R⁵⁸ is preferably methyl, ethyl, vinyl, t-butyl, or phenyl group, and more preferably methyl group.

(R⁵⁸)₃SiO group is preferably trimethylsilyl group in which all three R⁵⁸s are methyl group, and n is preferably 1 to 5.

Active hydrogen-containing compounds, which are origins of the above R⁵⁹, are not particularly restricted, but includes, among others, alcohols such as methanol, ethanol, n-butanol, i-butanol, t-butanol, n-octanol, 2-ethylhexanol, benzyl alcohol, ethylene glycol, diethylene glycol, polyethylene glycol, propylene glycol, dipropylene glycol, polypropylene glycol, propanediol, tetramethylene glycol, polytetramethylene glycol, glycerin, trimethylolpropane and pentaerythritol; phenols such as phenol, cresol, bisphenol A and hydroquinone; carboxylic acids such as formic acid, acetic acid, propionic acid, lauric acid, palmitic acid, stearic acid, behenic acid, acrylic acid, methacrylic acid, oleic acid, linolic acid, linolenic acid, sorbic acid, oxalic acid, malonic acid, succinic acid, adipic acid, maleic acid, benzoic acid, phthalic acid, terephthalic acid and trimellitic acid; ammonia; amines such as methylamine, dimethylamine, ethylamine, diethylamine, n-butylamine and imidazole; acid amides such as acetamide and benzamide; ureas such as urea and N,N'-diphenylurea; and ketones such as acetone, acetylketone and 2,4-heptadione.

Although it is not particularly limited, a compound capable of forming a compound having one silanol group in a molecule by a reaction with moisture, represented by the above general formula 46, is obtainable by, for example, subjecting the above-mentioned active hydrogen-containing compound to the reaction with the compound having a group capable of reacting with the active hydrogen, such as halogen group, together with a (R⁵⁸)₃Si group, which is sometimes referred to as "silylating agent", such as trimethylsilyl chloride or dimethyl(t-butyl)chloride. In the above description, R⁵⁸ is the same one as defined above.

The compounds represented by the general formula 46 includes allyloxytrimethylsilane, N,O-bis(trimethylsilyl)acetamide, N-(trimethylsilyl)acetamide, bis(trimethylsilyl)trifluoroacetamide, N-methyl-N-trimethylsilyltrifluoroacetamide, bis(trimethylsilyl)urea, N-(t-butyldimethylsilyl)N-methyltrifluoroacetamide, (N,N-dimethylamino)trimethylsilane, (N,N-diethylamino)trimethylsilane, hexamethyldisilazane, 1,1,3,3,-tetramethyldisilazane, N-(trimethylsilyl)imidazole, trimethylsilyltrifluoromethanesulfonate, trimethylsilylphenoxide, trimethylsilylated product of n-octanol, trimethylsilylated product of 2-ethylhexanol, tris(trimethylsilyl)ated product of glycerin, tris(trimethylsilyl)ated product of trimethylolpropane, tris(trimethylsilyl)ated product of pentaerythritol, tetra(trimethylsilyl)ated product of pentaerythritol, trimethylsilylated product of polypropyleneglycol, trimethylsilylated product of polypropylenetriol **as a** trimethylsilylated product of polyether polyol, trimethylsilylated product of polypropylenetetraol, trimethylsilylated product of acrylpolyol. These may be used singly or in combination of two or more.

Additionally, the compounds which may be represented by the general formula ((R⁶⁰)₃SiO)(R⁶¹O)ₛ)ₜZ, CH₃O(CH₂CH(CH₃)O)₅Si(CH₃)₃, CH₂=CHCH₂(CH₂CH(CH₃)O)₅Si(CH₃)₃, (CH₃)₃SiO(CH₂CH(CH₃)O)₅Si(CH₃)₃, and (CH₃)₃SiO(CH₂CH(CH₃)O)₇Si(CH₃)₃
(wherein R⁶⁰ represents the same or different kind of substituted or unsubstituted univalent hydrocarbon group; R⁶¹ is an bivalent hydrocarbon group containing 1 to 8 carbon atoms; s and t are positive numbers, s is 1 to 6 and s times t is not less than 5; and Z is an mono- to hexa-valent organic group), are also suitably used. These may be used singly or in combination of two or more.

Among the compounds capable of forming a compound having one silanol group in a molecule by a reaction with moisture, the active hydrogen compounds which is formed after hydrolysis are preferably phenols, acid amides and alcohols since there are no adverse affects on storage stability **or** weatherability . More preferred are phenols and alcohols, in which the active hydrogen compound is a hydroxyl group.

Among the above compounds, preferred are N,O-bis(tri-methylsilyl)acetamide, N-(trimethylsilyl)acetamide, trimethylsilylphenoxide, trimethylsilylated product of n-octanol, trimethylsilylated product of 2-ethylhexanol, tris(trimethylsilyl)ated product of trimethylolpropane, tris(trimethylsilyl)ated product of pentaerythritol **and** tetra(trimethylsilyl)ated product of pentaerythritol.

The compounds capable of forming a compound having one silanol group in a molecule by a reaction with moisture produces the compound having one silanol group in a molecule by reacting with moisture during storage, at the time of curing, or after curing. It is presumed that flexibility of a cured product is given by a reaction of the thus-formed compound having one silanol group in a molecule with a crosslinkable silyl group of the vinyl polymer or a siloxane bond formed by crosslinking, to thereby reduce crosslinking points.

The structure of the silanol-containing compound can be selected in accordance with the type of Y and the number for a of the vinyl polymer of the invention and the curability and the mechanical strength etc. of the invention can be controlled in accordance with the purposes and uses.

The silanol-containing compound may be used in combination with an air oxidation-curable substance, which will be described later, and combination use is preferable to keep the modulus of the cured product low and to improve the curability of the alkyd paint applied to the surface and dust adhesion preventing property.

The addition level of the silanol-containing compound can be properly adjusted depending on the expected physical properties. The addition level of the silanol-containing compound is 0.1 to 50 parts by weight, preferably 0. 3 to 20 parts by weight and more preferably 0.5 to 10 parts by weight per 100 parts by weight of the crosslinkable silyl group-containing polymer. When the level is below 0.1 parts by weight, the effects caused by addition may not appear, and on the contrary, when it exceeds 50 parts by weight, crosslinking may be insufficient and strength or gel fraction ratio of the cured product are excessively deteriorated.

The time to add the silanol compound is not particularly restricted, but it may be added in the production process of the polymer, or may be added in the preparation process of a curable composition.

### <Thixotropic agent (antisagging agent)>

If necessary, a thixotropic agent (antisagging agent) may be added to the curable composition of the invention to prevent sagging and improve the workability, as long as the transparency of the present invention does not deteriorate.

The thixotropic agent (antisagging agent) may also be called as a thixotropy-providing agent. The term "providing thixotropy" means supplying something with fluidity when a strong power is applied at the time being extruded in bead-like state from a cartridge, being applied by a spatula etc., or being sprayed by a spray etc. and supplying something with the property of not dripping during the curing after coating or application.

The thixotropic agent (antisagging agent) is not particularly limited but includes, for example, amide waxes such as DISPARON (manufactured by Kusumoto Chemicals, Ltd.), hydrogenated castor oil, hydrogenated castor oil derivatives, fatty acid derivatives, metal soaps such as calcium stearate, aluminum stearate and barium stearate, organic compounds such as 1,3,5-tris(trialkoxysilylalkyl)isocyanurate, and inorganic compounds such as calcium carbonate, micronized silica and carbon black which are surface-treated with fatty acids or resin acids.

The micronized silica means a natural or artificial inorganic filler containing silicon dioxide as a main component. In particular, examples include kaolin, clay, activated kaolin, silica sand, silicic stone, china clay, aluminum silicate anhydride, hydrous magnesium silicate, talc, pearlite, white carbon, mica fine flour, bentonite **and** organic bentonite.

Especially, ultrafine granular silica anhydride and organic bentonite obtained by vapor phase reaction of a silicon-containing volatile compound are preferable. They preferably have a specific surface area of at least 50 m²/g, more preferably 50 to 400 m²/g. Both of a hydrophilic silica and a hydrophobic silica may be used. The surface treatment may or may not be carried out, however preferred is a hydrophobic silica obtained by a hydrophobic surface treatment with silazanes, chlorosilanes, alkoxysialnes or polysiloxanes which contain, as an organic substituent bonded to a silicon atom, only a methyl group.

Specific examples of the above-mentioned surface treatment agents are silazanes such as hexamethyldisilazane; halo silanes such as trimethylchlorosilane, dimethyldichlorosilane and methyltrichlorosilane; alkoxysilanes such as trimethylalkoxysilane, dimethyldialkoxysilane and methytrialkoxysilane (herein, an alkoxy group may include a methoxy, ethoxy, propoxy **or** butoxy groups); siloxanes such as cyclic and linear polydimethylsiloxane; and they may be used alone or two or more of them may be used in combination. Among them, a micronized hydrophobic silica surface-treated with siloxanes (dimethylsilicone oil) is preferable in terms of the thixotropy-providing effect.

Further, in the case where the micronized silica is used in combination with polyether compounds such as diethylene glycol, triethylene glycol and polyethylene glycol, reaction products of a polyether compound with a functional silane, and nonionic surfactants having an ethylene oxide chain, the thixotropy is increased. One or more kinds of nonionic surfactants may be used.

Specific examples of the micronized silica may be commercialized products such as Aerosil R974, R972, R972V, R972CF, R805, R812, R812S, RY200, RX200, RY200S, #130, #200, #300, and R202 manufactured by Nippon Aerosil Co., Ltd.; Nipsil SS series manufactured by Nippon Silica Industrial; Rheorosil MT-10, MT-30, QS-102, and QS-108 manufactured by Tokuyama Soda Co., Ltd., Cabosil TS-720, MS-5, and MS-7 manufactured by Cabot Corporation, and S-BEN and ORGANITE manufactured by HOJUN Co., Ltd.

Organic bentonite means powder-like substances mainly obtained from montmorillonite mineral finely milled and then surface-treated with various organic substances. Examples of the organic substances are aliphatic primary amines and aliphatic quaternary amines (each of them is preferred to have 20 or less carbon atoms). Specific examples of the organic bentonite are Orben D and New D Orben manufactured by Shiraishi Kogyo Kaisha, Ltd., Hardsil manufactured Tsuchiya Kaolin Co., Clay #30 manufactured by Burgess Pigment Company, #33 manufactured by Southern Clay Products, Inc., **and** Bentone 34 (dimethyloctadecylammonium bentonite) manufactured by National Lead Company.

The thixotropy index means the ratio of the apparent viscosity at a low rotation rate (e.g. 0.5 to 12 rpm) and a high rotation rate (e.g. 2.5 to 60 rpm) in viscosity measurement by a rotation viscometer (herein, the ratio of the high rotation rate and low rotation rate is preferably at least 5 and more preferably 5 to 10.

These thixotropic agents (antisagging agents) may be used alone or two or more of them may be used in combination.

### <Photocurable substance>

To the curable composition of the invention, there may be added a photocurable substance, according to need. The photocurable substance is a substance whose molecular structure undergoes a chemical change in a short time under the action of light and which thus causes changes of physical properties such as curing. By adding such photocurable substance, it becomes possible to reduce the tackiness (residual tack) of the cured product surface after curing of the curable composition. This photocurable substance is a substance capable of curing upon irradiation with light. A typical photocurable substance is a substance capable of curing when allowed to stand at an indoor place in the sun (near a window) at room temperature for 1 day, for example. A large number of compounds of this type are known, including organic monomers, oligomers, resins, and compositions containing them, and they are not particularly restricted in kind but include, for example, unsaturated acrylic compounds, vinyl cinnamate polymers, azidated resins, epoxy compounds, **and** vinylether compounds .

As the unsaturated acrylic compounds, there may be specifically mentioned, for example, (meth)acrylate esters of low-molecular-weight alcohols (oligoester acrylate) such as ethylene glycol, glycerol, trimethylolpropane, pentaerythritol and neopentyl alcohol; (meth)acrylate esters of alcohols derived from acids such as bisphenol A, acids such as isocyanuric acid or such low-molecular-weight alcohols as mentioned above by modification with ethylene oxide and/or propylene oxide; (meth)acrylate esters of hydroxyl-terminated polyether polyols whose main chain is a polyether, polymer polyols obtained by radical polymerization of a vinyl monomer(s) in a polyol whose main chain is a polyether, hydroxyl-terminated polyester polyols whose main chain is a polyester, polyols whose main chain is a vinyl or (meth) acrylic polymer and which have hydroxyl groups in the main chain; (meth) acrylate esters whose main chain is a vinyl or (meth)acrylic polymer and which is obtained by copolymerization of a polyfunctional acrylate (s) into the main chain thereof; epoxy acrylate oligomers obtained by reacting a bisphenol A-based, novolak type or other epoxy resin with (meth)acrylic acid; urethane acrylate type oligomers containing urethane bonds and (meth)acryl groups within the molecular chain as obtained by reacting a polyol, a polyisocyanate and a hydroxyl group-containing (meth) acrylate.

The vinyl cinnamate polymers are photosensitive resins whose cinnamoyl groups function as photosensitive groups and include cinnamic acid-esterified polyvinyl alcohol species and various other polyvinyl cinnamate derivatives.

The azidated resins are known as photosensitive resins with the azido group serving as a photosensitive group and generally include photosensitive rubber solutions with an azide compound added as a photosensitive substance and, further, detailed examples are found in "Kankosei Jushi (Photosensitive Resins) " (published March 17, 1972 by Insatsu Gakkai Shuppanbu, pages 93 ff, 106 ff, 117 ff). These can be used either singly or in admixture, with a sensitizer added, if necessary.

The epoxy compounds and vinyl ether compounds may be, for example, polyisobutyrenes terminated with epoxy group and vinyl ether group, respectively.

Among the photocurable substances mentioned above, unsaturated acrylic compounds are preferred in view of their easy handleability.

The photocurable substance is preferably added in an amount of 0.01 to 20 parts by weight per 100 parts by weight of the crosslinkable silyl group-containing polymer. At addition levels below 0.01 part by weight, the effects will be insignificant and, at levels exceeding 20 parts by weight, the physical properties may be adversely affected. The addition of a sensitizer such as a ketone or nitro compound or a promoter such as an amine can enhance the effects in some instances.

### <Air oxidation-curable substance>

In the curable composition of the invention, there may be incorporated an air oxidation-curable substance, if necessary. The air oxidation-curable substance is a compound containing an unsaturated group capable of being crosslinked for curing by oxygen in the air. By adding such air oxidation-curable substance, it becomes possible to reduce the tack (also referred as residual tack) of the cured product surface on the occasion of curing of the curable composition. The air oxidation-curable substance according to the present invention is a substance capable of curing upon contacting with air and, more specifically, has a property such that it cures as a result of reaction with oxygen in the air. A typical air oxidation-curable substance can be cured upon allowing it to stand in the air in a room for 1 day, for example.

As specific examples of the air oxidation-curable substance, there may be mentioned, for example, drying oils such as tung oil and linseed oil; various alkyd resins obtained by modification of such drying oils; drying oil-modified acrylic polymers, epoxy resins, silicone resins, urethane resins; 1,2-polybutadiene, 1,4-polybutadiene, C5-C8 diene polymers and copolymers and, further, various modifications of such polymers and copolymers (e.g. maleinated modifications, boiled oil modifications). Among these, tung oil, liquid ones among the diene polymers (liquid diene polymers) and modifications thereof are particularly preferred.

As specific examples of the liquid diene polymers, there may be mentioned, for example, liquid polymers obtained by polymerization or copolymerization of diene compounds such as butadiene, chloroprene, isoprene and 1,3-pentadiene, NBR, SBR polymers obtained by copolymerization of such diene compounds (as main components) with a monomer copolymerizable therewith, such as acrylonitrile or styrene, and, further, various modification thereof (e.g. maleinated modifications, boiled oil modifications) . These may be used singly or two or more of them may be used in combination. Among these liquid diene compounds, liquid polybutadiene species are preferred.

The air oxidation-curable substances may be used singly or two or more of them may be used in combination. The use of a catalyst capable of promoting the oxidation curing or a metal drier in combination with the air oxidation-curable substance can enhance the effects in certain instances. As such catalysts or metal driers, there may be mentioned, for example, metal salts such as cobalt naphthenate, lead naphthenate, zirconium naphthenate, cobalt octylate and zirconium octylate, **and** amine compounds.

The air oxidation-curable substance may be used in combination with the above-mentioned photocurable substances and further with the above-mentioned silanol-containing compound. The combination use of these two components or three components provides further effect and it is particularly preferable since the combination use remarkably causes, in some cases, the stain-preventing effect in the case of exposure for a long duration and even in the area where pollution with dust and micropowder-like sand is severe.

The air oxidation-curable substance is preferably added in an amount of 0. 01 to 20 parts by weight per 100 parts by weight of the crosslinkable silyl group-containing polymer. At levels below 0.01 part by weight, the effects will be insignificant and, at levels exceeding 20 parts by weight, the physical properties may be adversely affected.

### <Antioxidant>

In the curable composition of the invention, there may be incorporated an antioxidant, if necessary. Various antioxidants are known and mention may be made of various species described, for example, in "Sankaboshizai Handbook (Handbook of Antioxidants)" published by Taiseisha LTD. and "Kobunshi Zairyo no Rekka to Anteika (Degradation and Stabilization of Polymer Materials)" (pp. 235-242) published by CMC Chemical Publishing CO., LTD. The antioxidants which can be used are not limited to these, however. There may be mentioned, for example, thioethers such as MARK PEP-36 and MARK AO-23 (both being products of Asahi Denka Co., Ltd.), phosphorus-containing antioxidants such as IRGAFOS 38, IRGAFOS 168 and IRGAFOS P-EPQ (the three being products of Ciba Specialty Chemicals). For example, such hindered phenol compounds as enumerated below are preferred.

As specific examples of the hindered phenol compounds, the following can be mentioned.

2,6-Di-tert-butyl-4-methylphenol, 2,6-di-tert-butyl-4-ethylphenol, mono(or di or tri)(α-methylbenzyl) phenol, 2,2'-methylenebis(4-ethyl-6-tert-butylphenol), 2,2'-methylenebis(4-methyl-6-tert-butylphenol), 4,4'-butylidenebis(3-methyl-6-tert-butylphenol), 4,4'-thiobis(3-methyl-6-tert-butylphenol), 2,5-di-tert-butylhydroquinone, 2,5-di-tert-amylhydroquinone, triethylene glycol bis[3-(3-tert-butyl-5-methyl-4-hydroxyphenyl)propionate], 1,6-hexanediol bis[3-(3,5-di-tert-butyl-4-hydroxyphenyl)propionate], 2,4-bis(n-octylthio)-6-(4-hydroxy-3,5-di-tert-butylanilino) -1,3,5-triazine, pentaerythrityl tetrakis[3-(3,5-di-tert-butyl-4-hydroxyphenyl)propionate], 2,2-thiodiethylenebis[3-(3,5-di-tert-butyl-4-hydroxyphenyl) propionate], octadecyl-3-(3,5-di-tert-butyl-4-hydroxyphenyl)propionate, N,N'-hexamethylenebis (3,5-di-tert-butyl-4-hydroxyhydrocinnamide), diethyl 3,5-di-tert-butyl-4-hydroxybenzylphosphonate, 1,3,5-trimethyl-2,4,6-tris (3,5-di-tert-butyl-4-hydroxybenzyl)benzene, bis(ethyl 3,5-di-tert-butyl-4-hydroxybenzylphosphonato)calcium, tris(3,5-di-tert-butyl-4-hydroxybenzyl)isocyanurate, 2,4-2,4-bis[(octylthio)methyl]-o-cresol, N,N'-bis[3-(3,5-di-tert-butyl-4-hydroxyphenyl)propionyl] hydrazine, tris(2,4-di-tert-butylphenyl)phosphite, 2-(5-methyl-2-hydroxyphenyl)benzotriazole, 2-[2-hydroxy-3,5-bis(α,α-dimethylbenzyl)phenyl] -2H-benzotriazole, 2-(3,5-di-tert-butyl-2-hydroxyphenyl)benzotriazole, 2-(3-tert-butyl-5-methyl-2-hydroxyphenyl) -5-chlorobenzotriazole, 2-(3,5-di-tert-butyl-2-hydroxyphenyl)-5-chlorobenzotriazole, 2-(3,5-di-tert-amyl-2-hydroxyphenyl)benzotriazole, 2-(2'-hydroxy-5'-tert-octylphenyl)benzotriazole, methyl 3-[3-tert-butyl-5-(2H-benzotriazol-2-yl)-4-hydroxyphenyl] propionate-polyethylene glycol (molecular weight about 300) condensate, hydroxyphenylbenzotriazole derivatives, bis(1,2,2,6,6-pentamethyl-4-piperidyl) 2-(3,5-di-tert-butyl-4-hydroxybenzyl)-2-n-butylmalonate, 2,4-di-tert-butylphenyl-3,5-di-tert-butyl-4-hydroxybenzoate .

Examples of the relevant product names include, but are not limited to, Nocrac 200, Nocrac M-17, Nocrac SP, Nocrac SP-N, Nocrac NS-5, Nocrac NS-6, Nocrac NS-30, Nocrac 300, Nocrac NS-7 and Nocrac DAH (all being products of Ouchi Shinko Chemical Industrial Co., Ltd.), MARK AO-30, MARK AO-40, MARK AO-50, MARK AO-60, MARK AO-616, MARK AO-635, MARK AO-658, MARK AO-80, MARK AO-15, MARK AO-18, MARK 328 and MARK AO-37 (all being products of Asahi Denka Co., Ltd.), IRGANOX 245, IRGANOX 259, IRGANOX 565, IRGANOX 1010, IRGANOX 1024, IRGANOX 1035, IRGANOX 1076, IRGANOX 1081, IRGANOX 1098, IRGANOX 1222, IRGANOX 1330 and IRGANOX 1425WL (all being products of Ciba Specialty Chemicals), and Sumilizer GM and Sumilizer GA-80 (both being products of Sumitomo Chemical Co., Ltd.).

The antioxidant may be used in combination with the light stabilizer mentioned below, and such combined use enhances the effects thereof and may improve the heat resistance in particular, hence is particularly preferred. Such ready-made mixtures of an antioxidant and a light stabilizer as TINUVIN C353 and TINUVIN B75 (both being products of Ciba Specialty Chemicals) may also be used.

The addition level of the antioxidant is preferably within the range of 0.1 to 10 parts by weight per 100 parts by weight of the crosslinkable silyl group-containing polymer. At levels below 0.1 part by weight, the weather resistance-improving effect is insignificant, while levels exceeding 5 parts by weight make no great difference in effect any longer, hence are economically disadvantageous.

### <Light stabilizer>

In the curable composition of the invention, there may be incorporated a light stabilizer, if necessary. Various light stabilizers are known and mention may be made of various species described, for example, in "Sankaboshizai Handbook (Handbook of Antioxidants)" published by Taiseisha LTD. and "Kobunshi Zairyo no Rekka to Anteika (Degradation and Stabilization of Polymer Materials)" (pp. 235-242) published by CMC Chemical Publishing CO., LTD. The light stabilizers which can be used are not limited to these, however, and ultraviolet absorbers and hindered amine-type light stabilizing compounds are preferred among these light stabilizers. As specific examples, there may be mentioned, for example, benzotriazole compounds such as TINUVIN P, TINUVIN 234, TINUVIN 320, TINUVIN 326, TINUVIN 327, TINUVIN 329 and TINUVIN 213 (all being products of Ciba Specialty Chemicals), triazines such as TINUVIN 1577, benzophenones such as CHIMASSORB 81, benzoate compounds such as TINUVIN 120 (all being products of Ciba Specialty Chemicals).

Additionally, hindered amine compounds are preferred, and such compounds are the following; dimethyl succinate-1-(2-hydroxyethyl)-4-hydroxy-2,2,6,6-tetramethylpiperidine polycondensate, poly[{6-(1,1,3,3-tetramethylbutyl)amino-1,3,5-triazine-2,4-diyl}{(2,2,6,6-tetramethyl-4-piperidyl)imino}], N,N'-bis(3-aminopropyl)ethylenediamine-2,4-bis [N-butyl-N-(1,2,2,6,6-pentamethyl-4-piperidyl)amino]-6-chloro-1,3,5-triazine condensate, bis(2,2,6,6-tetramethyl-4-piperidyl) sebacate, bis(2,2,6,6-tetramethyl-4-piperidinyl)succinate .

Examples of the relevant product names include, but are not limited to, TINUVIN 622LD, TINUVIN 144 and CHIMASSORB 944LD, CHIMASSORB 119FL, Irganofos 168 (all being products of Ciba Specialty Chemicals), MARK LA-52, MARK LA-57, MARK LA-62, MARK LA-67, MARK LA-63, MARK LA-68, MARK LA-82 and MARK LA-87 (all being products of Asahi Denka Co., Ltd.), and Sanol LS-770, Sanol LS-765, Sanol LS-292, Sanol LS-2626, Sanol LS-1114, Sanol LS-744 and Sanol LS-440 (all being products of Sankyo Organic Chemicals Co., Ltd.).

The light stabilizer may be used in combination with the antioxidant mentioned above, and such combined use enhances the effects thereof and may improve the weather resistance in particular, hence is particularly preferred. The combination is not particularly limited and preferably a combination of the above-mentioned hindered phenol-type antioxidant with a benzotriazole-type ultraviolet absorber etc. and a combination of the above-mentioned hindered phenol-type antioxidant with a hindered amine-type light stabilizer compound. Further, a combination of the above-mentioned hindered phenol-type antioxidant with the benzotriazole-type ultraviolet absorber and the hindered amine-type light stabilizer compound is also preferable. Such ready-made mixtures of a light stabilizer and an antioxidant as TINUVIN C353 and TINUVIN B75 (both being products of Ciba Specialty Chemicals) may also be used.

The hindered amine-type light stabilizer may be used in combination with the photocurable substance mentioned above, and such combined use enhances the effects thereof and may improve the weather resistance in particular, hence is particularly preferred. Although the combination is not particularly limited, however a quaternary amine-containing hindered amine-type light stabilizer is preferable since the viscosity increase during storage is slight and the storage stability is excellent.

The addition level of the light stabilizer is preferably within the range of 0.1 to 10 parts by weight per 100 parts by weight of the crosslinkable silyl group-containing polymer. At levels below 0.1 part by weight, the weather resistance-improving effect is insignificant, while levels exceeding 5 parts by weight make no great difference in effect any longer, hence are economically disadvantageous.

### <Compatibility-improving agent>

The curable composition of the invention may contain a compatibility-improving agent. Specific examples of the agent are copolymers of a plurality of vinyl monomers described in Japanese Kokai Publication 2001-329025.

### <Compound having α,β-diol structure or α,γ-diol structure in molecule>

The curable composition of the invention may contain a compound having α,β-diol structure or α,γ-diol structure in molecule. Compounds conventionally known well may be used as the compound having the α,β-diol structure or α,γ-diol structure in molecule. In this specification, the above-mentioned α,β-diol structure means the structure in which mutually neighboring carbon atoms have two hydroxyl groups and the above-mentioned α,γ-diol structure means the structure in which neighboring every another carbon atom have two hydroxyl groups. As represented by glycerin etc., polyols such as triols and tetraols having both or either one of the α,β-diol structure and the α,γ-diol structure are also included.

Examples of the compound having the α,β-diol structure or the α,γ-diol structure in the molecule are not particularly limited and may include diols such as ethylene glycol, propylene glycol, 1,3-propanediol, 1,2-butandiol, 1,3-butanediol, 2,3-butandiol, pinacol, 2,2-dimethyl-1,3-propanediol, and 2-methyl-2-hydoxymethyl-1,3-propanediol; triols such as glycerin, 1,2,6-hexanetriol, 1,1,1-tris(hydroxymethyl)propane, 2,2-bis(hydroxymethyl)butanol; tetra or higher hydric polyols such as pentaerythritol, D-sorbitol, D-mannitol, diglycerin, and polyglycerin; glycerin monocarboxylic acid esters such as glycerin monostearate, glycerin monoisostearate, glycerin monooleate, glycerin monolaurate, glycerin monopalmitate, glycerin monocaprylate, glycerin monoacetate, and glycerin monobehenate; polyglycerin carboxylic acid esters such as diglycerin monostearate, diglycerin monooleate, diglycerin monolaurate, tetraglycerin monostearate, tetraglycerin monooleate, tetraglycerin monolaurate, tetraglycerin distearate, tetraglycerin dioleate, tetraglycerin dilaurate, decaglycerin monostearate, decaglycerin monooleate, decaglycerin monolaurate, decaglycerin distearate, decaglycerin dioleate, and decaglycerin dilaurate; pentaerythritol monocarboxylic acid esters such as pentaerythritol monostearate, pentaerythritol monoisostearate, pentaerythritol monooleate, and pentaerythritol monolaurate; pentaerythritol dicarboxylic acid esters such as pentaerythritol distearate, pentaerythritol dioleate, and pentaerythritol dilaurate; sorbitan monocarboxylic acid esters such as sorbitan monostearate, sorbitan monooleate, sorbitan monolaurate, sorbitan monopalmitate, and sorbitan monobehenate; sorbitan dicarboxylic acid esters such as sorbitan distearate, sorbitan dioleate, sorbitan dilaurate, sorbitan dipalmitate, and sorbitan dibehenate; glycerin monoalkyl ethers such as glycerin monostearyl ether, glycerin monooleyl ether, glycerin monolauryl ether, and glycerin mono-2-ethylhexyl ether; polyglycerin alkyl ethers such as diglycerin monostearyl ether, diglycerin monooleyl ether, diglycerin monolauryl ether, tetraglycerin monostearyl ether, tetraglycerin monooleyl ether, tetraglycerin monolauryl ether, tetraglycerin distearyl ether, tetraglycerin dioleyl ether, tetraglycerin dilauryl ether, decaglycerin monostearyl ether, decaglycerin monooleyl ether, decaglycerin monolauryl ether, decaglycerin distearyl ether, decaglycerin dioleyl ether, and decaglycerin dilauryl ether; pentaerythritol monoalkyl ethers such as pentaerythritol monostearyl ether, pentaerythritol monooleyl ether, and pentaerythritol monolauryl ether; pentaerythritol dialkyl ethers such as pentaerythritol distearyl ether, pentaerythritol dioleyl ether, and pentaerythritol dilauryl ether; sorbitan monoalkyl ethers such as sorbitan monostearyl ether, sorbitan monooleyl ether, and sorbitan monolauryl ether; sorbitan dialkyl ethers such as sorbitan distearyl ether, sorbitan dioleyl ether, and sorbitan dilauryl ether.

Many of the above-mentioned compounds are widely used as emulsifiers, surfactants, dispersants, defoaming agents, anti-clouding agents, solubilizers, thickening agents, and lubricants and easily available.

The above-mentioned compounds may be used alone or two or more of them may be used in combination. The use amount of the compounds is preferably 0.01 to 100 parts by weight per 100 parts by weight of the vinyl polymer (II). If it is lower than 0.01 parts by weight, the aimed effect cannot be caused and if it exceeds 100 parts by weight, it results in occurrence of a problem that the mechanical strength of the cured product becomes insufficient and therefore it is not preferable. The amount is more preferably 0.1 to 20 parts by weight.

### <Other additives>

If necessary, one or more of various additives may be added to the curable composition of the invention for the purpose of adjusting various physical properties of the curable composition or cured products. Such additives include, for example, flame retardants, curability modifiers, metal deactivators, antiozonants, phosphorus-containing peroxide decomposers, lubricants, pigments **and** blowing agents. These various additives may be used singly or two or more of them may be used in combination.

Specific examples of such additives are described, for example in Japanese Kokoku Publication Hei-04-69659, Japanese Kokoku Publication Hei-07-108928, Japanese Kokai Publication Sho-63-254149 and Japanese Kokai Publication Sho-64-22904.

The curable composition of the invention may be used practically without a solvent. In terms of the workability etc., a solvent may be used, however it is desirable to use no solvent from a viewpoint of the adverse effect on the environments.

The curable composition of the invention may be produced as a one package formulation, which is to be cured by the moisture in the air after application, by compounding all the components/ingredients and tightly sealing in a container for storage, or as a two-pack type formulation by separately preparing the vinyl polymer (II) and respective curing agents and curing catalysts, each of which being previously mixed with a filler, a plasticizer, water, respectively, so that such formulations containing each polymer composition may be mixed together prior to use.

In the case of such two-pack type, a colorant or colorants can be added on the occasion of mixing of the two compositions. Thus, in providing sealants matching in color to the given siding boards, for example, a wide assortment of colors become available with limited stocks and thus it becomes easy to cope with the market demand for many colors; this is more favorable for low buildings. At the time where such one-pack type composition is used and applied, water may be added to and, for example, mixed with the composition for curing after the composition is taken out of the container.

By mixing the colorant or colorants, for example a pigment or pigments, with a plasticizer and/or a filler, as the case may be, and using the thus-prepared paste, it becomes possible to facilitate the working process. Furthermore, it is possible to finely adjust the curing rate at the working field by adding a retarder on the occasion of mixing up the two compositions.

### <<Uses>>

Although not being particularly limited, the curable composition of the invention is usable for various uses, for example sealants for construction and industries such as elastic sealants for building and construction, sealants for siding boards, sealants for pair glass, and sealants for vehicles; electric and electronic parts such as sealants for rear faces of solar cells; insulating materials such as insulating coating materials for electric wires and cables; pressure sensitive adhesives, adhesives, elastic adhesives, contact adhesives, adhesives for tiles, reactive hot melt adhesives, painting materials, powdery coating materials, coating materials, foams, seal materials for can covers etc., electric and electronic potting agents, films, gaskets, casting materials, various kinds of molding materials, artificial marble, rustproof and waterproof sealants for end faces (cut sections) of net glass or laminated glass, materials for vibration absorption/vibration suppression/noise reduction/seismic isolation used in an automobile, a vessel, a household electrical appliance, liquid sealants used in automobile parts, electric parts, various kinds of machine parts.

The molded article showing rubber elasticity and obtained from the curable composition of the invention can be used widely and mainly for gaskets and packing. For example, in an automobile filed, it can be used for seal materials for keeping air-tightness, vibration-absorption materials for glass, vibration-absorption materials for vehicle body parts, and especially for window seal gaskets and gaskets for door glass. For chassis parts, it can be used as engine and suspension rubber for vibration absorption/noise reduction, particularly for engine mounting rubber. For engine parts, it can be used for hoses for cooling, fuel supply, exhaust control, sealing materials for engine oil. Further, it can be used for parts of exhaust gas-cleaning apparatus and brake parts. In a household electrical appliance field, it can be used for packing, O-rings, belts. More particularly, it can be used ornaments, water-proof packing, vibration-absorption rubber and anti-insect packing for lighting and illuminating appliances, vibration absorption/noise reduction/air seal materials for cleaners, dripping covers, water-proof packing, heater packing, electrode part packing and safety valve diaphragms for electric water heating apparatus, hoses, water-proof packing and electromagnetic valves for sake-heating apparatus, water-proof packing, water supply tank-packing, water-absorbing valves, water-receiving packing, connection hose, belts, heat-insulating heater-packing, steam outlet-sealants for steam oven microwave and jar-type rice cookers, oil packing, O-rings, drain packing, pressure tubes, air blow-tubes, air suction-/blow-packing, vibration-absorption rubber, oil supply port-packing, oil meter-packing, oil sending-pipes, diaphragm valves, gas tubes for combustion apparatuses, speaker gaskets, speaker edge, turn table sheets, belts, pulleys for acoustic appliances. In a building and construction field, it can be used for gaskets for structures (zipper gaskets), pneumatic-structure roofings, water-proof materials, shaped sealants, vibration-absorption materials, noise-reduction materials, setting blocks, slide member . In a sporting field, it can be used for all-weather paving materials, gymnasium floor materials **as** sport floor applications, shoe bottom materials, bottom inserts golf balls **as** balls for ball games applications. In a field of vibration-absorption rubber, it can be used for vibration-absorption rubber for automobiles, vibration-absorption rubber for railway cars, vibration-absorption rubber for aircrafts **and** fenders . In a marine and civil engineering field, it can be used for construction materials such as rubber expansive joints, journals, water-stopping plates, water-proof sheets, rubber dams, elastic paving materials, vibration-absorption pads, and protectors; for sub-materials for working such as rubber frames, rubber packers, rubber skirts, sponge mats, mortar hoses, and mortar strainers; for auxiliary materials for working such as rubber sheets and air hoses; for safety products such as rubber buoyant and wave-absorbing materials; for environment preservation products such as oil fences, silt fences, anti-pollution materials, marine hoses, dredging hoses, and oil skimmers. Further, it may be used as rubber plates, mats and foam plates.

Especially, the curable composition of the invention is particularly useful for sealing materials and adhesives and particularly useful for uses for which weather resistance and/or heat resistance are required and uses for which transparency is required. Since the curable composition of the invention is excellent in weather resistance and adhesiveness, it can be used for adhesion work for outer wall tiles without work of embedding in jointing. Further, it is useful as an elastic adhesive for adhesion of a material having a considerably different linear expansion coefficient or for a member that receives repetitive displacements by heat cycles, and/or as a coating material for making an under-layer material seen through due to its transparency, and/or as an adhesive for sticking transparent materials such as glass, polycarbonates and polyacrylic resins.

### BEST MODE FOR CARRYING OUT THE INVENTION

Hereinafter, the invention will be described more in detail with reference to practical Examples and Comparative Examples, however the invention should not be limited to the following Examples.

### (Production Example 1)

Under nitrogen atmosphere, CuBr (0.8 kg), acetonitrile (8.9 kg), butyl acrylate (12.5 kg), ethyl acrylate (3.7 kg), octadecyl acrylate (3.8 kg), and diethyl 2,5-dibromoadipate (1.6 kg) were added to a 250 L-reactor and stirred at 70 to 80°C for about 30 minutes. Pentamethyldiethylenetriamine was added in order to start the reaction. Butyl acrylate (50.2 kg), ethyl acrylate (14.6 kg) and octadecyl acrylate (15.2 kg) were continuously supplemented over 2 hours after 30 minutes from the start of the reaction. During the reaction, pentamethyldiethylenetriamine was properly added and the inner temperature was kept at 70 to 90°C. The total amount of the pentamethyldiethylenetriamine consumed by that time was 158.5 g. After 4 hours from the start of the reaction, the reaction system was stirred under heating condition and reduced pressure at 80°C for removing volatile components. Acetonitrile (35.7 kg), 1,7-octadiene (20.1 kg), and pentamethyldiethylenetriamine (316.5 g) were added to the resulting reaction system and continuously stirred for 8 hours. The mixture was stirred under heating condition and reduced pressure at 80°C for removing volatile components.

Toluene was added to the resulting condensed product for dissolving the polymer, followed by addition of china clay as a filtration aid and aluminum silicate and hydrotalcite as adsorbents, and then the resulting system was stirred under heating condition at an inner temperature of 100°C under oxygen-nitrogen mixed gas atmosphere (oxygen concentration 6%). Solid matter in the mixed solution was removed by filtration and the filtrate was stirred under heating condition and reduced pressure at an inner temperature of 100°C for removing volatile components.

Aluminum silicate and hydrotalcite as adsorbents, and a heat deterioration-preventing agent were further added to the condensed product, and the product was successively stirred under heating condition and reduced pressure (average temperature; about 175°C, and degree of reduced pressure; 10 Torr or lower).

Aluminum silicate and hydrotalcite as adsorbents were further added and an antioxidant was also added, and the product was successively stirred under heating condition at an inner temperature of 150°C under oxygen-nitrogen mixed gas atmosphere (oxygen concentration 6%).

Toluene was added to the resulting condensed product for dissolving the polymer, followed by removing of the solid matter in the mixed solution by filtration, and the filtrate was stirred under heating condition and reduced pressure for removing volatile components so as to give an alkenyl group-containing polymer.

The alkenyl group-containing polymer, dimethoxymethylsilane (2.0 mole equivalents per one alkenyl group), methyl orthoformate (1.0 mole equivalent per one alkenyl group), and a platinum catalyst [xylene solution of bis(1,3-divinyl-1,1,3,3-tetramethyldisiloxane)-platinum complex catalyst; hereinafter, referred to as platinum catalyst] (10 mg on the basis of platinum per 1 kg of the polymer) were mixed and stirred under heating condition and nitrogen atmosphere at 100°C. After confirmation of disappearance of the alkenyl group, the reaction mixture was concentrated to give dimethoxysilyl group-terminated poly(n-butyl acrylate/ethyl acrylate/octadecyl acrylate) polymer [1]. The number average molecular weight and the molecular weight distribution of the obtained polymer were about 26, 000 and 1.2, respectively. The average number of silyl groups introduced into one molecule of the polymer was measured by ¹H-NMR analysis to find it was about 1.6.

### (Production Example 2) (not according to the invention)

Under nitrogen atmosphere, CuBr (1.0 kg), acetonitrile (11.6 kg), butyl acrylate (20.1 kg), methyl acrylate (2.1 kg), octadecyl acrylate (3.7 kg), and diethyl 2,5-dibromoadipate (2.2 kg) were added to a 250 L-reactor and stirred at 70 to 80°C for about 30 minutes. Pentamethyldiethylenetriamine was added in order to start the reaction. Butyl acrylate (80.3 kg), methyl acrylate (8.7 kg) and octadecyl acrylate (15.1 kg) were continuously supplemented over 2 hours after 30 minutes from the start of the reaction. During the reaction, pentamethyldiethylenetriamine was properly added and the inner temperature was kept at 70 to 90°C. The total amount of the pentamethyldiethylenetriamine consumed by that time was 209.5 g. After 4 hours from the start of the reaction, the reaction system was stirred under heating condition and reduced pressure at 80°C for removing volatile components. Acetonitrile (34.8 kg), 1,7-octadiene (13.3 kg), and pentamethyldiethylenetriamine (418.8 g) were added to the resulting reaction system and continuously stirred for 8 hours. The mixture was stirred under heating condition and reduced pressure at 80°C for removing volatile components.

Toluene was added to the resulting condensed product for dissolving the polymer, followed by addition of china clay as a filtration aid and aluminum silicate and hydrotalcite as adsorbents, and then the resulting system was stirred under heating condition at an inner temperature of 100°C under oxygen-nitrogen mixed gas atmosphere (oxygen concentration 6%). Solid matter in the mixed solution was removed by filtration and the filtrate was stirred under heating condition and reduced pressure at an inner temperature of 100°C for removing volatile components.

Aluminum silicate and hydrotalcite as adsorbents, and a heat deterioration-preventing agent were further added to the condensed product, and the product was successively stirred under heating condition and reduced pressure (average temperature; about 175°C, and degree of reduced pressure; 10 Torr or lower).

Aluminum silicate and hydrotalcite as adsorbents were further added and an antioxidant was also added, and the product was successively stirred under heating condition at an inner temperature of 150°C under oxygen-nitrogen mixed gas atmosphere (oxygen concentration 6%).

Toluene was added to the resulting condensed product for dissolving the polymer, followed by removing of the solid matter in the mixed solution by filtration, and the filtrate was stirred under heating condition and reduced pressure for removing volatile components so as to give an alkenyl group-containing polymer.

The alkenyl group-containing polymer, dimethoxymethylsilane (2.0 mole equivalents per one alkenyl group), methyl orthoformate (1.0 mole equivalent per one alkenyl group), and a platinum catalyst [xylene solution of bis(1,3-divinyl-1,1,3,3-tetramethyldisiloxane)-platinum complex catalyst; hereinafter, referred to as platinum catalyst] (10 mg on the basis of platinum per 1 kg of the polymer) were mixed and stirred under heating condition and nitrogen atmosphere at 100°C. After confirmation of disappearance of the alkenyl group, the reaction mixture was concentrated to give dimethoxysilyl group-terminated poly(n-butyl acrylate/methyl acrylate/octadecyl acrylate) polymer [2]. The number average molecular weight and the molecular weight distribution of the obtained polymer were about 26, 000 and 1.2, respectively. The average number of silyl groups introduced into one molecule of the polymer was measured by ¹H-NMR analysis to find it was about 1.9.

### (Comparative Production Example 1)

Under nitrogen atmosphere, CuBr (1.09 kg), acetonitrile (11.4 kg), butyl acrylate (26.0 kg), and diethyl 2,5-dibromoadipate (2.28 kg) were added to a 250 L-reactor and stirred at 70 to 80°C for about 30 minutes. Pentamethyldiethylenetriamine was added in order to start the reaction. Butyl acrylate (104 kg) was continuously supplemented over 2 hours after 30 minutes from the start of the reaction. During the reaction, pentamethyldiethylenetriamine was properly added and the inner temperature was kept at 70 to 90°C. The total amount of the pentamethyldiethylenetriamine consumed by that time was 220 g. After 4 hours from the start of the reaction, the reaction system was stirred under heating condition and reduced pressure at 80°C for removing volatile components. Acetonitrile (45.7 kg), 1,7-octadiene (14.0 kg), and pentamethyldiethylenetriamine (439 g) were added to the resulting reaction system and continuously stirred for 8 hours. The mixture was stirred under heating condition and reduced pressure at 80°C for removing volatile components.

Toluene was added to the resulting condensed product for dissolving the polymer, followed by addition of china clay as a filtration aid and aluminum silicate and hydrotalcite as adsorbents, and then the resulting system was stirred under heating condition at an inner temperature of 100°C under oxygen-nitrogen mixed gas atmosphere (oxygen concentration 6%). Solid matter in the mixed solution was removed by filtration and the filtrate was stirred under heating condition and reduced pressure at an inner temperature of 100°C for removing volatile components.

Aluminum silicate and hydrotalcite as adsorbents, and a heat deterioration-preventing agent were further added to the condensed product, and the product was successively stirred under heating condition and reduced pressure (average temperature; about 175°C, and degree of reduced pressure; 10 Torr or lower).

Aluminum silicate and hydrotalcite as adsorbents were further added and an antioxidant was also added, and the product was successively stirred under heating condition at an inner temperature of 150°C under oxygen-nitrogen mixed gas atmosphere (oxygen concentration 6%).

Toluene was added to the resulting condensed product for dissolving the polymer, followed by removing of the solid matter in the mixed solution by filtration, and the filtrate was stirred under heating condition and reduced pressure for removing volatile components so as to give an alkenyl group-containing polymer.

The alkenyl group-containing polymer, dimethoxymethylsilane (2.0 mole equivalents per one alkenyl group), methyl orthoformate (1.0 mole equivalent per one alkenyl group), and a platinum catalyst [xylene solution of bis(1,3-divinyl-1,1,3,3-tetramethyldisiloxane)-platinum complex catalyst; hereinafter, referred to as platinum catalyst] (10 mg on the basis of platinum per 1 kg of the polymer) were mixed and stirred under heating condition and nitrogen atmosphere at 100°C. After confirmation of disappearance of the alkenyl group, the reaction mixture was concentrated to give dimethoxysilyl group-terminated poly(n-butyl acrylate) polymer [3]. The number average molecular weight and the molecular weight distribution of the obtained polymer were about 26, 000 and 1.3, respectively. The average number of silyl groups introduced into one molecule of the polymer was measured by ¹H-NMR analysis to find it was about 1.8.

### (Comparative Production Example 2)

Under nitrogen atmosphere, CuBr (2.80 g), acetonitrile (34.5 g), butyl acrylate (300 g), octadecyl acrylate (84.4 g), and diethyl 2,5-dibromoadipate (5.85 g) were added to a 1 L-reactor and stirred at 70 to 80°C for about 30 minutes. Pentamethyldiethylenetriamine was added in order to start the reaction. During the reaction, pentamethyldiethylenetriamine was properly added and the inner temperature was kept at 70 to 90°C. The total amount of the pentamethyldiethylenetriamine consumed by that time was 0.564 g. After about 3 hours from the start of the reaction, the reaction system was stirred under heating condition and reduced pressure at 80°C for removing volatile components. Acetonitrile (139 g), 1,7-octadiene (35.8g), and pentamethyldiethylenetriamine (1.13g) were added to the resulting reaction system and continuously stirred for 8 hours. The mixture was stirred under heating condition and reduced pressure at 80°C for removing volatile components.

Toluene was added to the resulting condensed product for dissolving the polymer, followed by addition of china clay as a filtration aid and aluminum silicate and hydrotalcite as adsorbents, and then the resulting system was stirred under heating condition at an inner temperature of 100°C under oxygen-nitrogen mixed gas atmosphere (oxygen concentration 6%). Solid matter in the mixed solution was removed by filtration and the filtrate was stirred under heating condition and reduced pressure at an inner temperature of 100°C for removing volatile components.

Aluminum silicate and hydrotalcite as adsorbents, and a heat deterioration-preventing agent were further added to the condensed product, and the product was successively stirred under heating condition and reduced pressure (average temperature; about 175°C, and degree of reduced pressure; 10 Torr or lower).

Aluminum silicate and hydrotalcite as adsorbents were further added and an antioxidant was also added, and the product was successively stirred under heating condition at an inner temperature of 150°C under oxygen-nitrogen mixed gas atmosphere (oxygen concentration 6%).

Toluene was added to the resulting condensed product for dissolving the polymer, followed by removing of the solid matter in the mixed solution by filtration, and the filtrate was stirred under heating condition and reduced pressure for removing volatile components so as to give an alkenyl group-containing polymer.

The alkenyl group-containing polymer, dimethoxymethylsilane (2.0 mole equivalents per one alkenyl group), methyl orthoformate (1.0 mole equivalent per one alkenyl group), and a platinum catalyst [xylene solution of bis(1,3-divinyl-1,1,3,3-tetramethyldisiloxane)-platinum complex catalyst; hereinafter, referred to as platinum catalyst] (10 mg on the basis of platinum per 1 kg of the polymer) were mixed and stirred under heating condition and nitrogen atmosphere at 100°C. After confirmation of disappearance of the alkenyl group, the reaction mixture was concentrated to give dimethoxysilyl group-terminated poly(n-butyl acrylate/octadecyl acrylate) polymer [4]. The number average molecular weight and the molecular weight distribution of the obtained polymer were about 29, 000 and 1.3, respectively. The average number of silyl groups introduced into one molecule of the polymer was measured by 1H-NMR analysis to find it was about 2.2.

### (Examples 1 to 6)

The vinyl polymer [1] or [2] having a crosslinkable silyl group, each of which was obtained in Production Example 1 or 2, and a commercialized polyether polymer having a crosslinkable silyl group and a number average molecular weight of about 19, 000 (SAX 220, manufactured by KANEKA CORPORATION) were mixed at ratios shown in Table 1 and then the mixture was kept still at a room temperature for 1 week followed by observation of the compatibility with the eye. The results are shown in Table 1.
Excellent: good compatibility, Poor: not compatible

### (Comparative Examples 1 to 3)

The procedures were carried out in the same manner as in Examples 1 to 6 except that the polymer [3] obtained in Comparative Production Example 1 was used in lieu of the polymer [1] or [2], each of which was obtained in Production Example 1 or 2, and the compatibility was observed. The results are shown in Table 2.
Excellent: good compatibility, Poor: not compatible

### (Comparative Examples 6 to 8)

The procedures were carried out in the same manner as in Comparative Examples 1 to 3 except that a polyether polymer having a number average molecular weight of about 9,000 (SAT 350, manufactured by KANEKA CORPORATION) was used in lieu of the polyether polymer having a number average molecular weight of about 19, 000 (SAX 220, manufactured by KANEKA CORPORATION), and the compatibility was observed. The results are shown in Table 2.
Excellent: good compatibility, Poor: not compatible

### (Comparative Examples 9 to 11)

The procedures were carried out in the same manner as in Comparative Examples 1 to 3 except that the polymer [4] obtained in Comparative Production Example 2 was used in lieu of the polymer [3] obtained in Comparative Production Example 1, and the compatibility was observed. The result is shown in Table 2.
Excellent: good compatibility, Poor: not compatible

### (Comparative Examples 12 to 14)

The procedures were carried out in the same manner as in Comparative Examples 9 to 11 except that a polyether polymer having a number average molecular weight of about 9,000 (SAT 350, manufactured by KANEKA CORPORATION) was used in lieu of the polyether polymer having a number average molecular weight of about 19, 000 (SAX 220, manufactured by KANEKA CORPORATION), and the compatibility was observed. The results are shown in Table 2.
Excellent: good compatibility, Poor: not compatible

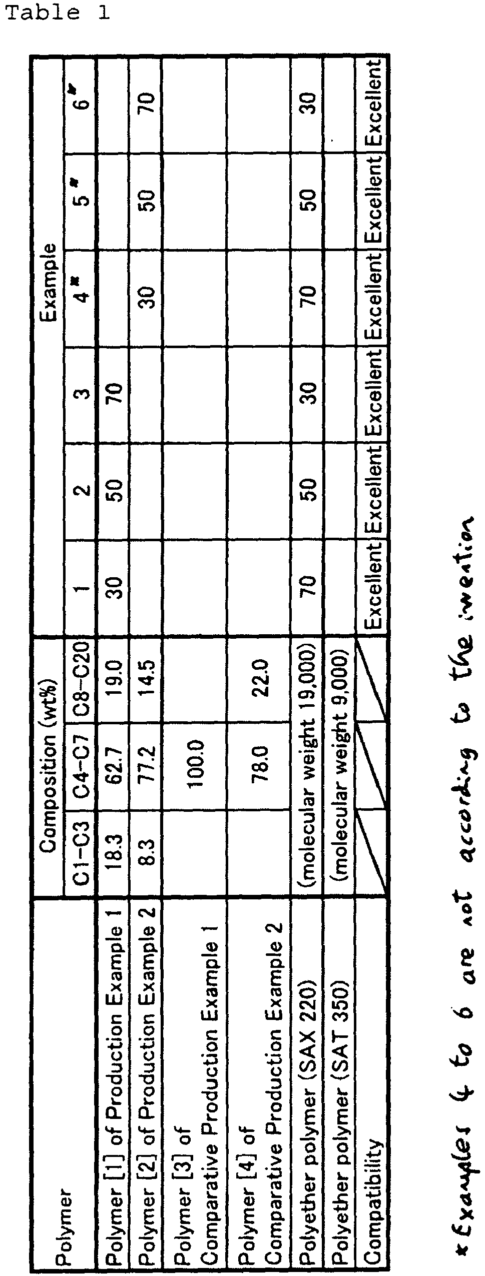

**Table 2**

| Polymer | Comparative Example | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Polymer [1] of Production Example 1 | | | | | | | | | | | | |
| Polymer [2] of Production Example 2 | | | | | | | | | | | | |
| Polymer [3] of Comparative Production Example 1 | 30 | 50 | 70 | 30 | 50 | 70 | | | | | | |
| Polymer [4] of Comparative Production Example 2 | | | | | | | 30 | 50 | 70 | 30 | 50 | 70 |
| Polyether polymer (SAX 220) | 70 | 50 | 30 | | | | 70 | 50 | 30 | | | |
| Polyether polymer (SAT 350) | | | | 70 | 50 | 30 | | | | 70 | 50 | 30 |
| Compatibility | Poor | Poor | Poor | Poor | Poor | Poor | Poor | Poor | Poor | Excellent | Excellent | Excellent |

### (Examples 7 and 8)

The vinyl polymer [1] or [2], each of which was obtained in Production Example 1 or 2, was well mixed with the commercialized polyether polymer having a crosslinkable silyl group and a number average molecular weight of about 19, 000 (SAX 220, manufactured by KANEKA CORPORATION), dibutyltin dimethoxide, and water. The addition amount of the polyether polymer was 100 parts by weight per 100 parts by weight of the polymer [1] or [2], and the addition amount of the tin catalyst or water was 1 part by weight per 100 parts by weight of the mixed polymer.

The composition thus obtained was poured in a mold, degassed in vacuum, and cured by heating at 50°C over 24 hours to give a sheet-like cured product having rubber elasticity.

### (Comparative Examples 4 and 5)

The vinyl polymer [1] or [2], each of which was obtained in Production Example 1 or 2, was well mixed with the commercialized polyether polymer having a crosslinkable silyl group and a number average molecular weight of about 9, 000 (SAT 350, manufactured by KANEKA CORPORATION), dibutyltin dimethoxide, and water. The addition amount of the polyether polymer was 100 parts by weight per 100 parts by weight of the polymer [1] or [2], and the addition amount of the tin catalyst or water was 1 part by weight per 100 parts by weight of the mixed polymer.

The composition thus obtained was poured in a mold, degassed in vacuum, and cured by heating at 50°C over 24 hours to give a sheet-like cured product having rubber elasticity.

### (Evaluation 1) Mechanical properties

3 Type dumbbell form specimens (JIS K 7113) were punched out from the obtained sheet-like cured products and subjected to a tensile property evaluation (using Autograph manufactured by Shimadzu Corporation, measurement temperature: 23°C; pulling speed: 200 mm/sec.). The results of Examples 7 and 8 and Comparative Examples 4 and 5 are shown in Table 3.

**Table 3**

| | Example 7 | Example 8 | Comp. Ex. 4 | Comp. Ex. 5 |
|---|---|---|---|---|
| Tb (MPa) | 0.145 | 0.107 | 0.180 | 0.144 |
| Eb (%) | 195 | 240 | 130 | 137 |

As shown in Comparative Examples 6 to 8, the vinyl polymers obtained without copolymerization of the alkyl acrylate having an alkyl group of 8 to 20 carbon atoms were inferior in compatibility with the polyether polymer. As shown in Comparative Examples 9 to 14, the vinyl polymers obtained by copolymerization of the alkyl acrylate having an alkyl group of 8 to 20 carbon atoms were improved in the compatibility with the polyether polymer but not compatible with the high-molecular-weight polyether polymer.

As shown in Examples 1 to 6, the compatibility of the vinyl polymer with the polyether polymer was further improved by controlling the amount of the alkyl acrylate having an alkyl group of 8 to 20 carbon atoms to be copolymerized in order to obtain a vinyl polymer compatible with the high-molecular-weight polyether polymer.

Further, as shown in Examples 7 and 8 and Comparative Examples 4 and 5, the vinyl polymers thus obtained were evenly mixed with the high-molecular-weight polyether polymer to obtain excellent curable compositions, and cured products obtained therefrom showed excellent elongation.

## Claims

1. A curable composition
which comprises the following two components and no compound having a methyl ester group:
(A) a polyether polymer (I) having at least one crosslinkable functional group and a number average molecular weight determined by gel permeation chromatography of 10,000 or higher, and
(B) a vinyl polymer (II) having at least one crosslinkable functional group at a polymer terminus and compatible with the polyether polymer,
wherein the vinyl polymer (II) is obtained by copolymerization of (b1) an alkyl acrylate having an alkyl group of 2 or 3 carbon atoms, (b2) an alkyl acrylate having an alkyl group of 4 to 7 carbon atoms, and (b3) an alkyl acrylate having an alkyl group of 8 to 20 carbon atoms, and
wherein "compatible" means the state wherein no boundary face is observed by eye after two or more polymers are sufficiently mixed and kept still at room temperature for one week.

2. The curable composition according to Claim 1, wherein the polyether polymer (I) has a number average molecular weight determined by gel permeation chromatography of not lower than 15,000.

3. The curable composition according to Claim 1 or 2, wherein the vinyl polymer (II) contains (b1) the alkyl acrylate having an alkyl group of 2 or 3 carbon atoms in a weight ratio of not lower than 1% and not more than 30% per the total of the vinyl monomers composing the vinyl polymer, (b2) the alkyl acrylate having an alkyl group of 4 to 7 carbon atoms in a weight ratio of not lower than 45% and not more than 95% per the total of the vinyl monomers composing the vinyl polymer, and (b3) the alkyl acrylate having an alkyl group of 8 to 20 carbon atoms in a weight ratio of not lower than 4% and not more than 35% per the total of the vinyl monomers composing the vinyl polymer.

4. The curable composition according to any one of Claims 1 to 3, wherein the weight ratio of (b1) the alkyl acrylate having an alkyl group of 2 or 3 carbon atoms is not lower than 1% and not more than 20% per the total of the vinyl monomers composing the vinyl polymer.

5. The curable composition according to any one of Claims 1 to 4, wherein the weight ratio of (b2) the alkyl acrylate having an alkyl group of 4 to 7 carbon atoms is not lower than 50% and not more than 95% per the total of the vinyl monomers composing the vinyl polymer.

6. The curable composition according to any one of Claims 1 to 4, wherein the weight ratio of (b2) the alkyl acrylate having an alkyl group of 4 to 7 carbon atoms is not lower than 60% and not more than 93% per the total of the vinyl monomers composing the vinyl polymer.

7. The curable composition according to any one of Claims 1 to 4, wherein the weight ratio of (b3) the alkyl acrylate having an alkyl group of 8 to 20 carbon atoms is not lower than 5% and not more than 30% per the total of the vinyl monomers composing the vinyl polymer.

8. The curable composition according to any one of Claims 1 to 4, wherein the weight ratio of (b3) the alkyl acrylate having an alkyl group of 8 to 20 carbon atoms is not lower than 6% and not more than 20% per the total of the vinyl monomers composing the vinyl polymer.

9. The curable composition according to any one of Claims 1 to 8 wherein (b1) the alkyl acrylate having an alkyl group of 2 or 3 carbon atoms is ethyl acrylate.

10. The curable composition according to any one of Claims 1 to 9, wherein (b2) the alkyl acrylate having an alkyl group of 4 to 7 carbon atoms is butyl acrylate.

11. The curable composition according to any one of Claims 1 to 10, wherein (b3) the alkyl acrylate having an alkyl group of 8 to 20 carbon atoms is dodecyl acrylate and/or octadecyl acrylate.

12. The curable composition according to any one of Claims 1 to 11, wherein the vinyl polymer (II) has a number average molecular weight determined by gel permeation chromatography of not lower than 5,000.

13. The curable composition according to any one of Claims 1 to 12, wherein the vinyl polymer (II) has a number average molecular weight determined by gel permeation chromatography of not lower than 10,000.

14. The curable composition according to any one of Claims 1 to 13, wherein the vinyl polymer (II) has a number average molecular weight determined by gel permeation chromatography of not lower than 20,000.

15. The curable composition according to any one of Claims 1 to 14, wherein the vinyl polymer (II) has a ratio of the weight average molecular weight to the number average molecular weight determined by gel permeation chromatography of lower than 1.8.

16. The curable composition according to any one of Claims 1 to 15, wherein the polyether polymer (I) essentially has polypropylene oxide as a main chain.

17. The curable composition according to any one of Claims 1 to 16,
wherein the polyether polymer (I) has a crosslinkable silyl group as the crosslinkable functional group.

18. The curable composition according to any one of Claims 1 to 17, wherein the vinyl polymer (II) is produced by atom transfer radical polymerization.

19. The curable composition according to any one of Claims 1 to 18, wherein the vinyl polymer (II) has a crosslinkable silyl group as the crosslinkable functional group at a terminus.

20. The curable composition according to any one of Claims 1 to 19, wherein the vinyl polymer (II) has an alkenyl group as the crosslinkable functional group at a terminus.

21. The curable composition according to Claim 20, which further contains a hydrosilyl group-containing compound.

22. A formed body, which 21 is obtained by curing the curable composition according to any one of Claims 1 to 21.

## Patentansprüche

1. Härtbare Zusammensetzung,
die die folgenden zwei Komponenten und keine Verbindung, die eine Methylestergruppe aufweist, umfaßt:
(A) ein Polyetherpolymer (I), das wenigstens eine quer vernetzbare funktionelle Gruppe und ein durch Gelpermeationschromatographie bestimmtes Zahlenmittel des Molekulargewichts von 10.000 oder mehr aufweist, und
(B) ein Vinylpolymer (II), das wenigstens eine quer vernetzbare funktionelle Gruppe an einem Polymerterminus aufweist und kompatibel mit dem Polyetherpolymer ist,
wobei das Vinylpolymer (II) durch Copolymerisation von (b1) einem Alkylacrylat mit einer Alkylgruppe von 2 bis 3 Kohlenstoffatomen, (b2) einem Alkylacrylat mit einer Alkylgruppe von 4 bis 7 Kohlenstoffatomen und (b3) einem Alkylacrylat mit einer Alkylgruppe von 8 bis 20 Kohlenstoffatomen erhalten ist, und
wobei "kompatibel" den Zustand meint, in dem mit dem Auge keine Grenzfläche beobachtet werden kann, nachdem zwei oder mehr Polymere ausreichend gemischt und bei Raumtemperatur für eine Woche ruhen gelassen worden sind.

2. Härtbare Zusammensetzung nach Anspruch 1, wobei das Polyetherpolymer (I) ein durch Gelpermeationschromatographie bestimmtes Zahlenmittel des Molekulargewichts von nicht weniger als 15.000 aufweist.

3. Härtbare Zusammensetzung nach Anspruch 1 oder 2, wobei das Vinylpolymer (II) (b1) das Alkylacrylat mit einer Alkylgruppe von 2 oder 3 Kohlenstoffatomen in einem Gewichtsverhältnis von nicht weniger als 1 % und nicht mehr als 30 % pro Summe der Vinylmonomere, die das Vinylpolymer bilden, (b2) das Alkylacrylat mit einer Alkylgruppe von 4 bis 7 Kohlenstoffatomen in einem Gewichtsverhältnis von nicht weniger als 45 % und nicht mehr als 95 % pro Summe der Vinylmonomere, die das Vinylpolymer bilden, und (b3) das Alkylacrylat mit einer Alkylgruppe von 8 bis 20 Kohlenstoffatomen in einem Gewichtsverhältnis von nicht weniger als 4 % und nicht mehr als 35 % pro Summe der Vinylmonomere, die das Vinylpolymer bilden, enthält.

4. Härtbare Zusammensetzung nach einem der Ansprüche 1 bis 3, wobei das Gewichtsverhältnis von (b1) dem Alkylacrylat mit einer Alkylgruppe von 2 bis 3 Kohlenstoffatomen nicht weniger als 1 % und nicht mehr als 20 % pro Summe der Vinylmonomere, die das Vinylpolymer bilden, beträgt.

5. Härtbare Zusammensetzung nach einem der Ansprüche 1 bis 4, wobei das Gewichtsverhältnis von (b2) dem Alkylacrylat mit einer Alkylgruppe von 4 bis 7 Kohlenstoffatomen nicht weniger als 50 % und nicht mehr als 95 % pro Summe der Vinylmonomere, die das Vinylpolymer bilden, beträgt.

6. Härtbare Zusammensetzung nach einem der Ansprüche 1 bis 4, wobei das Gewichtsverhältnis von (b2) dem Alkylacrylat mit einer Alkylgruppe von 4 bis 7 Kohlenstoffatomen nicht weniger als 60 % und nicht mehr als 93 % pro Summe der Vinylmonomere, die das Vinylpolymer bilden, beträgt.

7. Härtbare Zusammensetzung nach einem der Ansprüche 1 bis 4, wobei das Gewichtsverhältnis von (b3) dem Alkylacrylat mit einer Alkylgruppe von 8 bis 20 Kohlenstoffatomen nicht weniger als 5 % und nicht mehr als 30 % pro Summe der Vinylmonomere, die das Vinylpolymer bilden, beträgt.

8. Härtbare Zusammensetzung nach einem der Ansprüche 1 bis 4, wobei das Gewichtsverhältnis von (b3) dem Alkylacrylat mit einer Alkylgruppe von 8 bis 20 Kohlenstoffatomen nicht weniger als 6 % und nicht mehr als 20 % pro Summe der Vinylmonomere, die das Vinylpolymer bilden, beträgt.

9. Härtbare Zusammensetzung nach einem der Ansprüche 1 bis 8, wobei (b1) das Alkylacrylat mit einer Alkylgruppe von 2 bis 3 Kohlenstoffatomen Ethylacrylat ist.

10. Härtbare Zusammensetzung nach einem der Ansprüche 1 bis 9, wobei (b2) das Alkylacrylat mit einer Alkylgruppe von 4 bis 7 Kohlenstoffatomen Butylacrylat ist.

11. Härtbare Zusammensetzung nach einem der Ansprüche 1 bis 10, wobei (b3) das Alkylacrylat mit einer Alkylgruppe von 8 bis 20 Kohlenstoffatomen Dodecylacrylat und/oder Octadecylacrylat ist.

12. Härtbare Zusammensetzung nach einem der Ansprüche 1 bis 11, wobei das Vinylpolymer (II) ein durch Gelpermeationschromatographie bestimmtes Zahlenmittel des Molekulargewichts von nicht weniger als 5.000 aufweist.

13. Härtbare Zusammensetzung nach einem der Ansprüche 1 bis 12, wobei das Vinylpolymer (II) ein durch Gelpermeationschromatographie bestimmtes Zahlenmittel des Molekulargewichts von nicht weniger als 10.000 aufweist.

14. Härtbare Zusammensetzung nach einem der Ansprüche 1 bis 13, wobei das Vinylpolymer (II) ein durch Gelpermeationschromatographie bestimmtes Zahlenmittel des Molekulargewichts von nicht weniger als 20.000 aufweist.

15. Härtbare Zusammensetzung nach einem der Ansprüche 1 bis 14, wobei das Vinylpolymer (II) ein Verhältnis des Massenmittels des Molekulargewichts zum durch Geipermeationschromatographie bestimmten Zahlenmittel des Molekulargewichts von weniger als 1,8 aufweist.

16. Härtbare Zusammensetzung nach einem der Ansprüche 1 bis 15, wobei das Polyetherpolymer (I) im wesentlichen Polypropylenoxid als eine Hauptkette aufweist.

17. Härtbare Zusammensetzung nach einem der Ansprüche 1 bis 16, wobei das Polyetherpolymer (I) eine quer venetzbare Silylgruppe als die quer vernetzbare funktionelle Gruppe aufweist.

18. Härtbare Zusammensetzung nach einem der Ansprüche 1 bis 17, wobei das Vinylpolymer (II) durch Atomtransferradikalpolymerisation hergestellt ist.

19. Härtbare Zusammensetzung nach einem der Ansprüche 1 bis 18, wobei das Vinylpolymer (II) eine quer vernetzbare Silylgruppe als die quer vernetzbare funktionelle Gruppe an einem Terminus aufweist.

20. Härtbare Zusammensetzung nach einem der Ansprüche 1 bis 19, wobei das Vinylpolymer (II) eine Alkenylgruppe als die quer vernetzbare funktionelle Gruppe an einem Terminus aufweist.

21. Härtbare Zusammensetzung nach Anspruch 20, die ferner eine hydrosilylgruppenhaltige Verbindung enthält.

22. Ausgebildeter Körper, der durch Aushärten der härtbaren Zusammensetzung nach einem der Ansprüche 1 bis 21 erhalten ist.

## Revendications

1. Composition durcissable
laquelle comprend les deux constituants suivants et aucun composé présentant un groupe ester méthylique :
(A) un polymère de polyéther (I) présentant au moins un groupe fonctionnel réticulable et une masse moléculaire moyenne en nombre déterminée par chromatographie par perméation sur gel de 10 000 ou supérieure, et
(B) un polymère vinylique (II) présentant au moins un groupe fonctionnel réticulable à une terminaison polymère et compatible avec le polymère de polyéther,
dans laquelle le polymère vinylique (II) est obtenu par copolymérisation de (b1) un acrylate d'alkyle ayant un groupe alkyle de 2 ou 3 atomes de carbone, (b2) un acrylate d'alkyle ayant un groupe alkyle de 4 à 7 atomes de carbone, et (b3) un acrylate d'alkyle ayant un groupe alkyle de 8 à 20 atomes de carbone, et
dans laquelle "compatible" indique l'état dans lequel aucune face de séparation n'est observée à l'oeil après que deux ou plusieurs polymères sont suffisamment mélangés et maintenus à température ambiante pendant une semaine.

2. Composition durcissable selon la revendication 1, dans laquelle le polymère de polyéther (I) présente une masse moléculaire moyenne en nombre déterminée par chromatographie par perméation sur gel qui n'est pas inférieure à 15 000.

3. Composition durcissable selon la revendication 1 ou 2, dans laquelle le polymère vinylique (II) contient (b1) l'acrylate d'alkyle ayant un groupe alkyle de 2 ou 3 atomes de carbone dans un rapport massique qui n'est pas inférieur à 1 % et qui n'est pas supérieur à 30 % pour le total des monomères vinyliques constituant le polymère vinylique, (b2) l'acrylate d'alkyle ayant un groupe alkyle de 4 à 7 atomes de carbone dans un rapport massique qui n'est pas inférieur à 45 % et qui n'est pas supérieur à 95 % pour le total des monomères vinyliques constituant le polymère vinylique, et (b3) l'acrylate d'alkyle ayant un groupe alkyle de 8 à 20 atomes de carbone dans un rapport massique qui n'est pas inférieur à 4 % et qui n'est pas supérieur à 35 % pour le total des monomères vinyliques constituant le polymère vinylique.

4. Composition durcissable selon l'une quelconque des revendications 1 à 3, dans laquelle le rapport massique de (b1) l'acrylate d'alkyle ayant un groupe alkyle de 2 ou 3 atomes de carbone n'est pas inférieur à 1 % et n'est pas supérieur à 20 % pour le total des monomères vinyliques constituant le polymère vinylique.

5. Composition durcissable selon l'une quelconque des revendications 1 à 4, dans laquelle le rapport massique de (b2) l'acrylate d'alkyle ayant un groupe alkyle de 4 à 7 atomes de carbone n'est pas inférieur à 50 % et n'est pas supérieur à 95 % pour le total des monomères vinyliques constituant le polymère vinylique.

6. Composition durcissable selon l'une quelconque des revendications 1 à 4, dans laquelle le rapport massique de (b2) l'acrylate d'alkyle ayant un groupe alkyle de 4 à 7 atomes de carbone n'est pas inférieur à 60 % et n'est pas supérieur à 93 % pour le total des monomères vinyliques constituant le polymère vinylique.

7. Composition durcissable selon l'une quelconque des revendications 1 à 4, dans laquelle le rapport massique de (b3) l'acrylate d'alkyle ayant un groupe alkyle de 8 à 20 atomes de carbone n'est pas inférieur à 5 % et n'est pas supérieur à 30 % pour le total des monomères vinyliques constituant le polymère vinylique.

8. Composition durcissable selon l'une quelconque des revendications 1 à 4, dans laquelle le rapport massique de (b3) l'acrylate d'alkyle ayant un groupe alkyle de 8 à 20 atomes de carbone n'est pas inférieur à 6 % et n'est pas supérieur à 20 % pour le total des monomères vinyliques constituant le polymère vinylique.

9. Composition durcissable selon l'une quelconque des revendications 1 à 8, dans laquelle (b1) l'acrylate d'alkyle ayant un groupe alkyle de 2 ou 3 atomes de carbone est l'acrylate d'éthyle.

10. Composition durcissable selon l'une quelconque des revendications 1 à 9, dans laquelle (b2) l'acrylate d'alkyle ayant un groupe alkyle de 4 à 7 atomes de carbone est l'acrylate de butyle.

11. Composition durcissable selon l'une quelconque des revendications 1 à 10, dans laquelle (b3) l'acrylate d'alkyle ayant un groupe alkyle de 8 à 20 atomes de carbone est l'acrylate de dodécyle et/ou l'acrylate d'octadécyle.

12. Composition durcissable selon l'une quelconque des revendications 1 à 11, dans laquelle le polymère vinylique (II) présente une masse moléculaire moyenne en nombre déterminée par chromatographie par perméation sur gel qui n'est pas inférieure à 5 000.

13. Composition durcissable selon l'une quelconque des revendications 1 à 12, dans laquelle le polymère vinylique (II) présente une masse moléculaire moyenne en nombre déterminée par chromatographie par perméation sur gel qui n'est pas inférieure à 10 000.

14. Composition durcissable selon l'une quelconque des revendications 1 à 13, dans laquelle le polymère vinylique (II) présente une masse moléculaire moyenne en nombre déterminée par chromatographie par perméation sur gel qui n'est pas inférieure à 20 000.

15. Composition durcissable selon l'une quelconque des revendications 1 à 14, dans laquelle le polymère vinylique (II) présente un rapport de la masse moléculaire moyenne en masse à la masse moléculaire moyenne en nombre déterminée par chromatographie par perméation sur gel inférieur à 1,8.

16. Composition durcissable selon l'une quelconque des revendications 1 à 15, dans laquelle le polymère de polyéther (A) présente essentiellement du poly(oxyde de propylène) comme une chaîne principale.

17. Composition durcissable selon l'une quelconque des revendications 1 à 16, dans laquelle le polymère de polyéther (I) présente un groupe silyle réticulable comme le groupe fonctionnel réticulable.

18. Composition durcissable selon l'une quelconque des revendications 1 à 17, dans laquelle le polymère vinylique (II) est produit par polymérisation radicalaire par transfert d'atome.

19. Composition durcissable selon l'une quelconque des revendications 1 à 18, dans laquelle le polymère vinylique (II) présente un groupe silyle réticulable comme le groupe fonctionnel réticulable à une terminaison.

20. Composition durcissable selon l'une quelconque des revendications 1 à 19, dans laquelle le polymère vinylique (II) présente un groupe alcényle comme le groupe fonctionnel réticulable à une terminaison.

21. Composition durcissable selon la revendication 20, laquelle contient de plus un composé contenant un groupe hydrosilyle.

22. Corps façonné, lequel est obtenu par durcissement de la composition durcissable selon l'une quelconque des revendications 1 à 21.
